# EUROPEAN PATENT APPLICATION

(11) **EP 2 688 197 A1**
(43) Date of publication of application: **22.01.2014**
(21) Application number: 12758207.0
(22) Date of filing: 13.03.2012
(51) Int. Cl.: H02P 7/06

(54) **RIPPLE EXTRACTION DEVICE, MOTOR CONTROL APPARATUS, VEHICLE SEAT, AND RIPPLE EXTRACTION METHOD**

(30) Priority: 14.03.2011 JP 2011055142; 15.03.2011 JP 2011056055; 16.03.2011 JP 2011057338; 25.03.2011 JP 2011067057; 25.03.2011 JP 2011067059; 31.03.2011 JP 2011077080; 31.03.2011 JP 2011077087
(71) Applicant: TS Tech Co., Ltd., Asaka-shi, Saitama 351-0012 (JP)
(72) Inventor: TANAKA, Soichiro, Shioya-gun, Tochigi 329-1217 (JP); KOWATA, Kohei, Shioya-gun, Tochigi 329-1217 (JP); ITO, Takayoshi, Shioya-gun, Tochigi 329-1217 (JP); SHIMAZAKI, Hayato, Shioya-gun, Tochigi 329-1217 (JP)
(74) Representative: Potter Clarkson LLP
(86) International application number: PCT/JP2012/056362
(87) International publication number: WO 2012/124674

(57) **Abstract**

A ripple extraction device (3) extracts ripple components contained in a current signal of a motor (2). The ripple extraction device (3) is provided with; a current-voltage converter (10) that converts a current signal of the motor (2) into a voltage signal; a filter (40) that filters the voltage signal converted by the current-voltage converter (10), and attenuates the ripple components; and a differential amplifier (₅0) that obtains the difference between the voltage signal converted by the current-voltage converter (10) and an output signal of the filter (40).

## Description

### TECHNICAL FIELD

The present invention relates to a ripple extraction device, a motor control apparatus, a vehicle seat and a ripple extraction method.

### BACKGROUND ART

In vehicle seats, electronic door mirrors, power windows and the like, moveable units are provided, and the moveable units are driven by motors. In order to accurately control the position and speed of the moveable units by control apparatuses, rotational positions of the motors while they are running need to be detected. Sensors are used to detect the rotational positions of the motors. That is, a sensor (for example, a Hall device, an encoder, a reed switch sensor) is provided in a motor, for example, and a signal which synchronizes with the rotation of the motor which is running is output by the sensor and the output signal of the sensor is input to the control apparatus via the detection circuit (for example, a comparator or an AD converter).

However, using of such sensor causes increase in cost. In view of this, there is suggested a technique to detect the rotational position of a motor by the later-stage circuit of the motor by utilizing the current signal of the motor without using a sensor (for example, see Patent Document 1 and Patent Document 2). While the motor is running, a direct current component, a low-frequency component, high frequency noise and the like are included in a current signal of the motor. Further, ripple components synchronizing with the motor rotation is included. In the techniques disclosed in Patent Document 1 and Patent Document 2, the ripple components are extracted by processing the current signal of the motor by the later-stage circuit. In particular, the direct-current component, the low-frequency component and the high frequency noise in the current signal are removed by a filter in the later-stage circuit and the ripple components pass through the filter. Because the frequency of each component in the current signal of the motor varies due to environmental changes, a switched-capacitor filter by which the cut-off frequency can vary is used for the filter in the later-stage circuit. In particular, the signal which passed through the switched-capacitor filter is fed back to the arithmetic circuit, and the cut-off frequency of the switched-capacitor filter is set by the arithmetic circuit calculating the cut-off frequency from the feedback signal.

In the technique described in Patent Document 1, the ripple components which passed through the switched-capacitor filter are converted into pulses by the ripple-pulse shaping circuit and the number of pulses in the output signal from the ripple-pulse shaping circuit is counted by a counter. The number of pulses counted by the counter corresponds to the rotation amount of the motor and the movement amount of the moveable unit.

The motor does not stop immediately after the current in the motor is cutoff, and the motor rotates for a while after the current in the motor is cutoff. In Patent Document 3, a technique to estimate the number of pulses in the period until the motor stops from the cutoff of the current in the motor is disclosed.

A moveable range is set for a moveable unit, and the moveable unit can move from one end of the moveable range to the other end of the moveable range. Patent Document 4 discloses a technique to stop the motor when the moveable unit, which is driven by the motor, moves to an end of the moveable range.

There may be a case where a pulse in the pulse signal which is output by the switched-capacitor filter, the ripple-pulse shaping circuit or the like is divided and generating more pulses than usual (for example, see Patent Document 5) . Further, there may be a case where a pulse in the pulse signal which is output by the switched-capacitor filter, the ripple-pulse shaping circuit or the like is missing which causes the pulses to be generated in the pulse signal be lesser than usual.

### PRIOR ART DOCUMENT

### PATENT DOCUMENT

Patent Document 1: Japanese Unexamined Patent Application Publication No. 2003-9585
Patent Document 2: Japanese Unexamined Patent Application Publication No. 2008-283762
Patent Document 3: Japanese Unexamined Patent Application Publication No. 2000-250629
Patent Document 4: Japanese Unexamined Patent Application Publication No. 2010-33513
Patent Document 5: Japanese Unexamined Patent Application Publication No. 2003-536355

### SUMMARY OF INVENTION

### PROBLEMS TO BE SOLVED BY THE INVENTION

The switched-capacitor filter is very expensive.

In the conventional technique, because the cut-off frequency of the switched-capacitor filter is set by the feedback control, the setting of the cut-off frequency is delayed if the frequency of each component in the current signal of the motor varies transiently or drastically, and there is a possibility that the ripple components cannot be detected accurately.

In view of the above, the problem to be solved by the present invention is to accurately detect the ripple components included in the current signal of a motor without using a filter of cut-off frequency variable type even if the frequency of each component in the current signal of the motor varies due to environmental changes.

### MEANS FOR SOLVING THE PROBLEM

In order to solve the above problems, a ripple extraction device of the present invention is a ripple extraction device which extracts a ripple component included in a current signal of a motor including a current-voltage converter which converts the current signal of the motor into a voltage signal, a filter which filters the voltage signal converted by the current-voltage converter, and a differential amplifier which obtains a difference between the voltage signal converted by the current-voltage converter and an output signal of the filter.

A ripple extraction method of the present invention is a ripple extraction method for extracting ripples included in a current signal of a motor, including converting the current signal of the motor into a voltage signal, filtering the voltage signal which is converted and obtaining a difference between the voltage signal which is converted and the voltage signal which is filtered.

### EFFECTS OF INVENTION

The difference between the voltage signal of the current-voltage converter and the output signal from the filter is obtained by the differential amplifier, and the difference is the ripple components. Even if the frequency of each component in the current signal of the motor varies due to environmental changes, the ripple components included in the current signal of the motor can be detected with high accuracy because the ripple components are the difference between the voltage signal of the current-voltage converter and the output signal from the filter.

Further, because the ripple components are extracted by using the filter and the differential amplifier, a cut-off frequency variable type filter does not need to be used as the filter. Therefore, cost of the filter can be reduced.

Because the ripple extraction device is not a closed loop circuit like the feedback control circuit, the ripple components can be detected accurately even if the frequency of each component in the current signal of the motor changes transiently or drastically.

### BRIEF DESCRIPTION OF DRAWINGS

[FIG. 1] This is a block diagram showing a motor control apparatus.
[FIG. 2] This is a timing chart showing a waveform of a current signal of a motor.
[FIG. 3] This is a timing chart showing a waveform of a current signal of a motor.
[FIG. 4] This shows waveforms of input signals and output signals of a current-voltage converter, a high-pass filter, a band-pass filter, a filter and differential amplifier, an amplifier, and a waveform shaping unit.
[FIG. 5] This is a graph showing frequency characteristics in a filter.
[FIG. 6] This is a circuit diagram showing a filter and a differential amplifier.
[FIG. 7A] This is a timing chart showing a waveform of a voltage signal at point A in FIG. 6.
[FIG. 7B] This is a timing chart showing a waveform of a voltage signal at point B in FIG. 6.
[FIG. 7C] This is a timing chart showing a waveform of a voltage signal at point C in FIG. 6.
[FIG. 8] This is a side view showing a seat main body of a vehicle seat.
[FIG. 9] This is a graph showing frequency characteristics of a filter.
[FIG. 10] This is a graph showing frequency characteristics of a filter.
[FIG. 11] This is a side view showing a seat main body of a vehicle seat.
[FIG. 12] This is a block diagram showing a motor control apparatus.
[FIG. 13] This is a block diagram showing a motor control apparatus.
[FIG. 14] This is a block diagram showing a motor control apparatus.
[FIG. 15] This is a diagram showing an example of a correction map.
[FIG. 16] This is a diagram showing an example of a correction map.
[FIG. 17] This is a diagram showing an example of a correction map.
[FIG. 18] This is a flowchart showing an activation process of a motor.
[FIG. 19] This is a flowchart showing a detection process of rotation amount and rotational position of a motor.
[FIG. 20] This is a flowchart showing a stopping process of a motor.
[FIG. 21] This is a flowchart showing a correction process of rotation amount and rotational position of a motor.
[FIG. 22] This is a block diagram showing a motor control apparatus.
[FIG. 23] This is a flowchart showing an activation process of a motor.
[FIG. 24] This is a flowchart showing a counting process of the number of pulses.
[FIG. 25] This is a timing chart showing waveforms of a power supply voltage, a current signal and a pulse signal in a case where the power supply voltage of a motor varies.
[FIG. 26] This is a flowchart showing a measuring process of a pulse cycle.
[FIG. 27] This is a flowchart showing a counting process of the number of pulses.
[FIG. 28] This is a flowchart showing a calculation process of an estimate number of pulses.
[FIG. 29] This is a flowchart showing a correction process of the number of pulses.
[FIG. 30] This is a block diagram showing a motor control apparatus.
[FIG. 31] This is a flowchart showing a calculation process of an estimate number of pulses.
[FIG. 32] This is a flowchart showing a correction process of the number of pulses and the stopping position.
[FIG. 33] This is a block diagram showing a motor control apparatus.
[FIG. 34] This is a block diagram showing a motor control apparatus.
[FIG. 35] This is a flowchart showing a measurement process of a pulse cycle.
[FIG. 36] This is a flowchart showing an update process of the set speed of a motor.
[FIG. 37] This is a block diagram showing a motor control apparatus.
[FIG. 38] This is a diagram for explaining a coordinate system expressing the position of a motor and a coordinate system expressing the position of the moveable unit.
[FIG. 39] This is a flowchart showing an activation process of a motor.
[FIG. 40] This is a flowchart showing a stop processing of a motor.
[FIG. 41] This is a block diagram showing a motor control apparatus.
[FIG. 42] This is a timing chart showing a waveform of a pulse signal wherein a pulse is missing.
[FIG. 43] This is a timing chart showing a waveform of a pulse signal wherein a pulse is divided.
[FIG. 44] This is a flowchart showing a process that is carried out every time a pulse cycle in a pulse signal is measured.
[FIG. 45] This is a flowchart showing a process for setting a normal cycle and a normal range.

### DESCRIPTION OF EMBODIMENTS

Hereinafter, embodiments of the present invention will be described with reference to the drawings. Although the following embodiments of the present invention includes various limitations that are technically preferable for carrying out the present invention, the scope of the present invention is not limited to the embodiments and the examples shown in the drawings.

### [First embodiment]

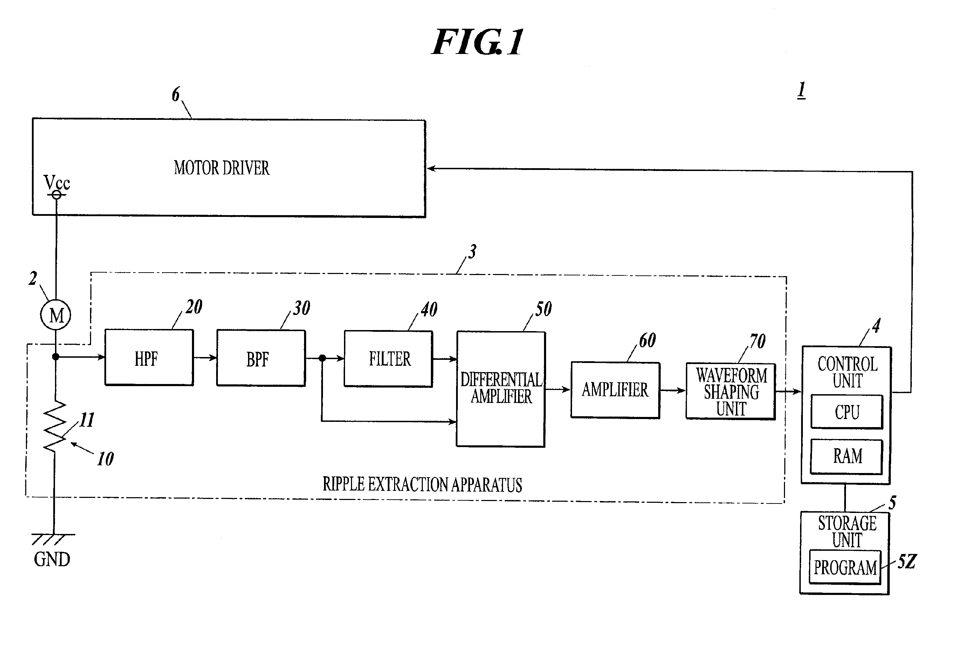

FIG. 1 is a block diagram of the motor control apparatus 1.

The motor control apparatus 1 includes a motor 2, a ripple extraction device (ripple extraction circuit) 3, a control unit 4, a storage unit 5, a motor driver 6 and such like.

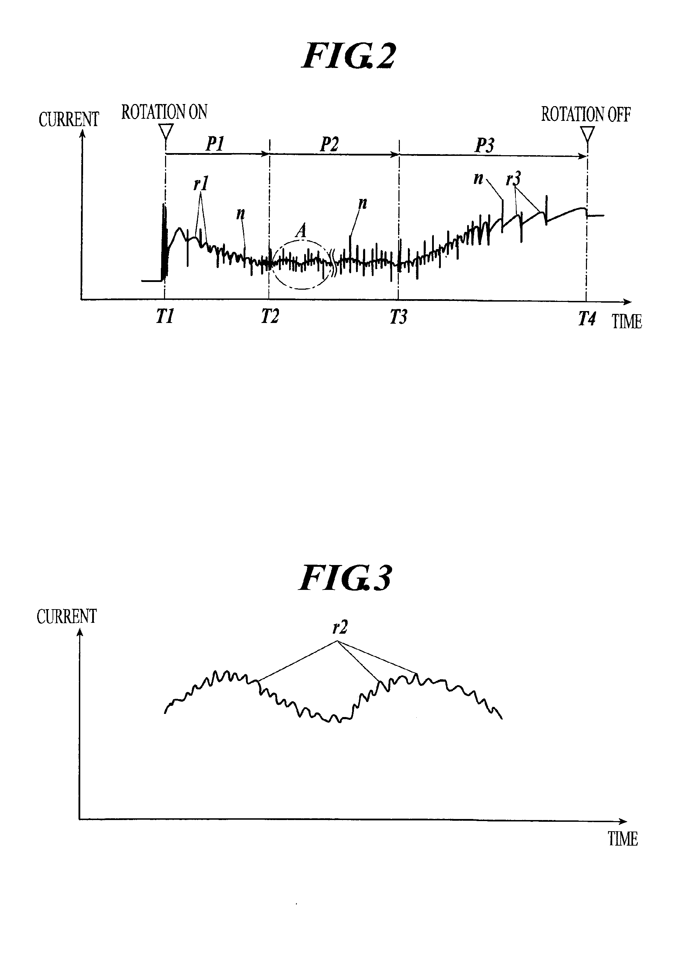

The motor 2 is a direct-current motor. If a current flows in to the motor 2, the motor 2 rotates and generates cyclic ripples in the current. The current signal of the motor 2 will be described with reference to FIGS. 2 and 3. FIG. 2 is a chart showing changes in level of the current that flows in to the motor 2 when the motor 2 is driven. FIG. 3 is a chart showing the time and the current in the A section shown in FIG. 2, the A section being enlarged.

In FIG. 2, the time T1 is the timing when the motor 2 is activated and the time T2 is the timing when the motor 2 starts to run steadily. The time T3 is the timing when the moveable unit which is driven by the motor 2 abuts the stopper or the like and the transmission mechanism which transmits the power of the motor 2 to the moveable unit starts to be restrained. The time T4 is the timing when the motor 2 stops.

As shown in FIGS. 2 and 3, the current signal of the motor 2 includes a direct-current component, a ripple component and one or a plurality of frequency components (alternating-current components). Here, the frequency component and the ripple component are superimposed on the direct-current component. In the current signal of the motor 2, the high frequency component in which the current level changes drastically is noise (for example, see symbols n). In FIG. 3, the high frequency noise component is omitted.

In the period P1 which is from the time T1 to the time T2, the ripple component r1 and the low frequency component with a frequency lower than that of the ripple component r1 are superimposed on the direct-current component. Just after the motor 2 is activated in the period P1, the current level of the lower frequency component is great due to the influence of the inertia force. Thereafter, the current level of the low frequency component gradually decreases as the time passes. Further, just after the motor 2 is activated, the amplitude of the ripple component r1 whose frequency is higher than that of the low frequency component is large. Thereafter, the frequency of the ripple component r1 gradually increases as the time passes and the amplitude of the ripple component r1 gradually decreases as the time passes.

In the period P2 which is between the time T2 and the time T3, the ripple component r2 and the low frequency component whose frequency is lower than the ripple component r2 are superimposed on the direct-current component, and the direct-current component is stable being almost constant, the frequency and the amplitude of the low frequency component are stable and the frequency and the amplitude of the ripple component r2 are stable. The reason why the frequency of the ripple component r2 be higher than the frequency of the low frequency component is because there are differences in the winding resistances of the plurality of coils built in the motor 2.

In the period P3 which is between the time T3 and the time T4, the frequency of the low frequency component in the current signal of the motor becomes low and the current level of the low frequency component gradually increases as the time passes. In the period P3, the frequency of the ripple component r3 in the current signal of the motor gradually decreases as the time passes and the amplitude of the ripple component r3 gradually becomes greater as the time passes.

The frequencies and the amplitudes of the low frequency component and the ripple component in the current signal of the motor 2 are affected by various environmental influences (for example, a load on the motor 2, environmental temperature, the power supply voltage of the motor 2 and such like). Therefore, if there is a change in the environment, the frequencies and the amplitudes of the low frequency component and the ripple component change.

The ripple extraction device 3 extracts the ripple component from the current signal of the motor 2, converts the ripple component into pulses and outputs the pulse signal formed by converting the ripple component into pulses to the control unit 4. The ripple extraction device 3 and the ripple extraction method using the ripple extraction device 3 will be described in detail.

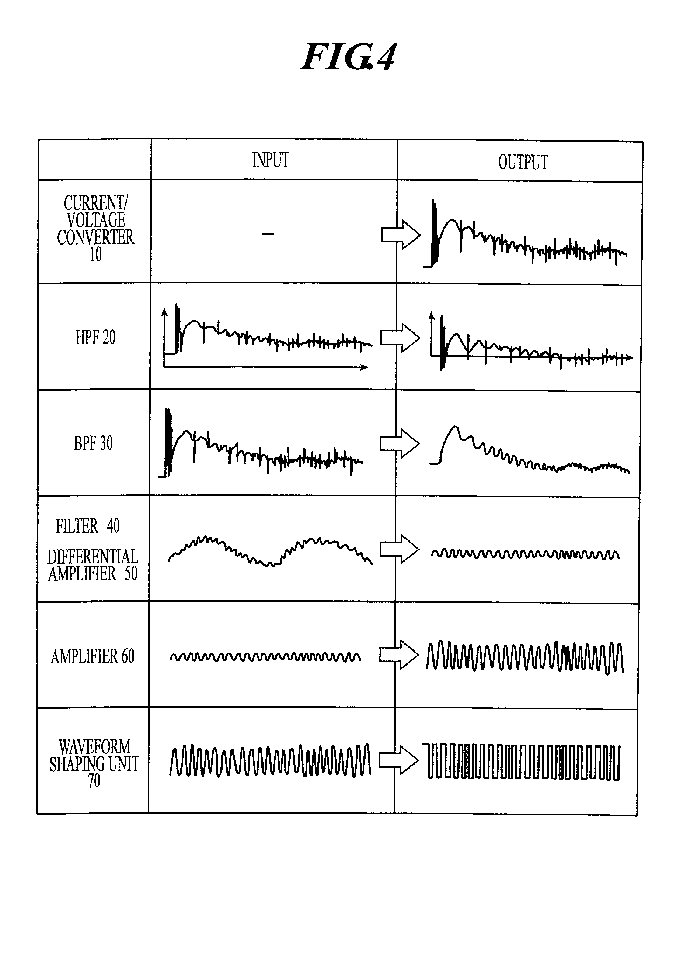

As shown in FIG. 1, the ripple extraction device 3 includes a current-voltage converter 10, a high-pass filter 20, a band-pass filter 30, a filter 40, a differential amplifier 50, an amplifier 60 and a waveform shaping unit 70. FIG. 4 is a diagram for explaining the input signals and the output signals of the current-voltage converter 10, the high-pass filter 20, the band-pass filter 30, the filter 40 and the differential amplifier 50, the amplifier 60, and the waveform shaping unit 70. The input signals and the output signals of the current-voltage converter 10, the high-pass filter 20 and the band-pass filter 30 in FIG. 4 represent the period from the time T1 to the beginning of the period P2 in FIG. 2. The input signals and the output signals of the filter 40 and the difference amplifier 50, the amplifier 60 and the waveform shaping unit 70 represent a part of the period P2 in FIG 2.

In the current-voltage converter 10, a current signal of the motor 2 is input. The current-voltage converter 10 converts the current signal of the motor 2, which is input, into a voltage signal. In particular, the current-voltage converter 10 includes a resistor 11. The resistor 11 is connected between the ground and the motor, and the current signal of the motor 2 is converted into the voltage signal of between the resistor 11 and the motor 2. The current-voltage converter 10 outputs the converted voltage signal to the filter 40 and the differential amplifier 50 via the high-pass filter 20 and the band-pass filter 30. Here, the current-voltage converter 10 may be a current-voltage converter utilizing an operational amplifier (for example, a negative feedback type current-voltage converter).

In the high-pass filter 20, the voltage signal which is converted by the current-voltage converter 10 (the output signal of the current-voltage converter 10) is input. The high-pass filter 20 lets the high frequency component in the voltage signal which is converted by the current-voltage converter 10 (the output signal of the current-voltage converter 10) pass therethrough and attenuates the low frequency component. That is, the high-pass filter 20 removes the direct-current component in the voltage signal which is converted by the current-voltage converter 10. The high-pass filter 20 outputs the signal in which the low frequency component is attenuated to the filter 40 and the differential amplifier 50 via the band-pass filter 30.

The high-pass filter 20 is a high-pass filter utilizing an operational amplifier (for example, a negative feedback type high-pass filter, a positive feedback type high-pass filter) or utilizing a resistor and a capacitor (for example, a CR high-pass filter).

In the band-pass filter 30, the voltage signal which is converted by the current-voltage converter 10 is input via the high-pass filter 20. That is, in the band-pass filter 30, the output signal from the high-pass filter 20 is input. The band-pass filter 30 lets the component of a predetermined frequency band in the voltage signal which is converted by the current-voltage converter 10 (the output signal of the high-pass filter 20) pass therethrough and attenuates the component other than the predetermined frequency band. That is, the band-pass filter 30 removes the high frequency noise component in the voltage signal which is converted by the current-voltage converter 10 (the output signal of the high-pass filter 20) and also removes the low frequency component that could not be removed by the high-pass filter 20. The band-pass filter 30 outputs the signal in which the component other than the predetermined frequency band is attenuated to the filter 40 and the differential amplifier.

The band-pass filter 30 may be a band-pass filter which utilizes an operational amplifier (for example, a multiple negative feedback type band-pass filter, a multiple positive feedback type band-pass filter) or which utilizes a resistor and a capacitor.

In the filter 40, the voltage signal which is converted by the current-voltage converter 10 is input via the high-pass filter 20 and the band-pass filter 30. That is, in the filter 40, the output signal of the band-pass filter 30 is input. The filter 40 filters the signal which is input. The filter 40 outputs the filtered signal to the differential amplifier 50.

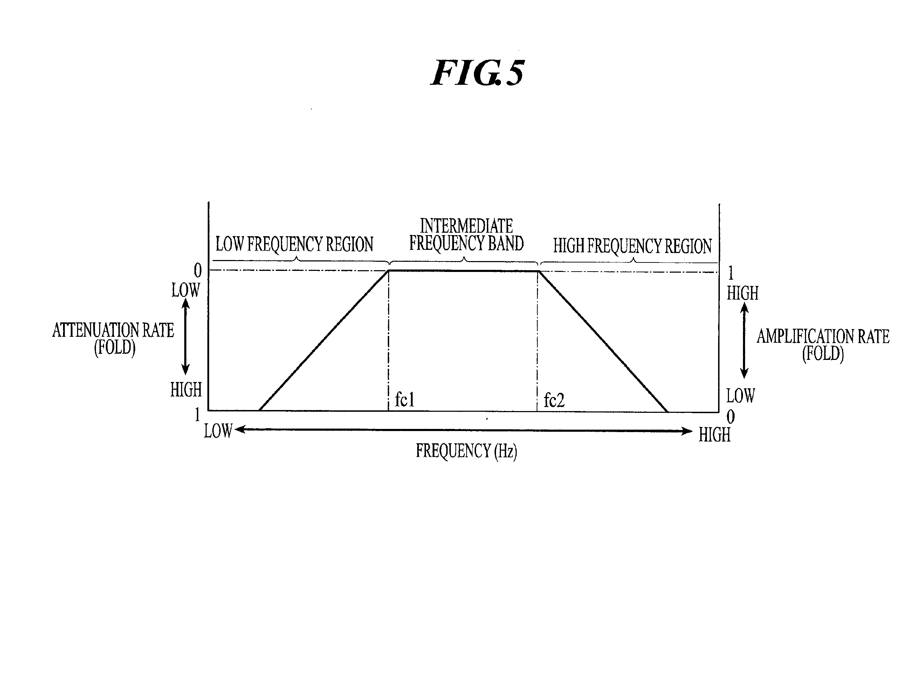

FIG. 5 is a graph showing frequency characteristics in the filter 40.

As shown in FIG. 5, the filter 40 is a band-pass filter. The filter 40 lets the component of intermediate frequency band between the low cut-off frequency fc1 and the high cut-off frequency fc2 in the voltage signal which is converted by the current-voltage converter 10 (the output signal of the band-pass filter 30) pass therethrough. The low cut-off frequency fc1 < the high cut-off frequency fc2. Here, a cut-off frequency is a frequency in which the output power is half of the input power. That is, a cut-off frequency is a frequency whose gain G is -3db.

Further, the filter 40 attenuates the component of low frequency band that is lower than the low cut-off frequency fc1 in the voltage signal which is converted by the current-voltage converter 10 (the output signal of the band-pass filter 30). In particular, with respect to the low frequency band that is lower than the low cut-off frequency fc1, the filter 40 attenuates the low frequency band component in the voltage signal which is converted by the current-voltage converter 10 (the output signal of the band-pass filter 30) so that the lower the frequency of the component included in the voltage signal which is converted by the current-voltage converter 10 (the output signal of the band-pass filter 30), greater the attenuation rate.

Moreover, the filter 40 attenuates the high frequency band component that is higher than the high cut-off frequency fc2 in the voltage signal which is converted by the current-voltage converter 10 (the output signal of the band-pass filter 30). In particular, with respect to the high frequency band that exceeds the high cut-off frequency fc2, the filter 40 attenuates the high frequency band component in the voltage signal which is converted by the current-voltage converter 10 (the output signal of the band-pass filter 30) so that the lower the frequency of the component included in the voltage signal which is converted by the current-voltage converter 10 (the output signal of the band-pass filter 30), the smaller the attenuation rate.

As shown in FIGS. 2 and 3, the current signal of the motor 2 is a current signal where the ripple component and the low frequency component whose frequency is lower than that of the ripple component are superimposed on one another. The frequency of the ripple component is measured in advance by an experiment/measurement or the like, and in the circuit design of the filter 40, the high cut-off frequency fc2 in the filter 40 is set to be lower than the frequency of the ripple component (for example, the frequency at normal temperature) in consideration of variation in the frequency of the ripple component due to temperature change. Therefore, the filter 40 attenuates the ripple component in the voltage signal which is converted by the current-voltage converter 10 (the output signal of the band-pass filter 30) at a greater attenuation rate than the low frequency component (the low frequency component having lower frequency than the ripple component). That is, the filter 40 effectively removes the ripple component than the low frequency component (the low frequency component having lower frequency than the ripple component). Therefore, the filter 40 outputs the signal in which the ripple component is removed to the differential amplifier 50.

In the differential amplifier 50, the voltage signal which is converted by the current-voltage converter 10 is input via the high-pass filter 20 and the band-pass filter 30. That is, in the differential amplifier 50, the output signal of the band-pass filter 30 is input. Further, in the differential amplifier 50, the output signal of the filter 40 is also input. The differential amplifier 50 obtains the difference between the output signal of the filter 40 and the voltage signal which is converted by the current-voltage converter 10 (the output signal of the band-pass filter 30) which are input and amplifies the difference. The differential amplifier 50 outputs the difference signal which expresses the difference to the amplifier 60.

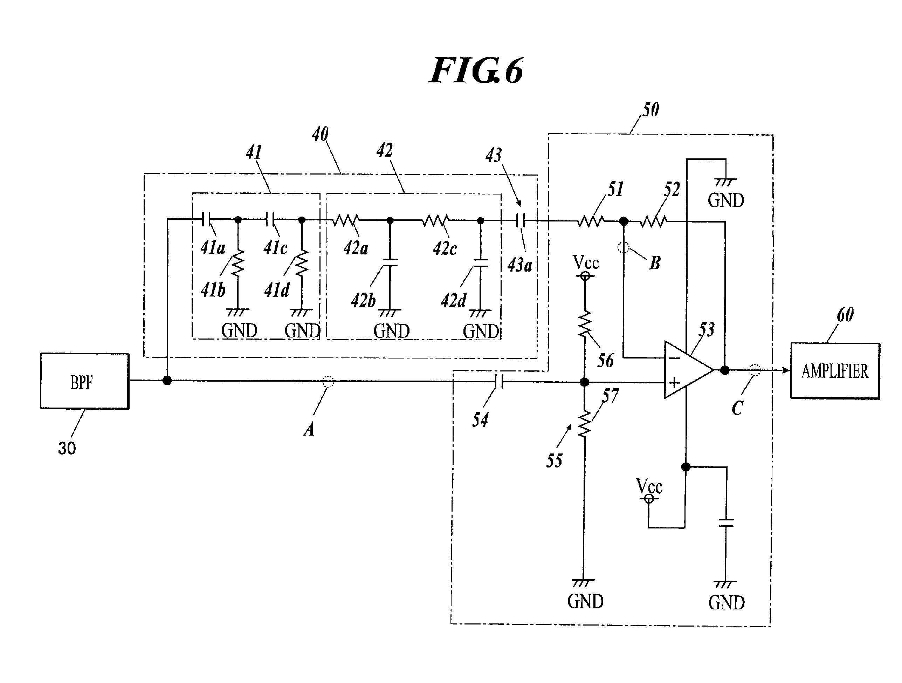

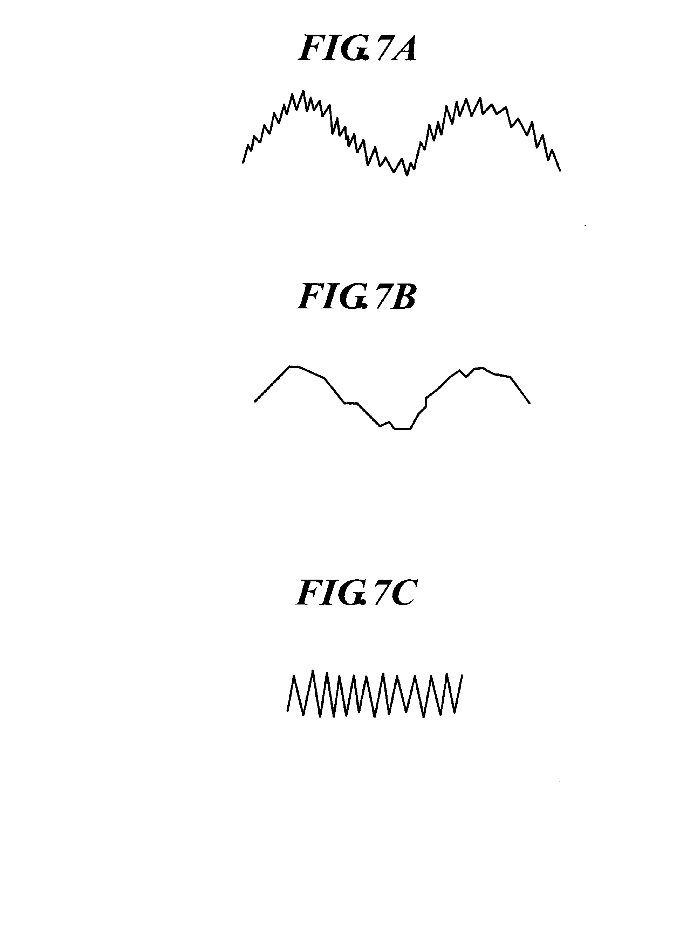

FIG. 6 is a circuit diagram showing an example of the filter 40 and the differential amplifier 50. FIG. 7A is a timing chart showing the waveform of the voltage signal at point A in FIG. 6, FIG. 7B is a timing chart showing the waveform of the voltage signal at point B in FIG. 6 and FIG. 7C is a timing chart showing a waveform of the voltage signal at point C in FIG. 6.

As shown in FIG. 6, the filter 40 includes a high-pass filter 41, a low-pass filter 42 and a high-pass filter 43. The output of the band-pass filter 30 is connected with the input of the high-pass filter 41, the output of the high-pass filter 41 is connected with the input of the low-pass filter 42 and the output of the low-pass filter 42 is connected with the output of the high-pass filter 43.

The high-pass filter 41 is a secondary CR high-pass filter. That is, the high-pass filter 41 includes a capacitor 41a, a resistor 41b, a capacitor 41c and a resistor 41d. Here, the high-pass filter 41 may be a primary CR high-pass filter constituted of one capacitor and one resistor. Further, the high-pass filter 41 may be a tertiary or more CR high-pass filter.

The low-pass filter 42 is a secondary RC low-pass filter. That is, the low-pass filter 42 includes a resistor 42a, a capacitor 42b, a resistor 42c and a capacitor 42d. Here, the low-pass filter 42 may be a primary RC low-pass filter constituted of one resistor and one capacitor. Further, the low-pass filter 42 may be a tertiary or more CR low-pass filter.

The high-pass filter 43 is constituted of a capacitor 43a.

The differential amplifier 50 includes resistors 51 and 52, an operational amplifier 53, a coupling capacitor 54, a bias circuit 55 and such like. The output terminal of the operational amplifier 53 is connected to the inverting input terminal of the operational amplifier 53 via the resistor 52, and negative feedback is applied to the operational amplifier 53. The output signal of the filter 40 (the output signal of the high-pass filter 43) is input in to the inverting input terminal of the operational amplifier 53 via the resistor 51, and the output signal of the band-pass filter 30 is input in to the non-inverting input terminal of the operational amplifier 53 via the coupling capacitor 54 and the bias circuit 55. The coupling capacitor 54 removes the direct-current component in the output signal of the band-pass filter 30. The bias circuit 55 includes resistors 56 and 57 which are connected in series between the power supply voltage and the ground. The bias circuit 55 applies a bias voltage to the output signal of the band-pass filter 30, in which the direct-current component being removed by the coupling capacitor 5, and raises the reference level of the output signal of the band-pass filter 30. Here, the coupling capacitor 54 and the bias circuit 55 may be omitted.

The difference signal output by the differential amplifier 50 is the ripple component in the voltage signal which is converted by the current-voltage converter 10. Because the difference signal output by the differential amplifier 50 expresses the difference between the output signal of the band-pass filter 30 and the output signal of the filter 40, ripples included in the current signal of the motor 2 can be detected with high accuracy even if the frequency of each component in the current signal of the motor 2 varies due to environmental change.

As shown in FIGS. 1 and 6, in the amplifier 60, the difference signal which is output by the differential amplifier 50 (the output signal of the operational amplifier 50) is input. The amplifier 60 amplifies the difference signal which is output by the differential amplifier 50 and output the amplified difference signal to the waveform shaping unit 70. The amplifier 60 is a negative feedback type amplifier, for example.

In the waveform shaping unit 70, the difference signal which is output by the differential amplifier 50 (the output signal of the operational amplifier 53) is input via the amplifier 60. The waveform shaping unit 70 converts the ripple component in the difference signal which is output by the differential amplifier 50 (the output signal of the amplifier 60) into pulses and shapes the waveform of the difference signal in rectangular wave. In particular, the waveform shaping unit 70 includes a comparator, and the difference signal which is output by the differential amplifier 50 (the output signal of the amplifier 60) is converted into a pulse signal by the comparator comparing the difference signal which is output by the differential amplifier 50 (the output signal of the amplifier 60) to the reference voltage. That is, the waveform shaping unit 70 is an AD converter of 1 bit. The waveform shaping unit 70 outputs the pulse signal which is formed into rectangular wave to the control unit 4.

The control unit 4 is a computer including a CPU 4a, a RAM 4b and such like. The CPU 4a performs various types of processes such as numeric calculation, information processing, device controlling and such like. The RAM 4d provides the CPU 4a with a working region as a temporary storage region.

The storage unit 5 is connected with the control unit 4. The storage unit 5 is a readable and writable storage medium such as a non-volatile memory and a hard disk. The storage unit 5 may be constituted of one storage medium or may be a combination of a plurality of storage mediums. In the storage unit 5, the program 5Z which can be read by the control unit 4 is stored. Here, the storage unit 5 may include a ROM, and the program 5Z may be stored in the ROM.

The control unit 4 reads the program 5Z which is stored in the storage unit 5 and performs the processes according to the program 5Z and also realizes various functions by the program 5Z. For example, the control unit 4 functions as units as described below by the program 5Z.

The control unit 4 functions as an activation unit which gives an order relating to rotational direction and the activation order to the motor driver 6. The control unit 4 functions as an input unit which inputs the output signal of the waveform shaping unit 70. The control unit 4 functions as a counter which counts the number of pulses in the output signal of the waveform shaping unit 70. The control unit 4 functions as a speed calculation unit which calculates the rotation speed of the motor 2 (the number of rotations per unit time) by measuring the time between the pulses in the output signal of the waveform shaping unit 70. The control unit 4 functions as a rotation amount calculation unit which calculates the rotation amount of the motor 2 (corresponding to the movement amount and the position of the moveable unit which is driven by the motor 2) on the basis of the number of pulses calculated by the counter. The control unit 4 functions as a speed setting unit which calculates the set speed on the basis of the counted number of pulses, the calculate rotation speed or the calculated rotation amount, for example, and gives an order relating to the set speed to the motor driver 6. The control unit 4 functions as a stopping unit which decides the stopping timing on the basis of the counted number of pulses, the calculated rotation speed or the calculated rotation amount, for example, and gives the stopping order at the stopping timing to the motor driver 6. The control unit 4 functions as a recording unit which temporary stores the counted number of pulses, the calculated rotation speed, the calculated rotation amount, the set speed, the stopping timing and the like in the RAM and records them in the storage unit 5.

The motor driver 6 supplies power to the motor 2 following the order given by the control unit 4 and drives the motor 2. That is, when the motor driver 6 receives the activation order and the order relating to rotation direction from the control unit 4, the motor driver 6 activates the motor 2 in the instructed rotation direction. The motor driver 6 drives the motor 2 at the set speed according to the set speed order received from the control unit 4. When the motor driver 6 receives the stopping order from the control unit 4, the motor driver 6 stops the motor 2.

The motor control apparatus 1 shown in FIG. 1 is used for a vehicle seat. The vehicle seat includes the motor control apparatus 1 shown in FIG. 1 and the seat main body 90 shown in FIGS. 7A, 7B and 7C. The moveable unit of the seat main body 90 is driven by the motor 2. Here, it is preferable that the number of the moveable units in the seat main body 90 and the number of the motors 2 are the same. In a case where a plurality of motors 2 are provided, the motor driver 6 and the ripple extraction device 3 are provided for each motor 2 and the control unit 4 and the storage unit 5 are shared by all of the motors 2.

The seat main body 90 will be described in detail. The seat main body 90 includes a rail unit 91, a seat bottom 92, a back rest 93, a head rest 94, arm rest 95, a leg rest 96 and such like.

The seat bottom 92 is mounted on the rail unit 91, the seat bottom 92 is provided so as to move in the front-back direction by the rail unit 91 and the motor 2 drives the seat bottom 92 in the front-back direction. The front part of the seat bottom 92 can rise and fall and another motor 2 drives the front part of the seat bottom 92 in the up-down direction. The back part of the seat bottom 92 can rise and fall, and another motor 2 drives the back part of the seat bottom 92 in the up-down direction. The back rest 93 rotatably joins with the back end section of the seat bottom 92 by the reclining mechanism, and another motor 2 makes the back rest 93 rise and fall with respect to the seat bottom 92. The head rest 94 joins with the upper ends section of the back rest 93 so as to rise and fall and to rotate, and another motor 2 drives the head rest 94 in the up-down direction and further another motor 2 makes the head rest 94 rise and fall back and forth. The arm rest 95 rotatably joins with the side of the back rest 93, and another motor 2 drives the arm rest 95 to be in the upright state from the horizontal state and the reverse thereof. The leg rest 96 rotatably joins with the front end section of the seat bottom 92, and another motor 2 drives the leg rest 96 to be in the dropped state from the flipped up state and the reverse thereof.

The ripple extraction device 3, the motor control apparatus 1 and the vehicle seat as described above have following advantages.
(1) Because the high cut-off frequency fc2 of the filter 40 in the circuit design of the filter 40 is set lower than the frequency of the ripple component, the ripple component can be removed by the filter 40.
(2) The differential amplifier 50 obtains the difference between the output signal of the band-pass filter 30 (the signal that is the direct-current component, the high frequency noise component and the like in the voltage signal which is converted by the current-voltage convertor 10 being removed) and the output signal of the filter 40 (the signal that is the direct-current component, the high frequency noise component, the ripple component and the like in the voltage signal which is converted by the current-voltage convertor 10 being removed) and outputs the difference as the difference signal. Therefore, the output signal of the differential amplifier 50 is the ripple component in the voltage signal which is converted by the current-voltage converter 10. Because the output signal of the differential amplifier 50 is the difference signal, the ripple component can be extracted accurately and the ripples in the current signal of the motor 2 can be detected with high accuracy even if the frequency of each component in the current signal of the motor 2 varies due to environmental change.
(3) The slope section in the region where the frequency thereof is higher than the high cut-off frequency fc2 in the frequency characteristics shown in FIG. 5 is used, the output signal of the differential amplifier 50 is accurately extracted as the ripple component even if the frequency of the ripple component varies due to temperature change.
(4) Because the ripple component is extracted by the filter 40 and the differential amplifier 50 by utilizing the frequency characteristics in the filter 40, there is no need to use the cut-off frequency variable type filter as the filter 40. Therefore, the cost of the filter 40 can be reduced.
(5) Because the ripple extraction device 3 is not a closed loop circuit such as the feedback control circuit, the ripples can be detected accurately even if the frequency of each component in the current signal of the motor 2 varies transiently or drastically.
(6) Because the filter 40 is a filter formed of the resistors 41b, 41d, 42a and 42c and the capacitors 41a, 41c, 42b, 42d and 43a, the configuration of the filter 40 is simple and increase in cost of the filter 40 can be suppressed.
(7) Because the ripple component is extracted by the filter 40 and the differential amplifier 50 by utilizing the frequency characteristics of the filter 40, the cut-off frequency variable type filters do not need to be used as the high-pass filter 20 and the band-pass filter 30. Therefore, increase in cost of the high-pass filter 30 and the band-pass filter 30 can be suppressed.
(8) Because the direct-current component in the voltage signal which is converted by the current-voltage converter 10 is removed by the high-pass filter 20, the processes in the band-pass filter 30, the filter 40 and the differential amplifier 50, that come after the high-pass filter 20, are performed accurately.
(9) Because the components other than the predetermined frequency band in the voltage signal which is converted by the current-voltage converter 10 attenuates by the band-pass filter 30, the processes in the filter 40 and the differential amplifier 50, that come after the band-pass filter 30, are performed accurately.

The embodiment to which the present invention is applicable is not limited to the above described embodiment, and arbitrary modifications can be made to the above described embodiment within the scope of the present invention. Hereinafter, several embodiments will be described. The following embodiments may be combined to the extent possible.

### [Modification example 1 of the first embodiment]

In the circuit design of the filter 40, the low cut-off frequency fc1 in the filter 40 shown in FIG. 5 is set higher than the frequency of the ripple component (for example, the frequency at normal temperature) considering variation in the frequency of the ripple component due to temperature change. Therefore, the filter 40 attenuates the ripple component in the voltage signal which is converted by the current-voltage converter 10 (the output signal of the band-pass filter 30) at an attenuation rate higher than that of the high frequency component (the high frequency component having a frequency higher than that of the ripple component). That is, the filter 40 removes the ripple component more effectively than the high frequency component (the high frequency component having a frequency higher than that of the ripple component). Therefore, the filter 40 outputs the signal in which the ripple component is removed to the differential amplifier 50.

In such case, the current signal of the motor 2 and the input signals to the filter 40 and the differential amplifier 50 are signals each formed by the ripple component and the high frequency component, having a frequency higher than that of the ripple component, being superimposed on one another.

### [Modification example 2 of the first embodiment]

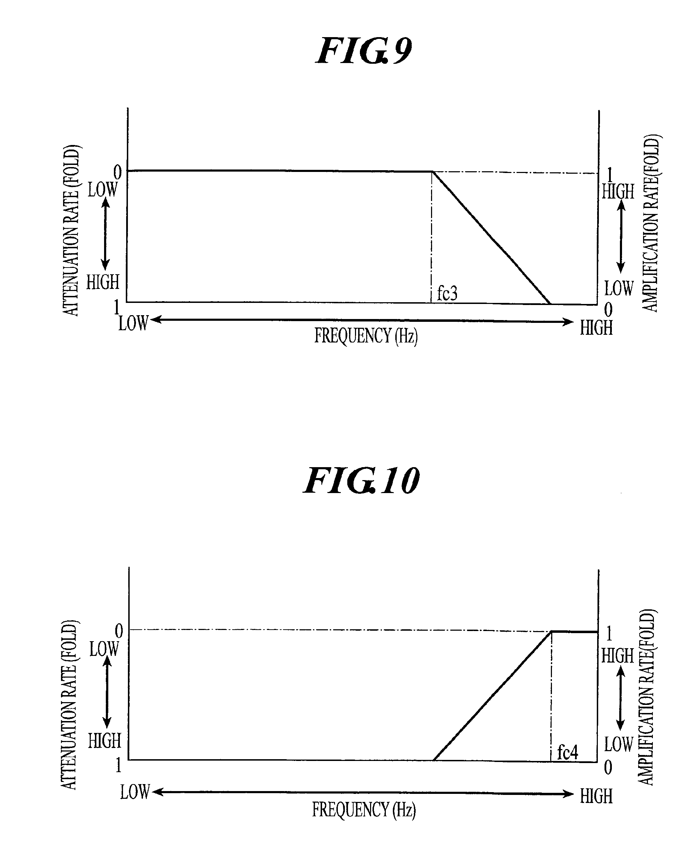

The filter 40 may be a low-pass filter having the frequency characteristics as shown in FIG. 9 and not a band-pass filter. The filter 40 lets the component that is the cut-off frequency fc3 or lower in the voltage signal which is converted by the current-voltage converter 10 (the output signal of the band-pass filter 30) pass therethrough and attenuates the component that exceeds the cut-off frequency fc3. In particular, in the high frequency band that exceeds the cut-off frequency fc3, the filter 40 attenuates the voltage signal which is converted by the current-voltage converter 10 (the output signal of the band-pass filter 30) so that the lower the frequency of the component included in the voltage signal which is converted by the current-voltage converter 10 (the output signal of the band-pass filter 30), the smaller the attenuation rate.

In the circuit design of the filter 40, the cut-off frequency fc3 in the filter 40 shown in FIG. 9 is set lower than the frequency of the ripple component (for example, the frequency at normal temperature) taking variation in frequency of the ripple component due to temperature change into consideration. Therefore, the filter 40 attenuates the ripple component in the voltage signal which is converted by the current-voltage converter 10 (the output signal of the band-pass filter 30) at an attenuation rate higher than that of the low frequency component (the low frequency component having a frequency lower than that of the ripple component). That is, the filter 40 removes the ripple component more efficiently than the low frequency component. Therefore, the filter 40 outputs the signal in which the ripple component is removed to the differential amplifier 50.

In such case, the current signal of the motor 2 and the input signals to the filter 40 and the differential amplifier 50 are signals each formed by the ripple component and the low frequency component having a frequency lower than that of the ripple component being superimposed on one another.

In a case where the filter 40 is a low-pass filter, the high-pass filters 41 and 43 shown in FIG. 6 are omitted, the output of the band-pass filter 30 is connected with the input of the low-pass filter 42 and the output of the low-pass filter 42 is connected with the inverting input terminal of the operational amplifier 53 via the resistor 51.

### [Modification example 3 of the first embodiment]

The filter 40 may be a high-pass filter having the frequency characteristics as shown in FIG. 10 and not a band-pass filter. The filter 40 lets the component that is the cut-off frequency fc4 or higher in the voltage signal which is converted by the current-voltage converter 10 (the output signal of the band-pass filter 30) pass therethrough and attenuates the component that is lower than the cut-off frequency fc4. In particular, in the low frequency band lower than the cut-off frequency fc4, the filter 40 attenuates the voltage signal which is converted by the current-voltage converter 10 (the output signal of the band pass filter 30) so that the lower the frequency of the component included in the voltage signal which is converted by the current-voltage converter 10 (the output signal of the band-pass filter 30), the higher the attenuation rate.

In the circuit design of the filter 40, the cut-off frequency fc4 in the filter 40 shown in FIG. 10 is set higher than the frequency of the ripple component (for example, the frequency at normal temperature) taking variation in frequency of the ripple component due to temperature change into consideration. Therefore, the filter 40 attenuates the ripple component in the voltage signal which is converted by the current-voltage converter 10 (the output signal of the band-pass filter 30) at an attenuation rate higher than that of the high frequency component (the high frequency component having a frequency higher than that of the ripple component). That is, the filter 40 removes the ripple component more efficiently than the high frequency component. Therefore, the filter 40 outputs the signal in which the ripple component is removed to the differential amplifier 50.

In a case where the filter 40 is a high-pass filter, the low-pass filter 42 shown in FIG. 6 is omitted, and the output of the band-pass filter 30 is connected with the input of the high-pass filter 41.

### [Modification example 4 of the first embodiment]

The filter 40 may be a band-stop filter and not a band-pass filter.

### [Modification example 5 of the first embodiment]

With respect to the high-pass filter 20 and the band-pass filter 30, one of them or both of them may be omitted. If the high-pass filter 20 is omitted, the output of the current-voltage converter 10 is connected with the input of the band-pass filter 30. If the band-pass filter 30 is omitted, the output of the high-pass filter 20 is connected with the input of the filter 40 and the input of the differential amplifier 50. If both of the high-pass filter 20 and the band-pass filter 30 are omitted, the output of the current-voltage converter 10 is connected with the input of the filter 40 and the input of the differential amplifier 50.

### [Modification example 6 of the first embodiment]

The motor control apparatus 1 may be embedded in an electric door mirror apparatus and the moveable unit of the electric door mirror apparatus (for example, a storage mechanism which stores and expands the mirror housing with respect to a door, a tilt mechanism which swings the mirror up and down with respect to the mirror housing, a pan mechanism which swings the mirror in right and left with respect to the mirror housing) may be driven by the motor 2 of the motor control apparatus 1. The motor control apparatus 1 may be embedded in the power window apparatus and the moveable unit of the power window apparatus (for example, a window regulator) may be driven by the motor 2.

### [Modification example 7 of the first embodiment]

The filter 40 may be a filter utilizing an operational amplifier (for example, a negative feedback type low-pass filter, a positive feedback type low-pass filter, a multiple negative feedback type band-pass filter, a multiple positive feedback type band-pass filter).

### [Modification example 8 of the first embodiment]

In the above embodiment, because the waveform shaping unit 70 converted the difference signal output by the differential amplifier 50 into a pulse signal, the waveform shaping unit 70 is the AD converter of 1 bit. In contrary, resolution of the waveform shaping unit 70 may be 2 bits or more, and the waveform shaping unit 70 may convert the difference signal which is output by the differential amplifier 50 into a digital signal.

### [Note on the first embodiment]

As it is understood from the above description of the first embodiment, the description of the first embodiment includes disclosures of various technical ideas in addition to the invention described in the following notes.

### Note 1

A ripple extraction device which extracts a ripple component included in a current signal of a motor, the ripple extraction device including:
a current-voltage converter which converts the current signal of the motor into a voltage signal,
a filter which filters the voltage signal which is converted by the current-voltage converter, and
a differential amplifier which obtains the difference between the voltage signal which is converted by the current-voltage converter and an output signal of the filter.

### Note 2

The ripple extraction device described in note 1 wherein the filter attenuates the ripple component in the voltage signal which is converted by the current-voltage converter.

### Note 3

The ripple extraction device described in note 1 or 2 wherein the filter is a low-pass filter which attenuates the voltage signal which is converted by the current-voltage converter so that the lower the frequency of a component included in the voltage signal which is converted by the current-voltage converter, the lower the attenuation rate.

### Note 4

The ripple extraction device described in note 3 wherein a cut-off frequency in the filter is set lower than the frequency of the ripple component.

### Note 5

The ripple extraction device described in note 1 or 2 wherein the filter is a high-pass filter which attenuates the voltage signal which is converted by the current-voltage converter so that the lower the frequency of a component included in the voltage signal which is converted by the current-voltage converter, the higher the attenuation rate.

### Note 6

The ripple extraction device described in note 5 wherein a cut-off frequency in the filter is set higher than the frequency of the ripple component.

### Note 7

The ripple extraction device described in note 1 or 2 wherein the filter is a band-pass filter which attenuates the voltage signal which is converted by the current-voltage converter so that the lower the frequency of a component included in the voltage signal which is converted by the current-voltage converter, the higher the attenuation rate, in the low frequency band that is lower than the low cut-off frequency, which attenuates the voltage signal which is converted by the current-voltage converter so that the lower the frequency of a component included in the voltage signal which is converted by the current-voltage converter, the lower the attenuation rate, in the high frequency band that exceeds the high cut-off frequency which is higher than the low cut-off frequency, and which lets the voltage signal which is converted by the current-voltage converter pass therethrough, in the frequency band between the low cut-off frequency and the high cut-off frequency.

### Note 8

The ripple extraction device described in note 7 wherein the low cut-off frequency in the filter is set higher than the frequency of the ripple component.

### Note 9

The ripple extraction device described in note 7 wherein the high cut-off frequency in the filter is set lower than the frequency of the ripple component.

### Note 10

The ripple extraction device described in any of notes 1 to 9 wherein the filter is a filter constituted of one or a plurality of resistors and capacitors.

### Note 11

A vehicle seat including a seat main body having a moveable unit and a ripple extraction device described in any one of notes 1 to 10, wherein the moveable unit is driven by the motor.

### Note 12

A ripple extraction method for extracting a ripple included in a current signal of a motor, the method including converting the current signal of the motor into a voltage signal, filtering the voltage signal which is converted and obtaining a difference between the voltage signal which is converted and the voltage signal which is filtered.

### (a) Advantages obtained in the inventions described in notes 1, 2 and 12

When the voltage signal which is converted by the current-voltage converter is filtered by the filter, the ripple component is attenuated. Because the difference between the voltage signal from the current-voltage converter and the output signal from the filter is obtained by the differential amplifier, the difference is to be the ripple component. Because the obtained ripple component is the difference between the voltage signal from the current-voltage converter and the output signal from the filter, the ripple component included in the current signal of the motor can be detected with high accuracy even if the frequency of each component in the current signal of the motor varies due to environmental change.

Further, because the ripple component is extracted by using the filter and the differential amplifier, the cut-off frequency variable type filter does not need to be used as the filter. Therefore, cost for the filter can be reduced.

Because the ripple extraction device is not a closed loop circuit such as the feedback control circuit, the ripple component can be detected accurately even if the frequency of each component in the current signal of the motor changes transiently or drastically.

### (b) Advantages obtained in the inventions described in notes 3 and 4

If the voltage signal which is converted by the current-voltage converter is a signal that is the ripple component and the low frequency component whose frequency is lower than that of the ripple component being superimposed on one another, the ripple component is detected accurately as the difference by the differential amplifier even if the frequency of each component in the current signal of the motor changes due to environmental change.

### (c) Advantages obtained in the inventions described in notes 5 and 6

If the voltage signal which is converted by the current-voltage converter is a signal that is the ripple component and the high frequency component whose frequency is higher than that of the ripple component being superimposed on one another, the ripple component is detected accurately as the difference by the differential amplifier even if the frequency of each component in the current signal of the motor changes due to environmental change.

### (d) Advantages obtained in the inventions described in notes 7 and 8

If the voltage signal which is converted by the current-voltage converter is a signal that is the ripple component and the low frequency component whose frequency is lower than that of the ripple component being superimposed on one another, the ripple component is detected accurately as the difference by the differential amplifier even if the frequency of each component in the current signal of the motor changes due to environmental change.

### (e) Advantages obtained in the inventions described in notes 7 and 9

If the voltage signal which is converted by the current-voltage converter is a signal that is the ripple component and the high frequency component whose frequency is higher than the ripple component being superimposed on one another, the ripple component is detected accurately as the difference by the differential amplifier even if the frequency of each component in the current signal of the motor changes due to environmental change.

### (f) Advantage obtained in the invention described in note 10

Because the filter is a filter constituted of a resistor and a capacitor, the configuration of the filter is simple and cost of the filter can be reduced.

### (g) Advantage obtained in the invention described in note 11

The ripple component included in the current signal of the motor can be detected with high accuracy and cost of the filter and the vehicle seat can be reduced.

### [Second embodiment]

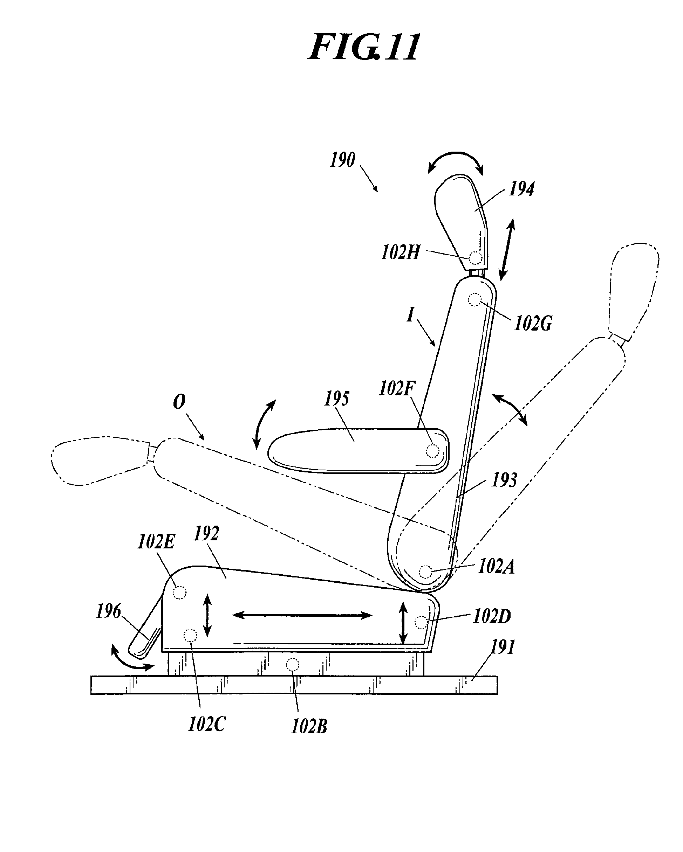

FIG. 11 is a side view of the seat main body 190 of the vehicle seat apparatus.

As shown in FIG. 11, the vehicle seat apparatus includes the seat main body 190 on which an occupant sits. The seat main body 190 includes a plurality of moveable units. As for the moveable units of the seat main body 190, there are the back rest 193, the seat bottom 192, the head rest 194, the arm rest 195 and the leg rest 196. The moveable units of the seat main body 190 will be described in detail.

The seat bottom 192 is mounted on the rail unit 191, and the seat bottom 192 in the front-back direction by the rail unit 191. The front part of the seat bottom 192 rises and falls. The back part of the seat bottom 192 also rises and falls. The back rest 193 joins with the back end section of the seat bottom 192 by the reclining mechanism, and the back rest 193 rotates in front and back around the lower end section thereof by the reclining mechanism. The head rest 194 joins with the upper end section of the back rest 193, and the head rest 194 moves up and down relatively with respect to the back rest 193. Further, the head rest 194 rises and falls in front and back relatively with respect to the back rest 193. The arm rest 195 joins with the side of the back rest 193, and the arm rest 195 rotates centering around the joining section of the back rest 193 and the arm rest 195 so as to be in an upright state from a horizontal state and the reverse thereof. The leg rest 196 joins with the front end section of the seat bottom 192, and the leg rest 196 moves centering around the joining section of the seat bottom 192 and the leg rest 196 so as to be in a dropped state from a flipped up state and the reverse thereof.

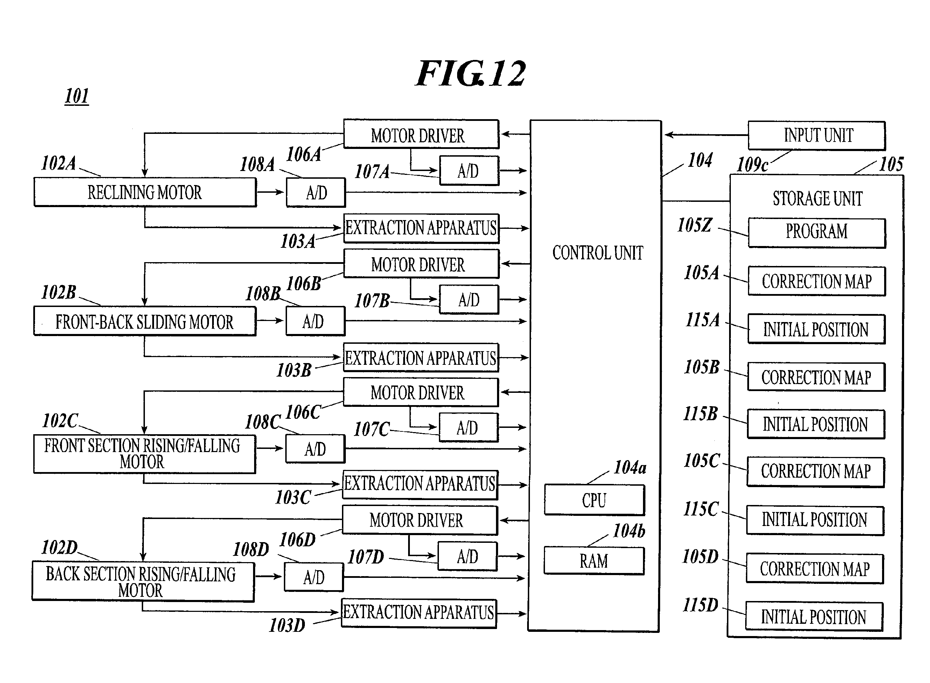

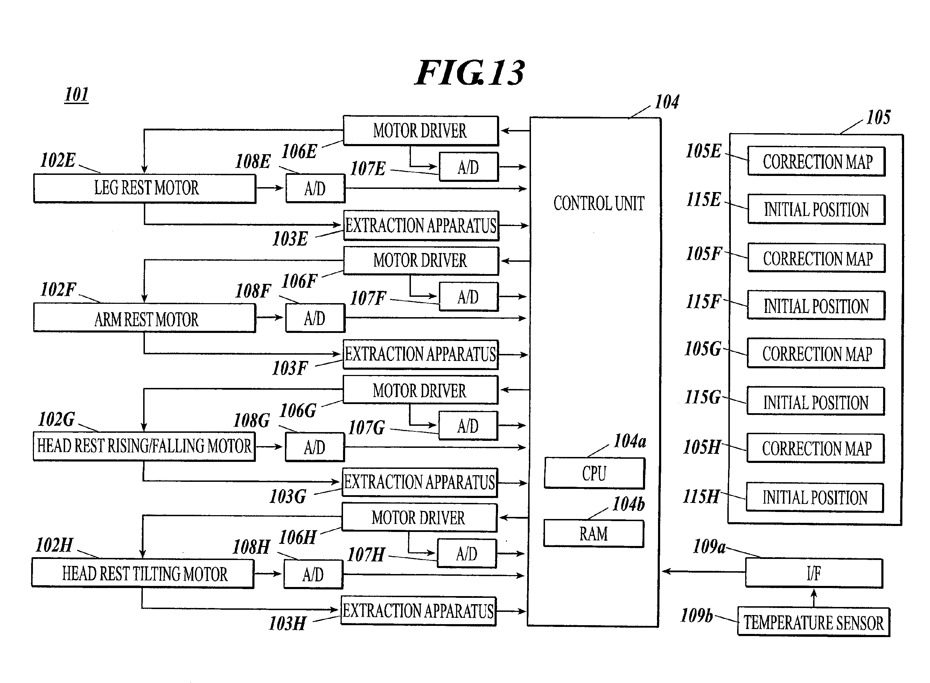

FIGS. 12 and 13 are block diagrams of the motor control apparatus 101 of the vehicle seat apparatus. The vehicle seat apparatus includes the motor control apparatus 101 as shown in FIGS. 12 and 13. The motor control apparatus 101 includes motors 102A to 102H, ripple extraction devices (ripple extraction circuits) 103A to 103H, motor drivers 106A to 106H, A/D converters 107 to 107H, A/D converters 108A to 108H, the control unit 104 and the storage unit 105. In FIGS. 12 and 13, the ripple extraction devices 103A to 103 are each referred to as the "extraction device".

The control unit 104 is a computer including a CPU 104a, a RAM 104b and such like. The CPU 104a performs various types of processes such as numeric calculation, information processing and device controlling. The RAM 104b provides the CPU 104a with a working region as a temporary storage region.

The storage unit 105 is connected with the control unit 104. The storage unit 105 is a readable and writable storage medium such as a non-volatile memory and a hard disk. The storage unit 105 may be constituted of one storage medium or may be a combination of a plurality of storage mediums.

In the storage unit 105, the program 105Z which can be read by the control unit 104 is stored. The control unit 104 reads the program 105Z and performs processes in compliance with the program 105Z, and also, realizes various types of functions according to the program 105Z. Here, the storage unit 105 may include a ROM, and the program 105Z may be stored in the ROM.

As shown in FIG. 11, the motors 102A to 102H are provided in the seat main body 190. The motors 102A to 102H respectively drive the plurality of moveable units.

The motor 102A is a reclining motor and rotates the back rest 193 in front and back. The motor 102B is a front-back sliding motor which moves the seat bottom 192 in front and back. The motor 102C is a front part lifting and lowering motor which moves the front part of the seat bottom 192 up and down. The motor 102D is a back part lifting and lowering motor which moves the back part of the seat bottom 192 up and down. The motor 102E is a leg rest motor which rotates the leg rest 196. The motor 102F is an arm rest motor which rotates the arm rest 195. The motor 102G is a head rest lifting and lowering motor, and the motor 102G moves the hear rest 194 up and down. The motor 102H is a head rest tilting motor. The motor 102H makes the head rest 194 tilt in front and back.

The motor 102A is a direct current motor. When a current runs in to the motor 102A, the motor 102A rotates and the motor 102A generates cyclical ripples in the current. The current signal of the motor 102A is similar as the current signal of the motor 2 in the first embodiment (see FIGS. 2 and 3).

The ripple extraction device 103A extracts the ripple component from the current signal of the motor 102A, converts the ripple component into pulses and outputs the pulse signal which is formed by the ripple component being converted into pulses to the control unit 104.

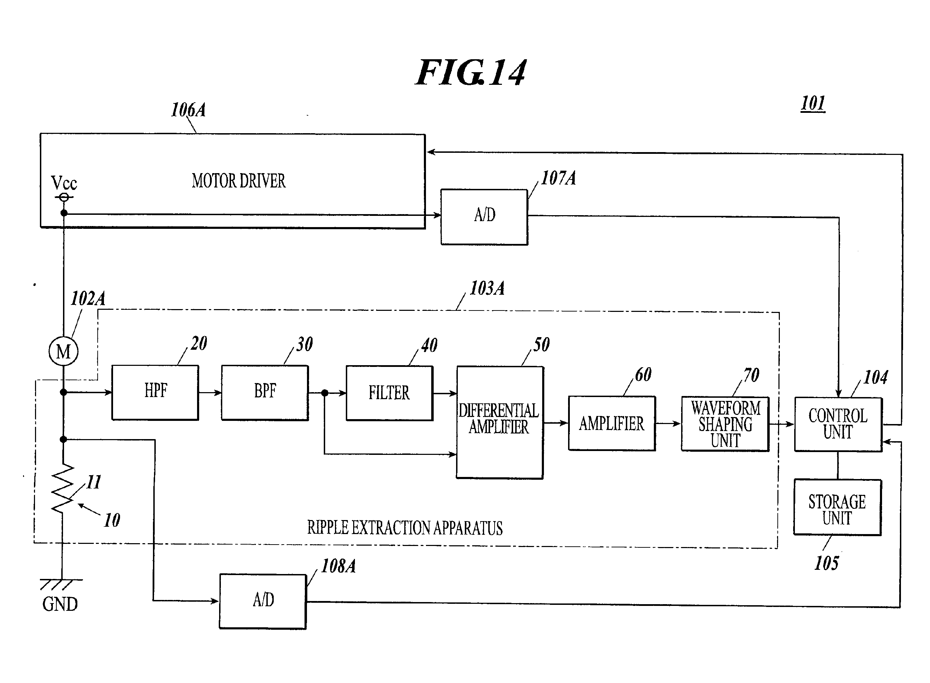

As shown in FIG. 14, the ripple extraction device 103A has the configuration similar to that of the ripple extraction device 3 in the first embodiment (see FIG. 1). That is, the ripple extraction device 103A includes a current-voltage converter 10, a high-pass filter 20, a band-pass filter 30, a filter 40, a differential amplifier 50, an amplifier 60 and a waveform shaping unit 70. The current-voltage converter 10, the high-pass filter 20, the band-pass filter 30, the filter 40, the differential amplifier 50, the amplifier 60 and the waveform shaping unit 70 of the ripple extraction device 103A are provided similarly as the current-voltage converter 10, the high-pass filter 20, the band-pass filter 30, the filter 40, the differential amplifier 50, the amplifier 60 and the waveform shaping unit 70 of the ripple extraction device 3 of the first embodiment (see FIGS. 4 to 6, 7A, 7B, 7C, 9 and 10).

When the motor 102A is running, because the ripple component in the current signal of the motor 102A is cyclical, the pulse signal which is to be input to the control unit 104 is also a cyclical signal. The number pulses in the pulse signal input to the control unit 104 is converted into rotation amount of the motor 102A and converted into movement amount of the back rest 193 which is driven by the motor 102A. In particular, the value obtained by multiplying the rotation amount of the motor 102A per one pulse by the number of pulses in the pulse signal is the rotation amount of the motor 102A, and the value obtained by multiplying the unit movement amount of the back rest 193 per one pulse by the number of pulses in the pulse signal is the movement amount of the back rest 193.

In the control unit 104, the pulse signal which is output by the waveform shaping unit 70 of the ripple extraction device 103A is input. By the control unit 104 counting the number of pulses in the input pulse signal, the control unit 104 counts the rotation amount of the motor 102A and the movement amount of the back rest 193.

The control unit 104 outputs the activation order, the order relating to rotation direction and the stopping order to the motor driver 106A. For example, when the inputting unit 109c having one or a plurality of pushing button switches and the like is operated (see FIG. 12) and when the inputting unit 109c outputs the signal according to the operation to the control unit 104 and the signal is input to the control unit 104, the control unit 104 outputs the order according to the signal to the motor driver 106A. Further, when the control unit 104 performs various types of processes (for example, a sequence process) and fulfills a predetermined condition, the control unit 104 outputs the order according to the condition to the motor driver 106A.

The motor driver 106A supplies power to the motor 102A in compliance with an order from the control unit 104 and drives the motor 102A. The motor driver 106A is provided similarly as the motor driver 6 in the first embodiment.

The A/D converter 107A is a voltage detection unit. That is, the A/D converter 107A detects the voltage in the motor 102A, converts the voltage signal into a digital signal and outputs the digitalized voltage data to the control unit 104. The voltage data output by the A/D converter 107A is a type of status data of the motor 102A. In the control unit 104, the voltage data which is output by the A/D converter 107A is input.

The A/D converter 108A is a current detection unit. That is, the A/D converter 108A detects the current value in the motor 102A, converts the current signal into a digital signal and outputs the digitalized current data to the control unit 104. Here, because the output signal of the current-voltage converter 10 expresses the current in the motor 102A, the A/D converter 108A converts the output signal of the current-voltage converter 10 into a digital signal and outputs the digital signal to the control unit 104. The current data which is output by the A/D converter 108A is a type of status data of the motor 102A. In the control unit 104, the current data which is output by the A/D converter 108A is input.

The load on the motor 102A depends on the current in the motor 102A. For example, as the load on the motor 2A becomes greater, the current in the motor 102A becomes greater. Therefore, the load on the motor 102A is converted from the current in the motor 102A. Therefore, the current data which is output by the A/D converter 108A is the load data of the motor 102A and is also a type of status data of the motor 102A.

The environmental temperature around the motor control apparatus 101 depends on the current and/or the voltage in the motor 102A. Therefore, the environmental temperature of the motor control apparatus 101 is converted from the current and/or the voltage in the motor 102A. Therefore, the voltage data which is output by the A/D converter 107A, the current data which is output by the A/D converter 108A or the combination thereof is the surrounding environmental temperature data and is also a type of status data of the motor 102A.

In the above, the motor 102A, the ripple extraction device 103A, the motor driver 106A, the A/D converter 107A and the A/D converter 108A are described. The motors 102B to 102H are similar to the motor 102, the ripple extraction devices 103B to 103H are similar to the ripple extraction device 103A, the motor drivers 106B to 106F are similar to the motor driver 106A, the A/D converters 107B to 107H are similar to the A/D converter 107A and the A/D converters 108B to 108H are similar to the A/D converter 108A. Here, the ripple extraction devices 103B to 103H, the motor drivers 106B to 106H and the A/D converters 107B to 107H may be omitted, and the ripple extraction device 103A, the motor driver 106A and the A/D converter 107A may be shared by the motors 102A to 102H. In such case, a relay circuit is provided, and the relay circuit selects either of the motors 102A to 102H according to an order from the control unit 104. The relay circuit connects the motor which is selected from the motor 102A to 102H with the ripple extraction device 103A, the motor driver 106A, the A/D converter 107A and the A/D converter 108A, and the relay circuit blocks off the other motors from the ripple extraction device 103A, the motor driver 106A, the A/D converter 107A and the A/D converter 108A.

As shown in FIG. 13, the temperature sensor 109b is connected with the control unit 104 via the interface 109a. The temperature sensor 109b detects a temperature and outputs the temperature data to the control unit 104 through the interface 109a. In the control unit 104, the temperature data output by the temperature sensor 109b is input. The temperature data which is output to the control unit 104 from the temperature sensor 109b is a type of status data of the motor 102A.

The temperature sensor 109b will be described in detail. There are a plurality of temperature sensors 109b, and the temperature sensors 109b are respectively attached to the motors 102A to 102H and they detect the temperatures of the motors 102A to 102H. Alternatively, a temperature sensor 109b is provided at the periphery of the motor control apparatus 101 and the temperature sensor 109b detects the environmental temperature of the periphery of the motor control apparatus 101. Alternatively, a temperature sensor 109b is disposed inside a vehicle where the seat main body 190 is attached and the temperature sensor 109b detects the temperature inside the vehicle. Alternatively, a temperature sensor 109b is a temperature sensor embedded in a car air conditioner in a vehicle compartment where a seat main body 190 is attached and the temperature sensor 109b detects the temperature inside the vehicle compartment.

In the storage unit 105, initial position data 115A to 115H are stored.

The initial position data 115A indicates the initial rotational position of the motor 102A before the motor 102A starts running and the initial position of the back rest 193. In particular, as shown in FIG. 11, the initial position data 115A indicates the distance from a predetermined original position O to the initial position I by the number of pulses in the pulse signal which is converted. The initial position data 115A is a default value set in advance or a value written at the previous running of the motor 102A. If the initial position I of the back rest 193 is the original position O, the number of pulse that indicates the initial position data 115A is 0.

The initial position data 115B indicates the initial rotational position of the motor 102B before the motor 102B starts running and the initial position of the seat bottom 192 in the front-back direction. The initial position data 115C indicates the initial rotational position of the motor 102C before the motor 102C starts running and the up down position of the front part of the seat bottom 192. The initial position data 115D indicates the initial rotational position of the motor 102D before the motor 102D starts running and the position of the front part of the seat bottom 192 in the up-down direction. The initial position data 115E indicates the initial rotational position of the motor 102E before the motor 102E starts running and the position of the back part of the seat bottom 192 in the up-down direction. The initial position data 115F indicates the initial rotational position of the motor 102F before the motor 102F starts running and the initial position of the arm rest 195. The initial position data 115G indicates the initial rotational position of the motor 102G before the motor 102G starts running and the initial position of the head rest 194 in the up-down direction. The initial position data 115H indicates the initial rotational position of the motor 102H before the motor 102H operates and the initial tilt of the head rest 194.

When the motor 102A starts running, the control unit 104 counts the number of pulses in the pulse signal which is output by the ripple extraction device 103A to count the rotation amount of the motor 102A and the movement amount of the back rest 193. The control unit 104 adds the count value (the rotation amount of the motor 102A, the movement amount of the back rest 193, the number of pulses in the pulse signal) to the initial position data 115A or the control unit 104 subtracts the count value from the initial position data 115A. The difference or the sum is the rotational position of the motor 102A and the position of the back rest 193 after movement and is a type of status data of the motor 102A. Hereinafter, the difference or the sum is referred to as "after movement position data". The same applies to the rotational positions of the motors 102B to 102H and the positions of the units which are moved by the motors 102B to 102H.

In the storage unit 105, correction maps 105A to 105H indicating the relationships between the input values and the output values are stored.

Each of the correction maps 105A to 105H is a correction look-up table or a correction function. A correction look-up table is a data table where the data column of input values and the data column of output values are associated to one another. A correction function expresses a relationship between an input value and an output value in a formula.

The correction maps 105A to 105H may be multiple input correction maps where there are a plurality of number of input values (multiple input look-up tables or multiple input functions). Further, they may be single input correction maps where there is one input value (single input look-up tables or single input functions).

The correction map 105A is a correction map for the motor 102A, and the status data of the motor 102A is applied to the input value of the correction map 105A. That is, the voltage data that is input to the control unit 104 from the A/D converter 107A (the environmental temperature data converted from the voltage data), the current data that is input to the control unit 104 from the A/D converter 108A (the load data of the motor 102A and the environmental temperature data converted from the current data), the temperature data that is input to the control unit 104 from the temperature sensor 109b or the "after movement position data" is applied to the input value of the correction map 105.

If the correction map 105A is a single input correction map, any one of the voltage data that is input to the control unit 104 from the A/D converter 107A, the current data that is input to the control unit 104 from the A/D converter 108A, the temperature data that is input to the control unit 104 from the temperature sensor 109b and the "after movement position data" is applied to the input value of the correction map 105.

If the correction map 105A is a multiple input correction map, two, three or all of the voltage data that is input to the control unit 104 from the A/D converter 107A (the environmental temperature data converted from the voltage data), the current data that is input to the control unit 104 from the A/D converter 108A (the load data of the motor 102A and the environmental temperature data converted from the current data), the temperature data that is input to the control unit 104 from the temperature sensor 109b and the "after movement position data" are applied to the input values of the correction map 105.

The output value of the correction map 105A is a correction value.

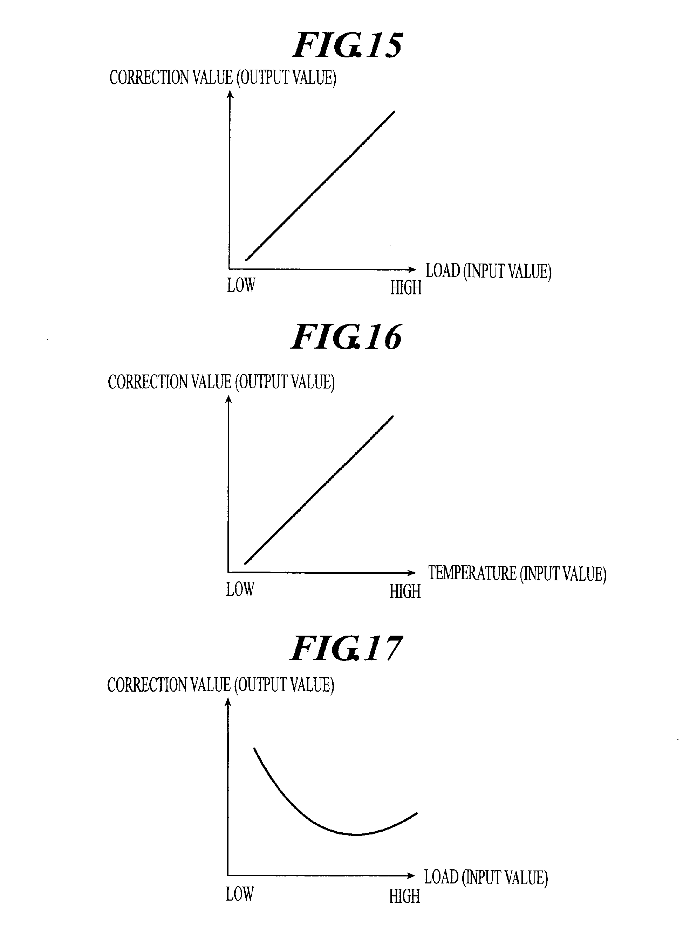

FIG. 15 shows an example of the correction map 105A in a case where the correction map 105A is a single input correction map. As shown in FIG. 15, the correction map 105A is a correction function or a correction look-up table which indicates the relationship between the load as the input value and the correction value as the output value. The current data that is output by the A/D converter 108A is converted into the load data of the motor 102A to be applied to the input value.

FIG. 16 shows another example of the correction map 105A in a case where the correction map 105A is a single input correction map. As shown in FIG. 16, the correction map 105A is a correction function or a correction look-up table which indicates the relationship between the temperature as the input value and the correction value as the output value. The temperature data that is input to the control unit 104 from the temperature sensor 109b is applied to the input value, the voltage data that is output by the A/D converter 107A is converted to be applied to the input value, the current data that is output by the A/D converter 108A is converted to be applied to the input value or the voltage data and the current data that are output by the A/D converters 107A and 108A are converted to be applied to the input value.

FIG. 17 shows another example of the correction map 105A in a case where the correction map 105A is a single input correction map. As shown in FIG. 17, the correction map 105A is a correction function or a correction look-up table which indicates the relationship between the position after movement as the input value and the correction value as the output value. The difference between the number of pulses in the pulse signal counted by the control unit 104 and the initial position data 115A or the sum thereof ("after movement position data") is applied to the input value.

The correction maps 105B to 105H are respectively the correction maps for the motors 102B to 102H. Since the correction map 105B to 105H are similar to the correction map 105A, detail descriptions of the correction maps 105B to 105H are omitted.

The flow of the process performed by the control unit 104 based on the program 105Z will be described, and operations of the motor control apparatus 101 and the vehicle seat apparatus associated with the process performed by the control unit 104 will be described.

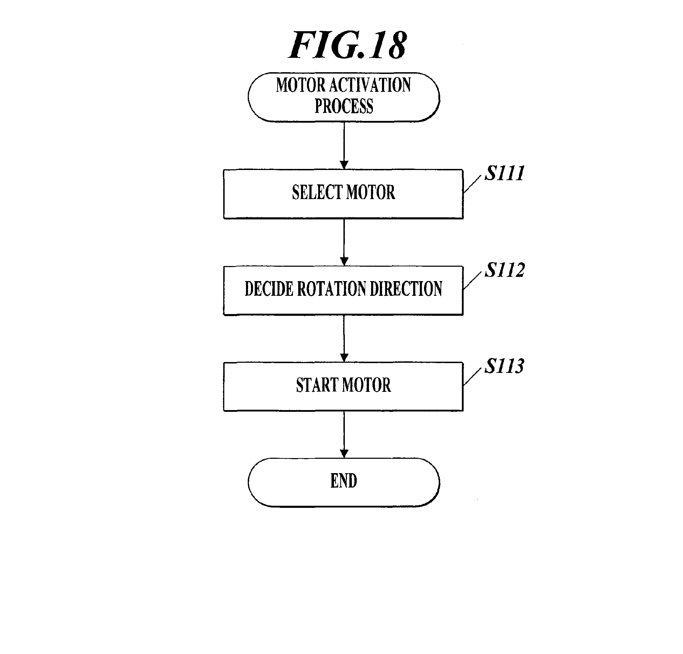

First, as shown in FIG. 18, the control unit 104 selects a motor to be activated among the motors 102A to 102H and writes the motor to be activated in the RAM 104b or the storage unit 105 (step S111). For example, if a user operates the input unit 109c, the control unit 104 selects the motor to be activated among the motors 102A to 102H according to the input signal from the input unit 109c. Alternatively, if a predetermined condition is fulfilled in the process executed by the control unit 104 (for example, a sequence process), the control unit 104 selects the motor to be activated among the motors 102A to 102H according to the condition. Hereinafter, a description will be given assuming that the control unit 104 selected the motor 102A.

Next, the control unit 104 decides the rotation direction (normal rotation or reverse rotation) of the motor 102A and writes the rotation direction in the RAM 104b or the storage unit 105 (step S112).

Next, the control unit 104 activates the motor 102A in the direction decided in step S112 (step S113). That is, the control unit 104 outputs the rotation direction order which complies with the direction decided in step S112 to the motor driver 6A of the motor 102A which is selected in step S111 and outputs the activation order to the motor driver 106A. Thereby, the motor 102A is activated and the back rest 193 moves by the motor 102A. For example, if the rotation direction decided in step S112 is the normal rotation, the back rest 193 rotates in the clockwise direction in the side view shown in FIG. 11, and if the rotation direction decided in step S113 is the reverse rotation, the back rest 193 rotates in the counter clockwise direction in the side view shown in FIG. 11.

While the motor 102A is running, the ripple extraction device 103A extracts (detects) the ripple component from the current signal of the motor 102A and converts the ripple component in pulses. Then, the ripple extraction device 103A outputs the pulse signal which is formed by the ripple component being converted into pulses to the control unit 104.

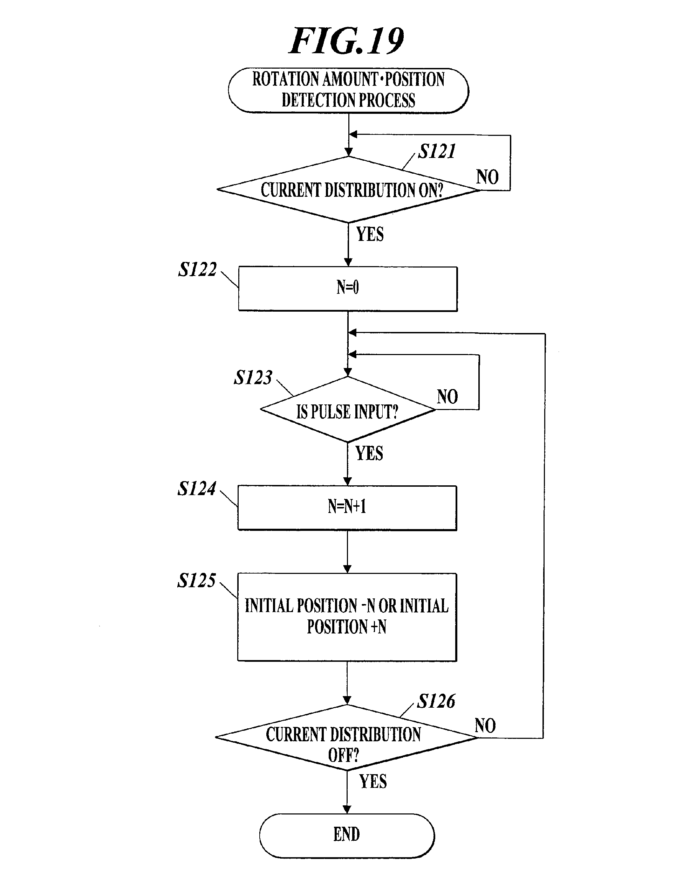

When the motor 102A is activated, the control unit 104 calculates the rotation amount of the motor 102A, the rotational position of the motor 102A, the movement amount of the back rest 193 and the position of the back rest 193 based on the pulse signal input from the ripple extraction device 103A. In particular, the control unit 104 executes the process shown in FIG. 19 to calculate the rotation amount of the motor 102A, the rotational position of the motor 102A, the movement amount of the back rest 193 and the position of the back rest 193.

The process shown in FIG. 19 will be described in detail.

The control unit 104 compares one or both of the voltage data that is input from the A/D converter 107A and the current data that is input from the A/D converter 108A with a predetermined threshold (step S121). When the control unit 104 activates the motor 102A as described above (step S113), current is distributed to the motor 102A; therefore, the control unit 104 determines that one or both of the voltage data and the current data exceed the predetermined threshold and detects the power distribution in the motor 102A and the activation of the motor 102A (step S121: YES). Then, the control unit 104 reads the initial position data 115A from the storage unit 105, and the process performed by the control unit 104 moves on to step S122.

When current is distributed to the motor 102A, the control unit 104 counts the number of pulses in the pulse signal which is input from the ripple extraction device 103A and obtains the rotational position of the motor 102A and the position of the back rest 193 from the number of pulses and the initial position data 115A (steps S122, S123, S124, S125). In particular, first, the control unit 104 resets the count value N to 0 (step S122). Thereafter, the control unit 104 updates the count value N by adding 1 to the count value N every time a pulse of the pulse signal output by the ripple extraction device 103A is input (step S123: YES), and the control unit 104 adds the updated count value N to the read initial position data 115A or subtracts the updated count value N from the read initial position data 115A (step S125). The control unit 104 decides the arithmetic in step S125 according to the direction decided in step S112. For example, if the rotation direction decided in step S112 is the normal rotation, the control unit 104 performs the addition in step S125, and if the rotation direction decided in step S112 is the reverse rotation, the control unit 104 performs the subtraction in step S125. Naturally, the relationship between the rotation direction and the arithmetic may be the other way around.

The count value N which is updated in step S124 is the number of pulses counted by the control unit 104. The number of pulses counted by the control unit 104 (the count value N) indicates the rotation amount of the motor 102A and the movement amount of the back rest 193. The difference or the sum obtained in step S125 is the rotational position of the moor 102A and the position of the back rest 193, and is the "after movement position data".

The control unit 104 repeats the process of step S123 to step S126 until it is detected that the current is cutoff in the motor 102A (step S126: NO). That is, after the process of step S125, the control unit 104 compares one or both of the voltage data that is input from the A/D converter 107A and the current data that is input from the A/D converter 108A to a predetermined threshold (step S126). If one or both of the voltage data and the current data exceeds the predetermined threshold (step S126: NO), the process performed by the control unit 104 returns to step S123, and if one or both of the voltage data and the current data are below the predetermined threshold (step S126: YES), the control unit 104 ends the process shown in FIG. 19.

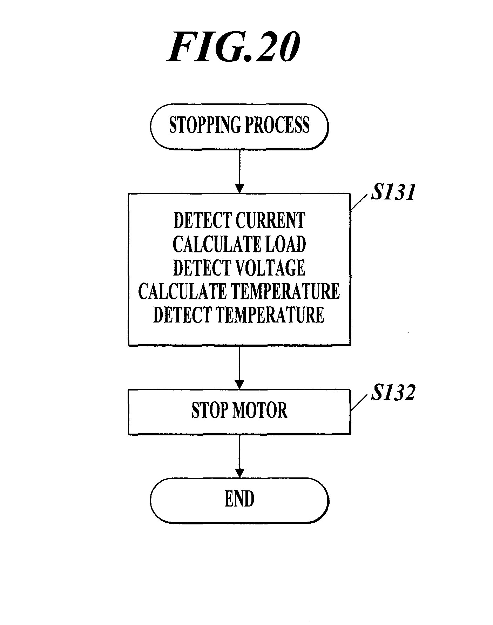

The process of stopping the motor 102A which is running performed by the control unit 104 will be described with reference to FIG. 20.

If a predetermined condition is fulfilled, the control unit 104 executes the process shown in FIG. 20. For example, when a user operates the input unit 109c, the control unit 104 executes the process shown in FIG. 20 if the stop signal is input to the control unit 104 from the input unit 109c. Alternatively, if a predetermined condition is fulfilled in the process executed by the control unit 104 (for example, a sequence process), the control unit 104 executes the process shown in FIG. 20. Further, alternatively, if the "after movement position data" obtained in the above step S125 is a predetermined value, the control unit 104 executes the process shown in FIG. 20. Further, alternatively, if the count value N that is updated in the above step S124 is a predetermined value, the control unit 104 executes the process shown in FIG. 20.

First, the control unit 104 obtains the status data of the motor 102A (step S131). Hereinafter, (example A) to (example G) of the status data of the motor 102A will be described.
(example A) The control unit 104 temporarily stores the current data of the motor 102A that is input from the A/D converter 108A in the RAM 104b or the storage unit 105.
(example B) The control unit 104 converts the current data of the motor 102A that is input from the A/D converter 108A into load data and temporarily stores the converted load data in the RAM 104b or the storage unit 105.
(example C) The control unit 104 temporarily stores the voltage data of the motor 102A that is input from the A/D converter 107A in the RAM 104b or the storage unit 105.
(example D) The control unit 104 converts the current data of the motor 102A that is input from the A/D converter 108A into temperature data and temporarily stores the converted temperature data in the RAM 104b or the storage unit 105.
(example E) The control unit 104 converts the voltage data of the motor 102A that is input from the A/D converter 107A into temperature data and temporarily stores the converted temperature data in the RAM 104b or the storage unit 105.
(example F) The control unit 104 converts the current data of the motor 102A that is input from the A/D converter 108A and the voltage data of the motor 102A that is input from the A/D converter 107A into temperature data and temporarily stores the temperature data in the RAM 104b or the storage unit 105.
(example G) The control unit 104 temporarily stores the temperature data that is input from the temperature sensor 109b in the RAM 104b or the storage unit 105.

After the status data of the motor 102A is obtained, the control unit 104 outputs the stopping order to the motor driver 6A and stops the motor 102A (step S132).

When the control unit 104 stops the motor 102A, the current in the motor 102A is cutoff; therefore, the control unit 104 detects the cutoff of the current in the motor 102A (step S126: YES) as shown in FIG. 19 and ends the process shown in FIG. 19. Here, the control unit 104 temporarily stores the "after movement position data" obtained in the last step S125 when repeating the process of step S123 to step S126 shown in FIG. 19 in the RAM 104b or the storage unit 105 as the status data of the motor 102A (hereinafter, the status data is referred to as the example H).

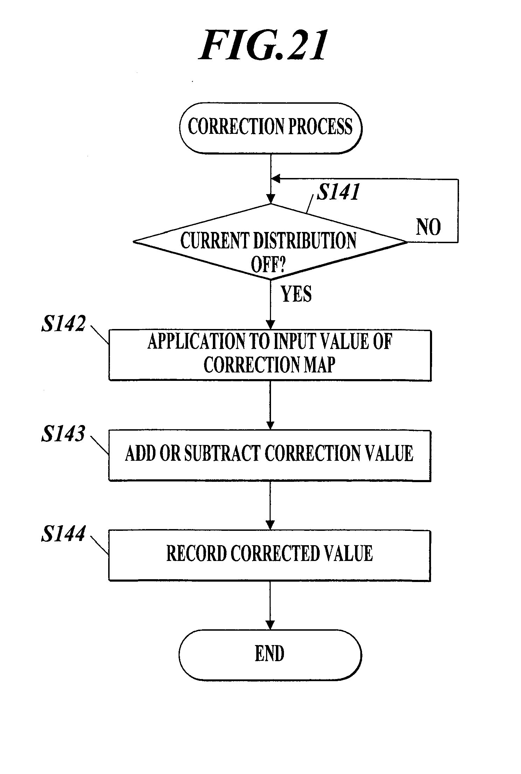

The correction process will be described with reference to FIG. 21.

The control unit 104 outputs the stopping order to the motor driver 6A (step S132) and thereafter executes the correction process shown in FIG. 21.

When the control unit 104 detects the cutoff of the current in the motor 102A (step S141), the control unit 104 applies the status data of the motor 102A to the correction map 105A as the input value (step S142) . If the correction map 105A is a single input correction map, the status data to be applied by the control unit 104 is the current data described in (example A), the load data described in (example B), the voltage data described in (example C), the temperature data described in (example D), the temperature data described in (example E), the temperature data described in (example F), the temperature data described in (example G) or the "after movement position data" described in (example H). If the correction map 105A is a multiple input correction map, the status data to be applied by the control unit 104 is two or more status data selected from the above group. In a case where the status data to be applied to the input value is only the "after movement position data" described in (example H), the above process of step S131 may be omitted.

By applying the status data of the motor 102A to the input value of the correction map 105A, the control unit 104 obtains the corresponding output values as the correction value (step S142).

Next, the control unit 104 adds the correction value to the value obtained in the last step S125 (the "after movement position data") or subtracts the correction value from the value obtained in the last step S125 (the "after movement position data") (step S143). The control unit 104 decides the arithmetic in the step S143 according to the direction decided in step S112 . For example, if the rotation direction decided in step S112 is the normal rotation, the control unit 104 performs the addition in step S143, and if the rotation direction decided in step S112 is the reverse rotation, the control unit 104 performs the subtraction in step S143. Naturally, the relationship between the rotation direction and the arithmetic may be the other way around.

The difference or the sum obtained by the control unit 104 in step S143 indicates the rotational position of the motor 102A after the correction and the position of the back rest 193 after the correction.

Next, the control unit 104 writes the sum or the difference obtained in step S143 in the storage unit 105 (step S144). In particular, the control unit 104 rewrites the initial position data 115A with the sum or the difference obtained in step S143. Then, the process of the control unit 104 ends.

The updated initial position data 115A is used when the motor 102A is to be activated again.

In the above operation description, it is assumed that the motor 102A is driven. However, the same applies when the motors 102B to 102H are to be driven. When the motors 102B to 102H are driven, the correction maps 105B to 105H are respectively used and the initial position data 115B to 5H are respectively used.

The second embodiment of the present invention has the following advantages.
(1) Conventionally, at such time just after the motor is activated, just after the motor is stopped and the like, there are cases where the moveable unit does not operate due to friction, play, error, inertia force and such like even when the motor is rotating and where the moveable unit continues to operation even when the motor stopped. In such cases, the position of the moveable unit cannot be detected accurately. In contrary, in the second embodiment of the present invention, the position of the back rest 193 and the rotational position of the motor 102A can be detected accurately even when the back rest 193 does not move while the motor 102A started to rotate and even when the back rest 193 continuous to move while the motor 102A has stopped. This is because of the correction process shown in FIG. 21 is carried out.
(2) Because the correction value is not a constant number and is a value obtained from the status data of the motor 102A by using the correction map 105A, the position of the back rest 193 and the rotational position of the motor 102A can be detected accurately with respect to any state the motor 102A is in.
(3) For example, the size of load varies according to the inclination of the back rest 193. That is, the load sixe differs between the case where the back rest 193 is folded down and the case where the back rest 193 is up. Therefore, by applying the "after movement position data" to the input value of the correction map 105A in the process of step S142, the correction value according to the position can be obtained. Thus, the position of the back rest 193 and the rotational position of the motor 102A can be detected accurately.
(4) Because the correction maps 105A to 105H are respectively prepared for the motors 102A to 102H, a position can be detected accurately even when any of the motors 102A to 102H is driven.
(5) Because a rotary encoder or the like is not used for detecting the rotation amounts and the rotational positions of the motors 102A to 102H, the cost can be reduced.
(6) The ripple extraction devices 103A to 3H generate pulse signals by using the ripple components included in the current signals of the motors 102A to 102H. On the other hand, because the motors 102A to 102H respond slightly slowly to the power distribution/power cutoff in the motors 102A to 102H, small errors occur easily between the actual rotational positions/movement amounts of the motors 102A to 102H and rotational positions/movement amounts which are calculated based on the pulse signals of the ripple extraction devices 103A to 103H. Even in such cases, because the rotational position/movement amounts which are calculated based on the pulse signals of the ripple extraction devices 103A to 3H are corrected by using the correction maps 105A to 105H, such errors can be resolved.
(7) The advantages (1) to (9) described in the description of the first embodiment can also be obtained.

The embodiment to which the present invention is applicable is not limited to the above described embodiment, and arbitrary modifications from the above embodiment can be made within the scope of the present invention. Hereinafter, several modification examples will be described. The following modification examples may be combined to the extent possible.

### [Modification example 1 of the second embodiment]

In the above step S122, the control unit 104 may set the count value N to the initial position data 105A and not reset the count value to 0. In such case, the process of step S125 is omitted. Further, in step S124, the control unit 104 updates the count value N by adding 1 to the count number N or subtracting 1 from the count number N every time a pulse of the pulse signal which is output by the ripple extraction device 103A is input. The control unit 104 decides the arithmetic in step S124 according to the direction decided in step S112. Therefore, the count value N which is updated in step S124 expresses the "after movement position data".

In this case, in step S143, the control unit 104 adds the correction value to the count number N that is updated in the last step S124 (the "after movement position data") or subtracts the correction value from the count value N that is updated in the last step S124 (the "after movement position data") . At this time, the control unit 104 decides whether the arithmetic is to be addition or subtraction according to the direction decided in step S112. The difference or the sum obtained by the control unit 104 expresses the rotational position of the motor 102A after the correction and the position of the back rest 193 after the correction.

### [Modification example 2 of the second embodiment]

After the process of step S142 and before the process shown in FIG. 21 ends, the control unit 104 adds the correction value to the count value N which is updated in the last step S124 or subtracts the correction value from the counted value N which is updated in the last step S124. The difference or the sum obtained by the control unit 104 is a value obtained by correcting the counted number pulses, and the value expresses the corrected movement amount of the motor 102A and the corrected movement amount of the back rest 193.

Thereafter, the control unit 104 writes the obtained difference or sum newly in the storage unit 105.

In the modification example 2, in addition to the position of the back rest 193 and the rotational position of the motor 102A, the movement amount of the back rest 193 and the rotation amount of the motor 102A can also be detected accurately.

### [Modification example 3 of the second embodiment]

The ripple extraction devices 103A to 103H are examples and they are not limited to the circuits in the above embodiment. For example, the filters 40 and the differential amplifiers 50 may be omitted. In such case, it is preferable to provide switched-capacitor filters after the band-pass filters 30 and before the amplifiers 60 so that the ripple component can be extracted accurately even when the frequency of the ripple component changes. The cut-off frequency of the switched-capacitor filter is variable, and even when the frequencies of the ripple component and the low-frequency component vary, the switched-capacitor filter attenuates the low frequency component and lets the ripple component pass therethrough.

### [Modification example 4 of the second embodiment]

Similarly to the modification example 1 in the first embodiment, in at least one or more of the ripple extraction devices 103A to 103H, the low cut-off frequency fc1 of the filter 40 may be set higher than the frequency of the ripple component (for example, the frequency at normal temperature).

### [Modification example 5 of the second embodiment]

Similarly to the modification example 2, the modification example 3 or the modification example 4 in the first embodiment, in at least one or more of the ripple extraction devices 103A to 103H, the filter 40 may be a low-pass filter, a high-pass filter or a band-pass filter.

### [Modification example 6 of the second embodiment]

Similarly to the modification example 5 in the first embodiment, in at least one or more of the ripple extraction devices 103A to 103H, one or both of the high-pass filter 20 and the band-pass filter 30 may be omitted.

### [Modification example 7 of the second embodiment]

Similarly to the modification example 6 in the first embodiment, the motor control apparatus 101 may be embedded in the power door-mirror apparatus or the power window apparatus.

### [Modification example 8 of the second embodiment]

Similarly to the modification example 7 in the first embodiment, in at least one or more of the ripple extraction devices 103A to 103H, the filter 40 may be a filter utilizing an operational amplifier (for example, a negative feedback type low-pass filter, a positive feedback type low-pass filter, a multiple negative feedback type band-pass filter, a multiple positive feedback type band-pass filter).

### [Notes on the second embodiment]

As can be understood from the above descriptions regarding the second embodiment, disclosure of various technical ideas, in addition to the inventions described in the following notes, are included in the descriptions of the second embodiment.

### Note 1

A motor control apparatus including:
a motor which generates cyclic ripples in a current signal when activated,
a ripple extraction device which extracts a ripple component from the current signal of the motor and outputs a pulse signal which is formed by converting the ripple component into pulses,
a control unit to which the pulse signal is input and which controls the motor, and
a storage unit in which a correction map expressing a relationship between an input value and an output value and an initial position data of the motor are stored,
and the control unit performs:
a first process of obtaining a rotational position of the motor by obtaining a rotation amount of the motor by counting the number of pulses in the pulse signal and by adding the rotation amount to the initial position data or subtracting the rotation amount from the initial position data,
a second process of obtaining a status data of the motor,
a third process of applying the status data obtained in the second process to an input value of the correction map and obtaining a corresponding output value as a correction value, and
a fourth process of adding the correction value obtained in the third process to the rotational position obtained in the first process or subtracting the correction value obtained in the third process from the rotational position obtained in the first process.

### Note 2

The motor control apparatus of note 1 wherein the control unit rewrites the initial position data stored in the storage unit with the difference or the sum obtained in the fourth process.

### Note 3

A motor control apparatus including
a motor which generates cyclic ripples in a current signal when activated,
a ripple extraction device which extracts a ripple component from the current signal of the motor and outputs a pulse signal which is formed by converting the ripple component into pulses,
a control unit to which the pulse signal is input and which controls the motor, and
a storage unit in which a correction map expressing a relationship between an input value and an output value is stored,
and the control unit performs:
a first process of obtaining a rotation amount of the motor by counting the number of pulses in the pulse signal,
a second process of obtaining a status data of the motor,
a third process of applying the status data obtained in the second process to an input value of the correction map and obtaining a corresponding output value as a correction value, and
a fourth process of adding the correction value obtained in the third process to the rotation amount obtained in the first process or subtracting the correction value obtained in the third process from the rotation amount obtained in the first process.

### Note 4

The motor control apparatus described in note 3 wherein the control unit writes the difference or the sum obtained in the fourth process in the storage unit.

### Note 5

The motor control apparatus described in any one of notes 1 to 4 further including a current detection unit which detects a current value of the motor, and
in the second process, the control unit obtains the current value detected by the current detection unit as the status data of the motor.

### Note 6

The motor control apparatus described in any one of notes 1 to 4 further including a voltage detection unit which detects a voltage in the motor, and
in the second process, the control unit obtains the voltage detected by the voltage detection unit as the status data of the motor.

### Note 7

The motor control apparatus described in any of notes 1 to 4 further including a current detection unit which detects a current value in the motor, and
in the second process, the control unit obtains a load converted from the current value detected by the current detection unit as the status data of the motor.

### Note 8

The motor control apparatus described in any of notes 1 to 4 further including a current detection unit which detects a current value in the motor, and
in the second process, the control unit obtains a temperature converted from the current value detected by the current detection unit as the status data of the motor.

### Note 9

The motor control apparatus described in any one of notes 1 to 4 further including a voltage detection unit which detects a voltage in the motor, and
in the second process, the control unit obtains a temperature converted from the voltage detected by the voltage detection unit as the status data of the motor.

### Note 10

The motor control apparatus described in any one of notes 1 to 4 wherein the control unit obtains the rotational position obtained in the first process as the status data of the motor in the second process.

### Note 11

The motor control apparatus described in any one of notes 1 to 4 further including a temperature detection unit which detects a temperature of the motor or a surrounding of the motor, and
in the second process, the control unit obtains the temperature detected by the temperature detection unit as the status data of the motor.

### Note 12

The motor control apparatus described in any one of notes 1 to 11 wherein the control unit decides a rotation direction of the motor before the first process and selects an arithmetic, from addition and subtraction, to be performed between the correction value and the rotational position in the fourth process.

### (a) Advantages obtained in the inventions described in notes 1 and 3

Even if a mismatch occurs between the moveable unit which is driven by the motor and the motor, the position or the movement amount of the moveable unit and the rotational position and the rotation amount of the motor can be detected accurately. Further, because a correction map is used, the position or the movement amount of the moveable unit or the rotational position or the rotation amount of the motor can be detected accurately with respect to any state the motor is in.

### (b) Advantages obtained in the invention described in note 2

Even if the motor is stopped and is activated again, the position of the moveable unit and the rotational position of the motor can be detected accurately.

### [Third embodiment]

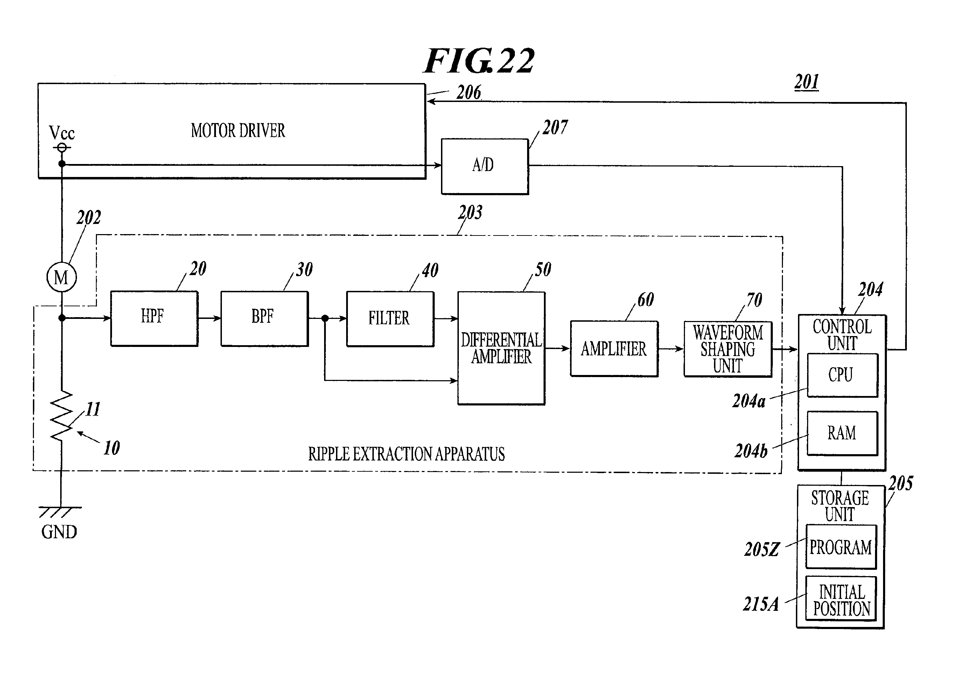

FIG. 22 is a block diagram of the motor control apparatus 201.

The motor control apparatus 201 includes a motor 202, a ripple extraction device 203, a control unit 204, a storage unit 205, a motor driver 206, an A/D converter 207 and such like.

The motor 202 is a direct current motor. When current flows in to the motor 202, the motor 202 rotates and generates cyclical ripples in the current. The current signal of the motor 202 is similar to the current signal of the motor 2 in the first embodiment (see FIGS. 2 and 3).

The ripple extraction device 203 extracts the ripple component from the current signal of the motor 202, converts the ripple component into pulses and outputs the pulse signal which is formed by the ripple component being converted into pulses to the control unit 204.

As shown in FIG. 22, the ripple extraction device 203 has the configuration similar to that of the ripple extraction device 3 in the first embodiment (see FIG. 1). That is, the ripple extraction device 203 includes a current-voltage converter 10, a high-pass filter 20, a band-pass filter 30, a filter 40, a differential amplifier 50, an amplifier 60 and a waveform shaping unit 70. The current-voltage converter 10, the high-pass filter 20, the band-pass filter 30, the filter 40, the differential amplifier 50, the amplifier 60 and the waveform shaping unit 70 of the ripple extraction device 20 are respectively provided in a similar manner as the current-voltage converter 10, the high-pass filter 20, the band-pass filter 30, the filter 40, the differential amplifier 50, the amplifier 60 and the waveform shaping unit 70 of the ripple extraction device 3 in the first embodiment (see FIGS. 4 to 6, 7A, 7B, 7C and 9 to 10).

The motor drive 206 supplies power to the motor 202 in compliance with an order from the control unit 204 and drives the motor 202. The motor driver 206 is provided in a similar manner as the motor driver 6 in the first embodiment.

The A/D converter 207 is a voltage detection unit which detects the power supply voltage of the motor 202 and outputs the power supply voltage to the control unit 204. The A/D converter 207 is provided in a similar manner as the A/D converter 107A in the second embodiment.

The control unit 204 is a computer including a CPU 204a, a RAM 204b and such like. The CPU 204a performs various processes such as numeric calculation, information processing, device controlling and such like. The RAM 204b provides the CPU 204a with a working region as a temporary storage region. In the control unit 204, the pulse signal which is output by the waveform shaping unit 70 is input.

The storage unit 205 is connected with the control unit 204. The storage unit 205 is a readable and writable storage medium such as a non-volatile memory and a hard disk. The storage unit 205 may be constituted of one storage medium or may be a combination of a plurality of storage mediums.

In the storage unit 205, the initial position data 215A is stored. The initial position data 215A indicates the initial rotational position of the motor 202 before the motor 202 starts running and the initial position of the moveable unit which is driven by the motor 202. In particular, the initial position data 215A is the number of pulses in the pulse signal when the motor 202 rotates to the initial rotational position from a predetermined original position. The value obtained by multiplying the number of pulses with a predetermined constant number is the rotation amount of the motor 202 when it rotated to the initial rotational position from the predetermined original position and indicates the initial rotational position of the motor 202 before it starts running. The initial position data 215A is a default value which is set in advance or is a value written at the previous running of the motor 202. If the initial rotational position of the motor 202 is the original position, the initial position data 215A is 0.

In the storage unit 205, the program 205Z which can be read by the control unit 204 is stored. The control unit 204 reads the program 205Z and performs the processes according to the program 205Z and also realizes various functions by the program 205Z. Here, the storage unit 205 may include a ROM, and the program 205Z may be stored in the ROM.

The control unit 204 functions as following units by the program 205Z.

The control unit 204 functions as an activation unit which gives an order relating to rotation direction and the activation order to the motor driver 206 to activate the motor 202.

The control unit 24 functions as a counting unit which counts the number of pulses in the output signal of the waveform shaping unit 70. The value obtained by multiplying the number of pulses which is counted by the counting unit by a predetermined constant number corresponds to the rotation amount of the motor 202 and also corresponds to the movement amount of the moveable unit which is driven by the motor 202. Therefore, the counting unit is also a movement amount calculation unit which calculates the rotation amount of the motor 202 and the movement amount of the moveable unit which is driven by the motor 202.

The control unit 204 functions as a pulse cycle measuring unit which measures the pulse cycle of each pulse in the output signal of the waveform shaping unit 70 (the time between the rising of a pulse to the rising of the next pulse). The value obtained by multiplying the inverse number of the pulse cycle measured by the control unit 204 by a predetermined constant number corresponds to the rotation speed of the motor 202 and also corresponds to the speed of the moveable unit which is driven by the motor 202. Therefore, the pulse cycle measuring unit is also a speed calculation unit which calculates the rotation speed of the motor 202 and the moving speed of the moveable unit which is driven by the motor 202.

The control unit 204 functions as an accumulation unit which sequentially stores the pulse cycles of the pulses measured by the pulse cycle measuring unit.

The control unit 204 functions as a monitor unit which monitors the voltage data which is input from the A/D converter 207.

The control unit 204 functions as a timer unit which starts timing when the variation in the voltage data which is monitored by the monitor unit is detected and continues to time until the timed time reaches a predetermined estimate time t.

The control unit 204 functions as the second counting unit which counts the number of pulses in the output signal of the waveform shaping unit 70, independently from the counting by the counting unit, while the measuring of pulse cycles is performed by the pulse cycle measuring unit.

The control unit 204 functions as an average cycle calculation unit which calculates the average cycle T_average of the pulse cycle T_before of one pulse or a plurality of pulses before variation in the voltage data is detected, the voltage data being monitored by the monitor unit, and the pulse cycle T_after of one pulse or a plurality of pulses just after the timing of the timer unit reached the estimate time t, among the pulse cycles sequentially stored by the accumulation unit.

The control unit 204 functions as an estimate number of pulses calculation unit which calculates an estimate number of pulses as the quotient of dividing the estimate time t by the average cycle T_agerage which is calculated by the average cycle calculation unit.

The control unit 204 functions as a correction unit which subtracts the number of pulses counted by the second counting unit from the number of pulses counted by the counting unit, and which adds the estimate number of pulses calculated by the estimate number of pulses calculation unit to the above obtained difference.

The control unit 204 functions as an update unit which updates the number of pulses counted by the counting unit to a value obtained by the addition (arithmetic) performed by the correction unit.

The control unit 204 functions as a stopping unit which stops the motor 202 by giving the stopping order to the motor driver 206.

The flow of the process performed by the control unit 24 based on the program 205Z will be described and the operation of the motor control apparatus 201 associated with the process performed by the control unit 204 will be described.

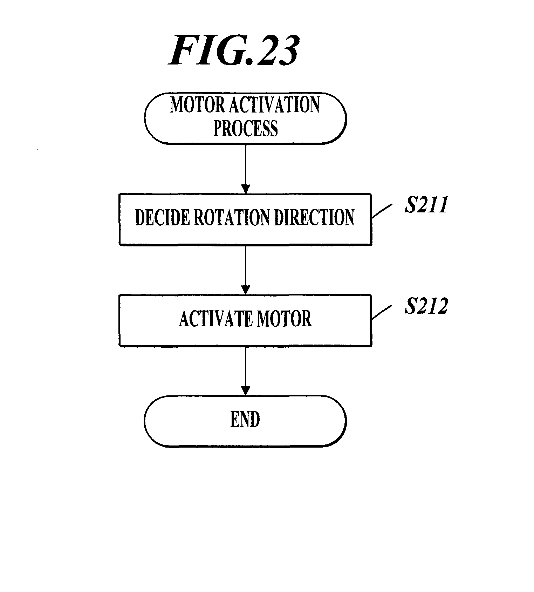

If a predetermined condition is fulfilled, the control unit 204 executes the activation process of the motor 202 (see FIG. 23). Fulfilling of a predetermined condition includes, for example, a user turning on the activation switch, turning on of the activation sensor and a predetermined condition being fulfilled with a process being executed by the control unit 204 (for example, a sequence process).

First, the control unit 204 decides the rotation direction of the motor 202 (normal rotation or reverse rotation), and writes the decided rotation direction in the RAM 204b or the storage unit 205 (step S211).

Next, the control unit 204 activates the motor 202 in the direction decided in step S211 (step S212). That is, the control unit 204 outputs the rotation direction order according to the direction decided in step S211 to the motor driver 206 and also output the activation order to the motor driver 206. The motor driver 206 which received the rotation direction order and the activation order distributes power to the motor 202 and drives the motor 202 in the rotation direction. In such way, the motor 202 is activated and the moveable unit is driven by the motor 202. Hereby, the activation process of the motor 202 ends.

While the motor 202 is running, the ripple extraction device 203 extracts (detects) the ripple component from the current signal of the motor 202 and converts the ripple component into pulses. Then, the ripple extraction device 203 output the pulse signal formed by the ripple component being converted into pulses to the control unit 204.

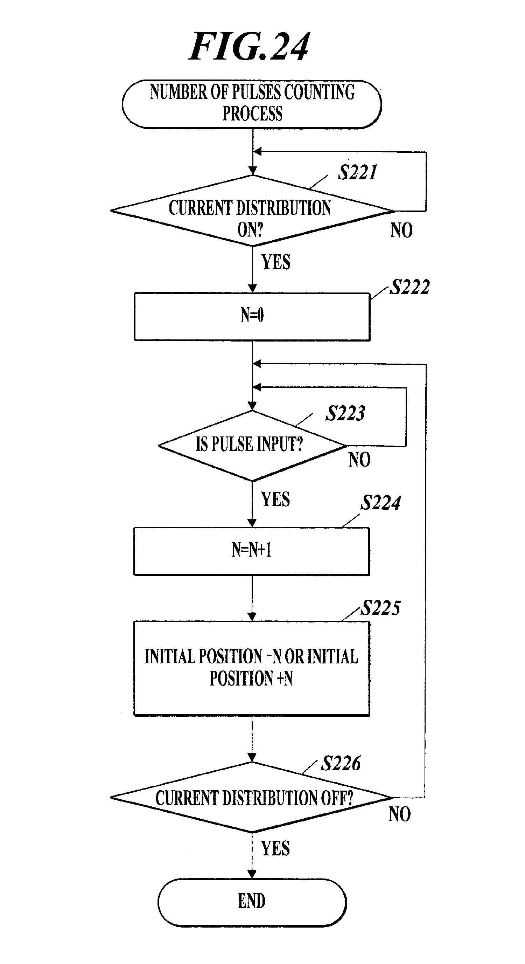

When the motor 202 is activated, the control unit 204 counts the number of pulses in the pulse signal and calculates the rotation amount of the motor 202 and the rotational position of the motor 202 based on the pulse signal which is input from the ripple extraction device 203. More in particular, the control unit 204 executes the process shown in FIG. 24 to count the number of pulses in the pulse signal and calculate the rotation amount of the motor 202 and the rotational position of the motor 202.

The process shown in FIG. 24 will be described in detail.

The control unit 204 monitors the voltage data that is input from the A/D converter 207 and compares the voltage data to a predetermined threshold (step S221). When the control unit 204 activates the motor 202 as described above (step S213), current is distributed to the motor 202; therefore, the control unit 204 determines that the voltage data exceeded the predetermined threshold and detects the power distribution to and the activation of the motor 202 (step S221: YES). Then, the control unit 204 reads the initial position data 215A from the storage unit 205, and the process of the control unit 204 moves on to step S222.

When current is distributed to the motor 202, the control unit 204 counts the number of pulses in the pulse signal which is output by the ripple extraction device 203 and calculates the rotation amount and the rotational position of the motor 202 (steps S222, S223, S224, S225). In particular, first, the control unit 204 resets the count value N to 0 (step S222). Thereafter, the control unit 204 updates the count value N by adding 1 to the count value N every time a pulse of the pulse signal which is output by the ripple extraction device 203 is input (step S223: YES) (step S224) and adds the updated count value N to the value of the initial position data 215A which is read or subtracts the updated count value N from the value of the initial position data 215A which is read (step S225) . The control unit 204 decides the arithmetic in step S225 according to the direction decided in step S211. For example, if the rotation direction decided in step S211 is the normal rotation, the control unit 204 performs the addition in step S225, and if the rotation direction decided in step S211 is the reverse rotation, the control unit 204 performs the subtraction in step S225. Naturally, the relationship of the rotation direction and the arithmetic may be the other way around.

The count value N which is updated in step S224 is the number of pulses counted by the control unit 204. The value obtained by multiplying the number of pulses that is counted by the control unit 204 (the count value N) by a predetermined constant number corresponds to the rotation amount of the motor 202 and the movement amount of the moveable unit. Therefore, the process of the control unit 204 counting the number of pulses (the count value N) (step S221 to step S226) corresponds to the process of the control unit 204 calculating the rotation amount of the motor 202 and the movement amount of the moveable unit. Moreover, the difference or the sum obtained in step S225 indicates the rotational position of the motor 202 (the rotation amount of the motor 302 to the rotational position from the original position) and also indicates the position of the moveable unit (the movement amount of the moveable unit to the position from the original position).

The control unit 204 repeats the process of step S223 to step S226 until cutoff of the current in the motor 202 is detected (step S226: No). In particular, after the process of step S225, the control unit 204 compares the voltage data that is input from the A/D converter 207 to a predetermined threshold (step S226). Then, if the current to the motor 202 is not cutoff, the control unit 204 determines that the voltage data exceeds the predetermined threshold (step S226: No) and the process of the control unit 204 returns to step S223. Thereafter, the control unit 204 performs the process of step S223 to step S225 again.

If a predetermined condition is fulfilled while the control unit 204 is executing the process shown in FIG. 24, the control unit 204 outputs the stopping order to the motor driver 206. Then, the motor driver 206 which received the stopping order cuts off power distribution to the motor 202 and the motor 202 stops. A predetermined condition includes, for example, a user turning on the stop switch, a predetermined condition being fulfilled in a process executed by the control unit 204 (for example, a sequence process) and the difference or the sum obtained in the above step S225 being a predetermined value.

When the control unit 204 outputs the stopping order to the motor driver 206, the current to the motor 202 is cutoff by the motor driver 206. Therefore, the control unit 204 determines that the voltage data that is input from the A/D converter 307 is smaller than the predetermined threshold (step S226: Yes), and the control unit 204 ends the process shown in FIG. 24.

Then, after the process shown in FIG. 24 has ended, the control unit 204 writes the difference or the sum obtained in the last step S225 when repeating the process of step S223 to step S226 shown in FIG. 24 in the storage unit 205. In particular, the control unit 204 rewrites the initial position data 215A stored in the storage unit 205 with the sum or the difference obtained in step S225.

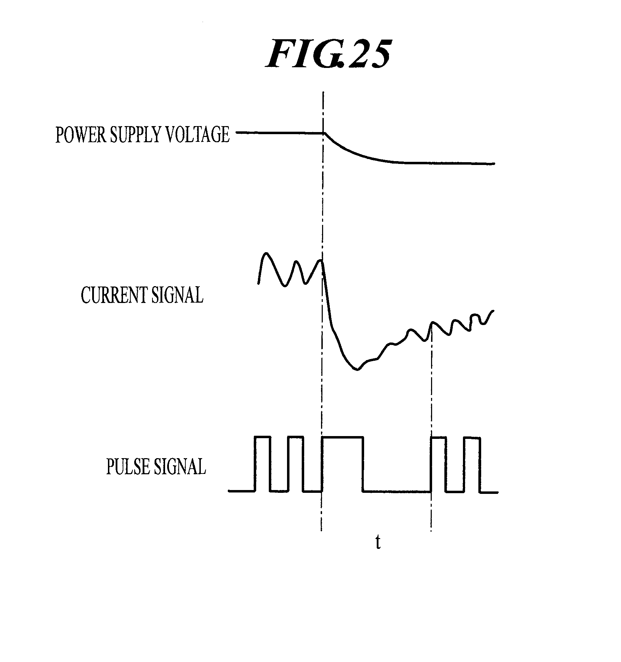

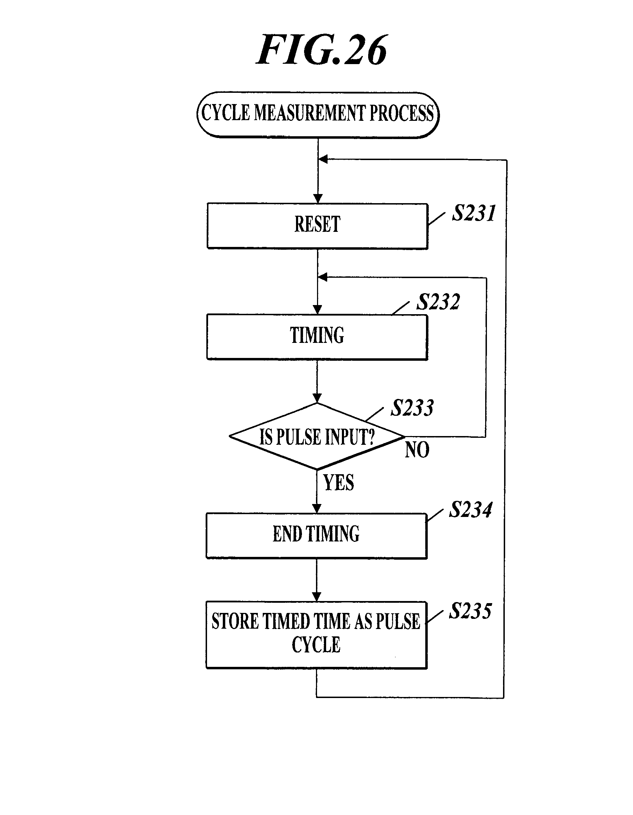

If various external causes (for example, cranking at the time of engine start in a vehicle that is provided with the motor 202) occur while the motor 202 is running, the power supply voltage of the motor 202 varies drastically as shown in FIG. 25. If the power supply voltage of the motor 202 varies drastically, the current value of the motor 202 also varies drastically. When the current value of the motor 202 varies drastically, the ripple extraction device 203 cannot extract the ripple component because the amplitude of the ripple component included in the current signal is reduced. During the period where the amplitude of the ripple component is reduced, the pulse cycles in the pulse signal that is output by the ripple extraction device 203 are elongated and the number of pulses is reduced during this period. In view of this, the control unit 204 performs the following process (see FIGS. 26 to 29) to complement the number of pulses in the period where the power source voltage of the motor 202 varies drastically.

While the motor 202 is running, the control unit 204 measured the pulse cycles in the pulse signal. In particular, the control unit 204 sequentially measures the pulse cycles, each pulse being measured between the rising of a pulse and the rising of the next pulse, by executing the process shown in FIG. 26 and sequentially stores the measured pulse cycles in the RAM 204 or the storage unit 205.

First, the control unit 204 resets the timed time to 0 (step S231) . Next, the control unit 204 starts timing and continues to time until a pulse in the pulse signal that is output from the ripple extraction device 203 rises (step S232, step S233: No). Then, if the control unit 204 detects the rising of a pulse in the pulse signal that is output from the ripple extraction device 203 (step S233: Yes), the control unit 204 stops the timing (step S234) and stores the timed time in the RAM 204b and/or the storage unit 205 (step S235). Then, the control unit 204 resets the timed time to 0 again (step S231). By the control unit 204 repeating the above process of step S231 to step S235, the timed times are sequentially stored in the RAM 204b and/or the storage unit 205. The data column of the timed times written in the RAM 204b and or the storage unit 205 is the data column of the pulse cycles of the pulses in the pulse signal that is output from the ripple extraction device 203. The inverse number of each pulse cycle indicates the rotation speed of the motor 202 and also indicates the speed of the moveable unit which is driven by the motor 202. Therefore, the process of the control unit 204 measuring the pulse cycles of the pulses, pulse by pulse (step S231 to step S235) corresponds to the process of obtaining the rotation speed of the motor 202 and the speed of the moveable unit, pulse by pulse.

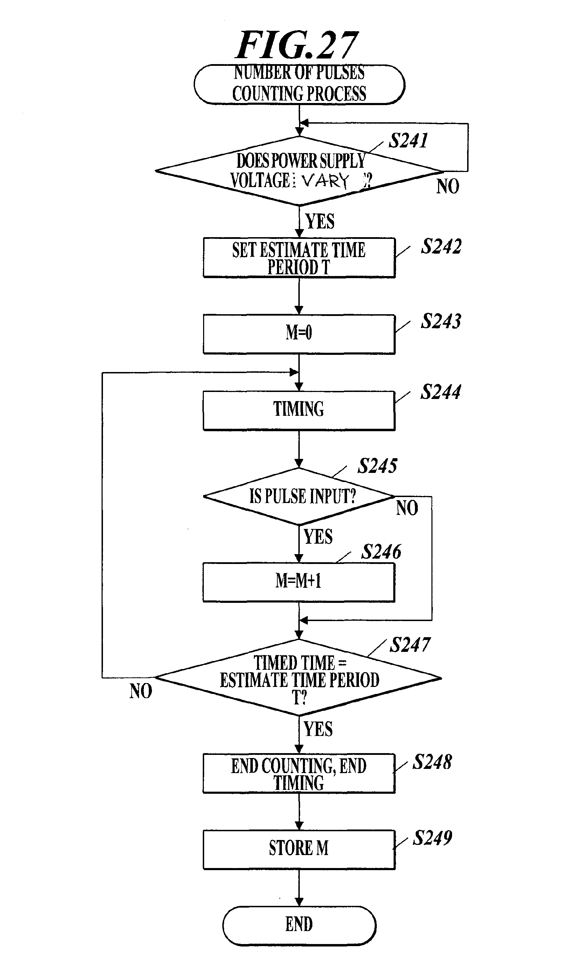

If the power supply voltage of the motor 202 varies drastically while the motor 202 is running as shown in FIG. 25, the control unit 204 counts the number of pulses in the pulse signal during the period the power supply voltage of the motor 202 varies. In particular, if the power supply voltage of the motor 202 varies drastically, the control unit 204 counts the number of pulses by executing the process shown in FIG. 27.

The control unit 204 monitors the voltage data which is input from the A/D converter 207 and compares the voltage data to a predetermined threshold (step S241). If the power supply voltage of the motor 202 varies drastically, the voltage data becomes smaller than the threshold; therefore, the control unit 204 detects the voltage data being smaller than the threshold (step S241: Yes).

Next, the control unit 204 sets the estimate period t (step S242) . The estimate period t is a time period that is set in advance and is programed in the program 205Z. The estimate period t indicates the period in which the power supply voltage of the motor 202 varies (see FIG. 25). For example, the estimate period t has been studied by experimentations and the like in advance. Here, a look-up table or a function expressing the relationship between the voltage variation range and the time may be stored in the storage unit 205 in advance. The control unit 204 may detect the voltage variation range based on the voltage data of the A/D converter 207, and the estimate period t may be obtained by applying the detected voltage variation range to the look-up table or the function.

Next the control unit 204 resets the count value M to 0 (step S243).

Further, the control unit 204 resets the timed time to 0 at the same time the count value M is reset and starts timing (step S244) and continues the timing until the timed time reaches the estimate period t (step S247: NO). Here, the control unit 204 performs timing of the process shown in FIG. 27 in parallel with the measuring of pulse cycles of the process shown in FIG. 26.

During the timing, the control unit 204 updates the count value M by adding 1 to the count value M every time a pulse of the pulse signal which is output by the ripple extraction device 203 is input (step S245: Yes) (step S246). Here, the control unit 204 performs the counting of the count value M of the process shown in FIG. 27 in parallel with the counting process of the number of pulses (count value N) of FIG. 24. Further, the control unit 204 performs the timing of the process shown in FIG. 27 in parallel with the measuring process of pulse cycles shown in FIG. 26.

If the timed time reaches the estimate period t, the control unit 204 ends the timing and ends the counting of the count value M (step S248) . Next, the control unit 204 writes the count value M in the RAM 204b and/or the storage unit 205 (step S249) . The count value M is the number of pulses in the period (the estimate period t) in which the power supply voltage of the motor 202 varies. Here, because the value obtained by multiplying the number of pulses (the count value M) counted by the control unit 204 by a predetermined constant number corresponds to the rotation amount of the motor 202 and the movement amount of the moveable unit, the process of the control unit 204 counting the number of pulses (the count value M) in the estimate period t (step S241 to step S249) corresponds to the process of the control unit 204 calculating the rotation amount of the motor 202 and the movement amount of the moveable unit in the estimate period t.

Then, the control unit 204 writes the count value M and ends the process shown in FIG. 27.

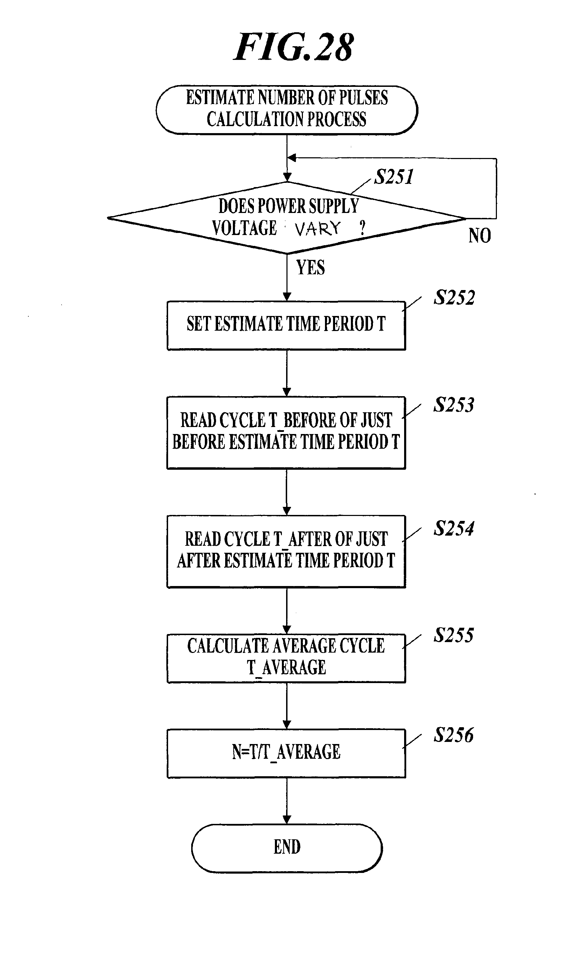

If the power supply voltage of the motor 202 varies drastically while the motor 202 is running as shown in FIG. 25, the control unit 204 estimates the number of pulses for the case where the power supply voltage of the motor 202 supposedly did not vary in the time period (the estimate period t) in which the power supply voltage of the motor 202 varies. In particular, the control unit 204 estimates the number of pulses by executing the process shown in FIG. 28.

The control unit 204 monitors the voltage data which is input from the A/D converter 207 and compares the voltage data to a predetermined threshold (step S251). If the power source voltage of the motor 202 varies drastically, the voltage data becomes smaller than the threshold; therefore, the control unit 204 detects the drastic variation in the voltage data (step S251: Yes).

Next, the control unit 204 sets the estimate period t (step S252). The estimate period t set in step S252 is the same as the estimate period set in step S242.

Next, among the pulse cycles of individual pulses stored in the storage unit 205 or the RAM 204b (see FIG. 26), the control unit 204 reads the pulse cycle T_before of one pulse or a plurality of pulses just before the variation in the power supply voltage of the motor 202 detected by the A/D converter 207 is detected (just before the estimate period t) (step S253) . The value obtained by multiplying the inverse number of the pulse cycle T_before by a predetermine constant number corresponds to the rotation speed of the motor 202 just before the estimate period and also corresponds to the speed of the moveable unit just before the estimate period t. Therefore, the process of the control unit 204 reading the pulse cycle T_before (step S253) corresponds to the process of the control unit 204 reading the rotation speed of the motor 202 and the speed of the moveable unit in the straight line of the estimate period t.

Next, among the pulse cycles of individual pulses stored in the storage unit 205 or the RAM 204b (see FIG. 26), the control unit 24 reads the pulse (s) cycle T_after of one pulse or a plurality of pulses just after the estimate period t passes since the power supply voltage of the motor 202 varied (step S254). The value obtained by multiplying the inverse number of the pulse cycle (s) T_after by a predetermined constant number corresponds to the rotation speed of the motor 202 just after the estimate period t and also corresponds to the speed of the moveable unit just after the estimate period t. Therefore, the process of the control unit 204 reading the pulse cycle(s) T_after (step S254) corresponds to the process of the control unit 204 reading the rotation speed of the motor 202 and the speed of the moveable unit just after the estimate period t. Here, if the estimate period t has not passed since the power source voltage of the motor 202 varied, the control unit 204 waits until the estimate period t passes to read the pulse cycle (s) T_after of one pulse or a plurality of pulses just after the estimate period t has elapsed.

Next, the control unit 204 calculates the average cycle T_average of the pulse cycle (s) T_before of one pulse or a plurality of pulses which is read in step S253 and the pulse cycle(s) T_after of one pulse or a plurality of pulses which is read in step S254 (step S255) . Here, the value obtained by multiplying the inverse number of the average cycle T_average by a predetermined constant number corresponds to the average rotation speed of the motor 202 during the estimate period t and also corresponds to the average speed of the moveable unit during the estimate period t. Therefore, the process of the control unit 204 calculating the average cycle T_average (step S255) corresponds to the process of the control unit 204 calculating the average rotation speed of the motor 202 and the average speed of the moveable unit during the estimate period t.

Next, the control unit 204 calculates the quotient n which is obtained by dividing the estimate period t by the average cycle T_average (step S256). The quotient n is an estimate number of pulses for the case where the power supply voltage of the motor 202 supposedly does not vary during the period in which the power supply voltage of the motor 202 varies (the estimate period t). Hereinafter, the quotient n is referred to as the estimate number of pulses n.

Here, because the value obtained by multiplying the inverse number of the average cycle T_average by a predetermine constant number corresponds to the average rotation speed of the motor 202 and the average speed of the moveable unit during the estimate period t, the process of the control unit 204 obtaining the quotient by dividing the estimate period t by the average cycle T_averate (step S256) corresponds to the process of the control unit 204 obtaining the product by multiplying the estimate period t by the average rotation speed of the motor 202 or the average speed of the moveable unit. The product is the estimate rotation amount of the motor 202 or the estimate movement amount of the moveable unit for the case where the power supply voltage of the motor 202 supposedly does not vary during the period (the estimate period t) in which the power supply voltage of the motor 202 varies.

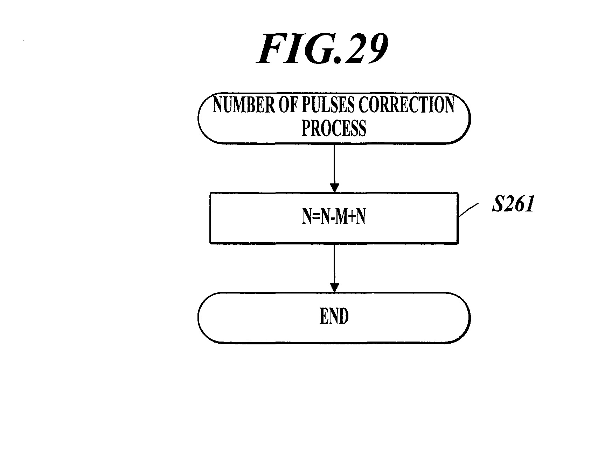

After calculating the estimate number of pulses n, the control unit 204 ends the process shown in FIG. 29.

When the estimate number of pulses n is obtained in the process shown in FIG. 28, the control unit 204 corrects the count value N (the number of pulses) which is being counted in the process shown in FIG. 24, which is running, on the basis of the count value M (the number of pulses in the estimate period t) that is counted in the process shown in FIG. 27 and the estimate number of pulses n obtained in the process shown in FIG. 28. In particular, the control unit 204 estimates the number of pulses by executing the process shown in FIG. 29. That is, the control unit 204 subtracts the count value M from the count value N which is being counted, and adds the estimate number of pulses n to the above obtained difference. Then, the control unit 204 updates the count value N which is being counted to the value of after the addition and subtraction (step S261) . As described above, the count value N is updated based on the count value M and the estimate number of pulses n. Then, the control unit 204 which is executing the process shown in FIG. 24 updates the count value N by adding 1 to the corrected count value N in the first step S224 after the process shown in FIG. 29 ended.

Here, the value obtained by multiplying the count value N (the number of pulses) that is updated by the control unit 204 by a predetermined constant number corresponds to the updated rotation amount of the motor 202 and the updated movement amount of the moveable unit. Therefore, the process of the control unit 204 subtracting the count value M from the count value N (the number of pulses) and adding the estimate number of pulses n to the obtained difference (step S261) corresponds to the control unit 204 subtracting the rotation amount of the motor 202 in the estimate period t (corresponding to the count value M) from the rotation amount of the motor 202 which is being calculated (corresponding to the count value N) and adding the product obtained by multiplying the estimate period t by the average rotation speed of the motor 202 (corresponding to the estimate number of pulses n) to the above obtained difference. Further, the process of the control unit 204 subtracting the count value M from the count value N (the number of pulses) and adding the estimate number of pulses n to the obtained difference (step S261) corresponds to the process of the control unit 204 subtracting the movement amount of the moveable unit in the estimate period t (corresponding to the count value M) from the movement amount of the moveable unit which is being calculated (corresponding to the count value N) and adding the product obtained by multiplying the estimate period t by the average rotation speed of the moveable unit (corresponding to the estimate number of pulses n) to the obtained difference.

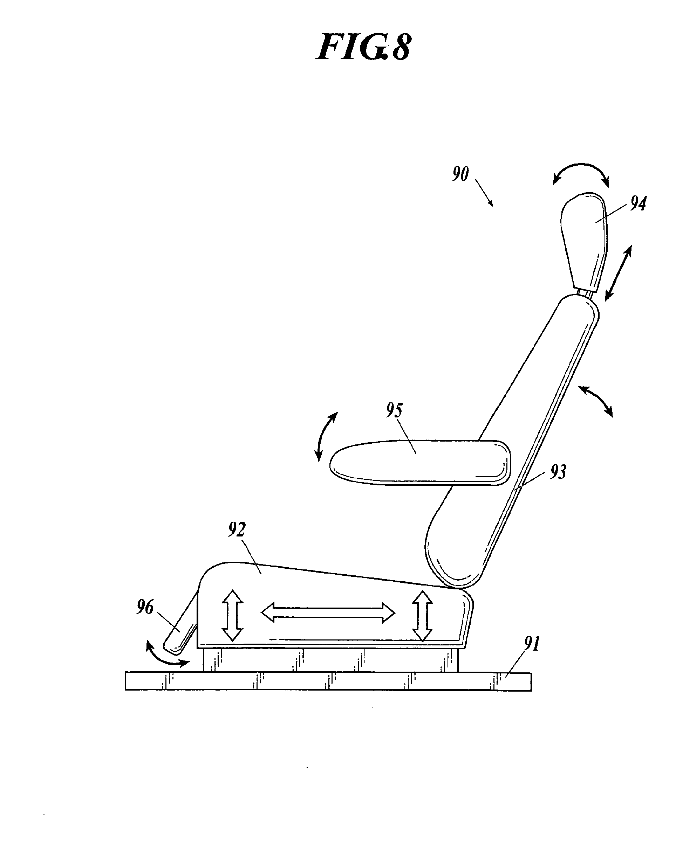

The above described is the operation of the motor control apparatus 201. The motor control apparatus 201 shown in FIG. 22 is used for a vehicle seat apparatus, for example. Such vehicle seat apparatus includes the motor control apparatus 201 shown in FIG. 22 and the seat main body 90 shown in FIG. 8, and the moveable units of the seat main body 90 are driven by the motors 202. Since the seat main body 90 is described in the description of the first embodiment, the description of the seat main body 90 is omitted. The motors 202 of the third embodiment drive the moveable units which are driven by the motors 2 in the first embodiment instead of the motors 2.

The embodiment of the present invention has following advantages.
(1) In a conventional technique (for example, JP 2003-9585), because the cut-off frequency of the switched-capacitor filter is set by a feedback control, there is a possibility that the ripple component cannot be extracted accurately even by the switched-capacitor filter due to setting of the cut-off frequency being late if the frequency of each component in the current signal of the motor varies transiently or drastically. Especially, if the power supply voltage of the motor varies due to various external causes, the current value of the motor also varies and therefore, the amplitude of the ripple component included in the current signal of the motor becomes small when the current value of the motor varies. Thus, the ripple component is not extracted accurately by the switched-capacitor filter that comes after. Thus, the counter cannot accurately count the number of pulses and the rotation amount of the motor and the movement amount of the moveable unit cannot be measured accurately. In contrary, in the third embodiment of the present invention, even in a case where the ripple extraction device 203 cannot accurately extract the pulse component during the estimate period t in which it is assumed that the power source voltage of the motor 20 varies, the control unit 204 divides the estimate period t by the average value of the pulse cycles just before and just after the estimate period t to calculate the number of pulses (the quotient n) in the estimate period t (see FIG. 28). Further, the control unit 204 adds the estimate number of pulses (the quotient n) to the number of pulses (the count value N) based on the pulse signal which is output from the ripple extraction device 203 to correct the number of pulses (see FIG. 29). Thereby, the accurate number of pulses is obtained, and the rotation amount obtained by the control unit 204 accurately indicates the actual rotation amount of the motor 202.
(2) The advantages (1) to (9) described in the description of the first embodiment can also be obtained.

The embodiment to which the present invention is applicable is not limited to the above described embodiment, and arbitrary modifications can be made to the above described embodiment within the scope of the present invention. Hereinafter, several embodiments will be described. The following embodiments may be combined to the extent possible.

### [Modification example 1 of the third embodiment]

In the above step S222, the control unit 204 may set the count value N to the initial position data 215A and not reset the count value N to 0. In such case, the process of step S225 is omitted. Further, in step S224, the control unit 204 updates the count value N by adding 1 to the count value N or subtracting 1 from the count value N every time a pulse of the pulse signal which is output by the ripple extraction device 203 is input. The control unit 204 decides the arithmetic in step S224 according to the direction decided in step S211. For example, if the rotation direction decided in step S211 is the normal rotation, the control unit 204 performs the addition in step S224, and if the rotation direction decided in step S211 is the reverse rotation, the control unit 204 performs the subtraction in step S224 . Naturally, the relationship between the rotation direction and the arithmetic may be the other way around.

The count value N which is updated in step S224 indicates the rotational position of the motor 202 and also indicates the distance from the original position, the original position being the reference.

### [Modification example 2 of the third embodiment]

The ripple extraction device 203 is an example and is not limited to the circuit of the above embodiment. For example, the filter 40 and the differential amplifier 50 may be omitted. In such case, in order to accurately extract the ripple component even when the frequency of the ripple component changes, it is preferred that the switched-capacitor filter is provided after the band-pass filter 30 and before the amplifier 60. The cut-off frequency of the switched-capacitor filter is variable, and the switched-capacitor filter attenuates the low frequency component and lets the ripple component pass even in a case where the frequencies of the ripple component and the low frequency component changes.

### [Modification example 3 of the third embodiment]

Similarly to the modification example 1 of the first embodiment, the low cut-off frequency fc1 of the filter 40 may be set higher than the frequency of the ripple component (for example, the frequency at normal temperature).

### [Modification example 4 of the third embodiment]

Similarly to the modification example 2, the modification example 3 or the modification example 4 of the first embodiment, the filter 40 may be a low-pass filter, a high-pass filter or a band-stop filter.

### [Modification example 5 of the third embodiment]

Similarly to the modification example 5 of the first embodiment, one or both of the high-pass filter 20 and the band-pass filter 30 may be omitted.

### [Modification example 6 of the third embodiment]

Similarly to the modification example 6 of the first embodiment, the motor control apparatus 201 may be embedded in the power door-mirror apparatus or the power window apparatus.

### [Modification example 7 of the third embodiment]

Similarly to the modification example 7 of the first embodiment, the filter 40 may be a filter utilizing an operational amplifier (for example, a negative feedback type low-pass filter, a positive feedback type low-pass filter, a multiple negative feedback type band-pass filter, a multiple positive feedback type band-pass filter).

### [Notes on the third embodiment]

As can be understood from the above descriptions regarding the third embodiment, disclosure of various technical ideas, in addition to the inventions described in the following notes, are included in the descriptions of the third embodiment.

### Note 1

A motor control apparatus including:
a motor which generates cyclic ripples in a current signal when activated,
a ripple extraction device which extracts a ripple component from the current signal of the motor and outputs a pulse signal which is formed by converting the ripple component into pulses,
a voltage detection unit which detects a voltage of the motor, and
a control unit to which the pulse signal is input and which controls the motor, and
the control unit executes
a first process of counting the number of pulses in the pulse signal,
a second process of measuring pulse cycles in the pulse signal, for individual pulses in the pulse signal, and sequentially storing the measured pulse cycles,
a third process of calculating an average cycle of pulse cycle(s) of one pulse or a plurality of pulses just before variation in the voltage detected by the voltage detection unit is detected among the pulse cycles stored in the second process and pulse cycle (s) of one pulse or a plurality of pulses after a predetermined period elapsed since variation in the voltage detected by the voltage detection unit is detected among the pulse cycles stored in the second process, when variation is detected in the voltage which is detected by the voltage detection unit, and
a fourth process of calculating a quotient which is obtained by dividing the predetermined period by the average cycle calculated in the third process.

### Note 2

The motor control apparatus described in note 1 wherein the control unit further executes
a fifth process of counting the number of pulses in the pulse signal in the predetermined period when variation is detected in the voltage which is detected by the voltage detection unit, and
a sixth process of subtracting the number of pulses counted in the fifth process from the number of pulses counted in the first process and adding the quotient calculated in the fourth process to the obtained difference.

### Note 3

The motor control apparatus described in note 2 wherein the control unit further executes the seventh process of updating the number of pulses counted in the first process to the value obtained by the addition and the subtraction in the sixth process.

### Note 4

A motor control apparatus including
a motor which generates cyclic ripples in a current signal when activated,
a ripple extraction device which extracts a ripple component from the current signal of the motor and outputs a pulse signal which is formed by converting the ripple component into pulses,
a voltage detection unit which detects a voltage of the motor, and
a control unit to which the pulse signal is input and which controls the motor, and
the control unit executes
a first process of calculating a rotation amount of the motor by counting the number of pulses in the pulse signal,
a second process of calculating rotation speed of the motor for individual pulses in the pulse signal by measuring the pulse cycles in the pulse signal for the individual pulses in the pulse signal and sequentially storing the calculated rotation speeds,
the third process of calculating an average rotation speed of the rotation speeds of one pulse or a plurality of pulses just before variation in the voltage which is detected by the voltage detection unit is detected among the rotation speeds stored in the second process and the rotation speeds of one pulse or a plurality of pulses after a predetermined period elapsed since variation in the voltage which is detected by the voltage detection unit is detected among the pulse cycles stored in the second process, when the variation is detected in the voltage which is detected by the voltage detection unit, and
a fourth process of calculating a product which is obtained by multiplying the predetermined period by the average rotation speed calculated in the third process.

### Note 5

The motor control apparatus described in note 4 wherein the control unit further executes
a fifth process of calculating a rotation amount of the motor in the predetermined period by counting the number of pulses in the pulse signal in the predetermined period, when the variation is detected in the voltage which is detected by the voltage detection unit, and
a sixth process of subtracting the rotation amount calculated in the fifth process from the rotation amount calculated in the first process and adding the product calculated in the fourth process to the obtained difference.

### Note 6

The motor control apparatus described in note 5 wherein the control unit further executed a seventh process of updating the rotation amount calculated in the first process to the value obtained by the addition and the subtraction in the sixth process.

### (a) Advantages obtained in the inventions described in notes 1 and 4

Even if the pulse component cannot be extracted accurately by the ripple extraction device in the predetermined period in which the power supply voltage of the motor varies, the control unit divides the predetermined period by the average value of the pulse cycles or the rotation speeds of just before and just after the predetermined period to obtain the quotient. This quotient indicates the number of pulses or the motor rotation amount in the predetermined period for the case if the ripple component can be extracted by the ripple extraction device. Therefore, the number of pulses counted in the first process or the rotation amount is complemented by the number of pulses in the ripple component which is not extracted or the rotation amount based thereon. Therefore, the accurate number of pulses or the accurate rotation amount can be obtained.

Further, because the ripple extraction device is not a closed loop circuit such as a feedback control circuit, the ripple component is extracted accurately by the ripple extraction device even if the frequency of each component in the current signal of the motor changes transiently or drastically.

### [Fourth embodiment]

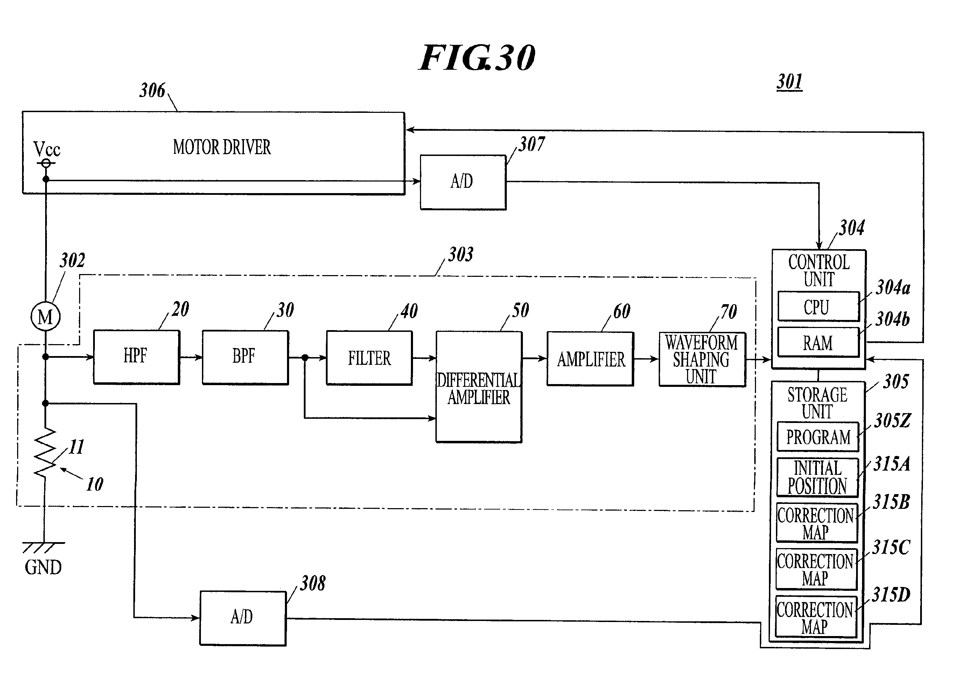

FIG. 30 is a block diagram of the motor control apparatus 301.

The motor control apparatus 301 includes a motor 302, a ripple extraction device 303, a control unit 304, a storage unit 305, a motor drive r 306, an A/D converter 307, an A/D converter 308 and such like.

The motor 302 is a direct current motor. When current flows in to the motor 302, the motor 302 rotates and generates cyclical ripples in the current. The current signal of the motor 302 is similar to the current signal of the motor 2 in the first embodiment (see FIGS. 2 and 3).

The ripple extraction device 303 extracts the ripple component from the current signal of the motor 302, converts the ripple component into pulses and outputs the pulse signal which is formed by the ripple component being converted into pulses to the control unit 304.

As shown in FIG. 30, the ripple extraction device 303 has the configuration similar to that of the ripple extraction device 3 in the first embodiment (see FIG. 1). That is, the ripple extraction device 303 includes a current-voltage converter 10, a high-pass filter 20, a band-pass filter 30, a filter 40, a differential amplifier 50, an amplifier 60 and a waveform shaping unit 70. The current-voltage converter 10, the high-pass filter 20, the band-pass filter 30, the filter 40, the differential amplifier 50, the amplifier 60 and the waveform shaping unit 70 of the ripple extraction device 303 are respectively provided in a similar manner as the current-voltage converter 10, the high-pass filter 20, the band-pass filter 30, the filter 40, the differential amplifier 50, the amplifier 60 and the waveform shaping unit 70 of the ripple extraction device 3 in the first embodiment (see FIGS. 4 to 6, 7A, 7B, 7C and 9 to 10).

The motor drive 306 supplies power to the motor 302 in compliance with the order from the control unit 304 and drives the motor 302. The motor driver 306 is provided in a similar manner as the motor driver 6 in the first embodiment.

The A/D converter 307 is a voltage detection unit which detects the power supply voltage of the motor 302 and outputs the power supply voltage to the control unit 304. The A/D converter 308 is a current detection unit which detects the current value of the motor 302 and output the current value to the control unit 304. The motor drivers 307 and 308 are respectively provided in a similar manner as the A/D converters 107A and 108A in the second embodiment.

The control unit 304 is a computer including a CPU 304a, a RAM 304b and such like. The CPU 304a performs various processes such as numeric calculation, information processing, device controlling and the like. The RAM 304b provides the CPU 304a with a working region as a temporary storage region. In the control unit 304, the pulse signal which is output by the waveform shaping unit 70 is input.

The storage unit 305 is connected with the control unit 304. The storage unit 305 is a readable and writable storage medium such as a non-volatile memory and a hard disk. The storage unit 305 may be constituted of one storage medium or may be a combination of a plurality of storage mediums.

In the storage unit 305, the initial position data 315A is stored. The initial position data 315A indicates the initial rotational position of the motor 302 before the motor 302 starts running and the initial position of the moveable unit which is to be driven by the motor 302. In particular, the initial position data 315A is the number of pulses in the pulse signal when the motor 302 rotates to the initial rotational position from a predetermined original position. The value obtained by multiplying the number of pulses by a predetermined constant number is the rotation amount of the motor 302 when the motor 302 rotated to the initial rotational position from the predetermined original position and indicates the initial operational position of the motor 302 before the motor 302 starts running. The initial position data 315A is a default value which is set in advance or is a value written at the previous running of the motor 302. If the initial rotational position of the motor 302 is the original position, the initial position data 315A is 0.

In the storage unit 305, the program 305Z which can be read by the control unit 304 is stored. The control unit 304 reads the program 305Z and performs processes in compliance with the program 305Z, and also, realizes various types of functions according to the program 305Z. Here, the storage unit 305 may include a ROM, and the program 305Z may be stored in the ROM.

In the storage unit 305, the correction map 315B and the correction map 315C which show relationship between input values and output value are stored.

The correction map 315B and the correction map 315C are correction look-up tables or correction functions. A correction look-up table is a data table in which the data column of input values and the data column of output values are associated to each other. A correction function is a formula which expresses the relationship between input values and output values in a formula.

The correction map 315B is a single input correction map (a single input look-up table or a single input function) in which one input value is input. The correction map 315C is a multiple input correction map (a multiple input look-up table or a multiple input function) in which two input values are to be input.

As for the input value of the correction map 315B, the pulse cycle in the pulse signal which is output by the ripple extraction device 303 just before the current cutoff is detected in the motor 302 is applied. Here, the value obtained by multiplying the inverse number of the pulse cycle in the pulse signal which is output by the ripple extraction device 303 by a predetermined constant number corresponds to the rotation speed of the motor 302 and also corresponds to the speed of the moveable unit which is driven by the motor 302. Therefore, applying the pulse cycle in the pulse signal to the input value of the correction map 315B corresponds to applying the rotation speed of the motor 302 or the speed of the moveable unit to the input value of the correction map 315B.

The output value of the correction map 315B is the stopping time which is from the time when current cutoff in the motor 302 is detected to the time when the motor 302 stops. If the correction map 315B is a function, the output value of the correction map 315B is a function of an input value where the friction coefficient or the inertia moment of the motor 302, the friction of the moveable unit or the like is the constant number. If the correction map 315B is a look-up table, the correction map 315B is a data table in which the data column applied to the input value of the function and the data column of the output values which are obtained by the application are associated to one another. As the pulse cycle to be applied to the input value of the correction map 315B decreases (the rotation speed of the motor 302 and the moving speed of the moveable unit increase), the stopping time as the output value obtained by applying of the pulse cycle increases.

As for the first input value of the correction map 315C, the pulse cycle in the pulse signal which is output by the ripple extraction device 303 just before the current cutoff in the motor 302 is detected is applied.

As for the second input value of the correction map 315C, the stopping time which is from when current is cutoff in the motor 302 to when the motor 302 stops is applied. That is, the output value of the correction map 315B is applied to the second input value of the correction map 315C.

If current is flowing in to the motor 302 between the time when the current cutoff in the motor 302 is detected and when the motor 302 stops, the output value of the correction map 315C is an estimate number of pulses in the pulse signal which is output by the ripple extraction device 303 during that time. The value obtained by multiplying the estimate number of pulses by a predetermined constant number corresponds to the rotation amount of the motor 302. Therefore, the output value of the correction map 315C is also the rotation amount of the motor 302 between the time when current cutoff is detected in the motor 302 and when the motor 302 stops. Further, because the value obtained by multiplying the estimate number of pulses by the predetermined constant number corresponds to the movement amount of the moveable unit, the output value of the correction map 315C is also the movement amount of the moveable unit during the time from when current cutoff is detected in the motor 302 to the motor 302 stops.

As the pulse cycle to be applied to the first input value of the correction map 315C decreases (the rotation speed of the motor 302 and the moving speed of the moveable unit increase), the estimate number of pulses as the output value obtained by such application (rotation amount of the motor 302 and movement amount of the moveable unit) increases. As the stopping time to be applied to the second input value of the correction map 315C becomes long, the estimate number of pulses as the output value to be obtained by such application (rotation amount of the motor 302 and movement amount of the moveable unit) increases.

Instead of the correction maps 315B and 315C be stored in the storage unit 305, the correction map 315D which shows the relationship between an input value and an output value may be stored in the storage unit 305. The correction map 315D is a single input correction map with one input value (a single input look-up table or a single input function). As for the input value of the correction map 315D, the pulse cycle in the pulse signal which is output by the ripple extraction device 303 just before current cutoff is detected in the motor 302 is applied. If current is flowing in to the motor 302 between the time when the current cutoff in the motor 302 is detected and when the motor 302 stops, the output value of the correction map 315D is an estimate number of pulses in the pulse signal which is output by the ripple extraction device 303 during that time. As the pulse cycle to be applied to the input value of the correction map 315D decreases (the rotation speed of the motor 302 and the moving speed of the moveable unit increase), the estimate number of pulses as the output value obtained by such application (the rotation amount of the motor 302 and the movement amount of the moveable unit) increase.

The correction maps 315B, 315C and 3155D are obtained through experiments and simulations in advance.

The control unit 304 functions as following units by the program 305Z.

The control unit 304 functions as an activation unit which activates the motor 302 by giving an order relating to rotation direction and the activation order to the motor driver 306.

The control unit 304 functions as a counting unit which counts the number of pulses in the output signal of the waveform shaping unit 70. The value obtained by multiplying the number of pulses counted by the counting unit by a predetermined constant number corresponds to the rotation amount of the motor 302. Therefore, the counting unit corresponds to a rotation amount calculation unit which calculates the rotation amount of the motor 302. Further, the value obtained by multiplying the number of pulses counted by the counting unit by the predetermined constant number corresponds to the movement amount of the moveable unit which is driven by the motor 302. Therefore, the counting unit corresponds to the movement amount calculation unit which calculates the movement amount of the moveable unit.

The control unit 304 functions as a pulse cycle measuring unit which measures the pulse cycle (the time period from when a pulse rises to the next pulse rises) of each pulse in the output signal of the waveform shaping unit 70. The value obtained by multiplying the inverse number of the pulse cycle measured by the control unit 304 by a predetermined constant number corresponds to the rotation speed of the motor 302 and also corresponds to the speed of the moveable unit which is driven by the motor 302. Therefore, the pulse cycle measuring unit is also a speed calculation unit which calculates the rotation speed of the motor 302 and the moving speed of the moveable unit which is driven by the motor 302.

The control unit 304 functions as an accumulation unit which sequentially stores the pulse cycles of the pulses which are measured by the pulse cycle measuring unit in the RAM 304b or the storage unit 305. Here, if the number of pulse cycle data to be accumulated in the RAM 304b or the storage unit 305 is limited, the control unit 304 deletes the oldest pulse cycle data in the RAM 304b or the storage unit 305 when recording the pulse cycle data in the RAM 304b or the storage unit 305.

The control unit 304 functions as the first monitor unit which monitors the current data input from the A/D converter 307.

The control unit 304 functions as the second monitor unit which monitors the current data input from the A/D converter 308.

The control unit 304 functions as a stopping unit which stops the motor 302 by giving the stopping order to the motor driver 306.

The control unit 304 functions as the first current cutoff detection unit which detects the current cutoff in the motor 302 if the voltage data input from the A/D converter 307 be lower than a predetermined threshold during the monitoring by the first monitor unit.

The control unit 304 functions as the second current cutoff detection unit which detects the current cutoff in the motor 302 if the current data input from the A/D converter 308 be lower than a predetermined threshold during the monitoring by the second monitor unit.

The control unit 304 functions as the number of pulses calculation unit which calculates an estimate number of pulses corresponding to the rotation amount of the motor 302 during the period from when current cutoff is detected in the motor 302 to when the motor 302 stops from the pulse cycle T_before of one pulse or the average value of the pulse cycles T_before of a plurality of pulses, the pulse(s) being the one(s) just before the detection of current cutoff in the motor 302 by one or both of the first current cutoff detection unit and the second current cutoff detection unit among the pulse cycles sequentially stored by the accumulation unit. The value obtained by multiplying the estimate number of pulses calculated by the number of pulses calculation unit by a predetermined constant number corresponds to the estimate rotation amount of the motor 302 during the time from when current cutoff is detected in the motor 302 to when the motor 302 stops. Therefore, the number of pulses calculation unit is also an estimate rotation amount calculation unit which calculates the estimate rotation amount of the motor 302 during the time from when current cutoff is detected in the motor 302 to when the motor 302 stops. Further, the value obtained by multiplying the estimate number of pulses calculated by the number of pulses calculation unit by the predetermined constant number corresponds to an estimate movement amount of the moveable unit during the time from when current cutoff is detected in the motor 302 to when the motor 302 stops. Therefore, the number of pulses calculation unit is also an estimate movement amount calculation unit which calculates the estimate movement amount of the moveable unit during the time from when current cutoff is detected in the motor 302 to when the motor 302 stops.

The control unit 304 functions as the number of pulses correction unit which adds the estimate number of pulses calculated by the number of pulses calculation unit to the number of pulses counted by the counting unit. Here, the number of pulses correction unit corresponds to a rotation amount correction unit which adds the estimate rotation amount of the motor 302 calculated by the estimate rotation amount calculation unit to the rotation amount of the motor 302 calculated by the rotation amount calculation unit. Further, the number of pulses correction unit corresponds to a movement amount correction unit which adds the estimate movement amount of the moveable unit calculated by the estimate movement amount calculation unit to the movement amount of the moveable unit calculated by the movement amount calculation unit.

The control unit 304 functions as a correction unit which subtracts the sum obtained by the number of pulses correction unit from the initial position data 315A stored in the storage unit 305 or adds the sum obtained by the number of pulses correction unit to the initial position data 315A stored in the storage unit 305. This correction unit corresponds to a rotational position correction unit which corrects the rotational position of the motor 302 and also corresponds to the position correction unit which corrects the position of the moveable unit.

The control unit 304 functions as an update unit which updates the initial position data 315A stored in the storage unit 305 to the difference or the sum obtained by the correction unit.

The flow of the process performed by the control unit 304 based on the program 305Z and the operation of the motor control apparatus 301 associated with the process performed by the control unit 304 will be described.

If a predetermined condition is fulfilled, the control unit 304 executes the activation process of the motor 302 (see FIG. 23). A predetermined condition being fulfilled means that, for example, a user turning on the activation switch, the activation sensor being turned on, and a predetermined condition being fulfilled with the process executed by the control unit 304 (for example, a sequence process). The activation process of the motor 302 performed by the control unit 304 is similar to the activation process of the motor 202 performed by the control unit 204 in the third embodiment. Therefore, the description of the activation process performed by the control unit 304 will be omitted.

While the motor 302 is running, the ripple extraction device 303 extracts (detects) the ripple component from the current signal of the motor 302 and converts the ripple component in pulses. Then, the ripple extraction device 303 outputs the pulse signal which is formed by the ripple component being converted into pulses to the control unit 304.

When the motor 302 is activated, the control unit 304 counts the number of pulses in the pulse signal, calculates the rotation amount of the motor 302 and calculates the rotational position of the motor 302 based on the pulse signal which is input from the ripple extraction device (see FIG. 24) . The counting process of the number of pulses which the control unit 304 performs (FIG. 24) is similar to the counting process of the number of pulses performed by the control unit 204 in the third embodiment. Here, in step S225, the control unit 304 adds the updated count value N to the initial position data 315A read from the storage unit 305 or subtracts the updated count value N from the initial position data 315A. In step S221, the control unit 304 may monitor the current data that is input from the A/D converter 308 and the control unit 304 may compare the current data to a predetermined threshold. In such case, the control unit 304 determines that the current data exceeded the predetermine threshold if current is distributed to the motor 302, and the control unit 304 detects the current distribution to and the activation of the motor 302 (step S221: Yes). The control unit 304 may compare the current data that is input from the A/D converter 308 to the predetermined threshold in step S226. In such case, the control unit 304 determines that the current data exceeded the predetermined threshold if current is not cutoff in the motor 302 (step S226: No), and the control unit 304 performs the process of step S223 to step S225 again.

After the process shown in FIG. 24 ends, the control unit 304 temporarily stores the difference or the sum obtained in the last step S225 in the repetition of the process of step S223 to step S226 shown in FIG. 24. Further, after the process shown in FIG. 24 is ended, the control unit 304 temporarily stores the count value N in the RAM 304b or the storage unit 305.

When the current to the motor 302 is cutoff, the motor 302 does not necessarily stop right away and the motor 302 continues to rotation by inertia force thereafter. During the period from when current is cutoff in the motor 302 to when the motor 302 stops, ripples are not generated in the current signal of the motor 302. Therefore, during the period from when current is cutoff in the motor 302 to when the motor 302 stops, the control unit 304 does not calculate the number of pulses, the rotation amount of the motor 302 and the movement amount of the moveable unit. In view of this, the control unit 304 performs the following process (see FIGS. 26, 31 and 32) to complement the number of pulses, the rotation amount of the motor 302 and the movement amount of the moveable unit during the period from when current is cutoff in the motor 302 to when the motor 302 stops.

While the motor 302 is running, the control unit 304 measures the pulse cycles in the pulse signal. In particular, the control unit 304 sequentially measures the pulse cycles of the pulses, measuring from the rising of one pulse to the rising of the next pulse for each of the pulses, and sequentially stores the calculated pulse cycles in the RAM 304 or the storage unit 305 by executing the process shown in FIG. 26. The measuring process of the pulse cycles performed by the control unit 304 (FIG. 26) is similar to the measuring process of the number of pulses performed by the control unit 204 in the third embodiment. Therefore, the description of the pulse cycle measuring process performed by the control unit 304 is omitted.

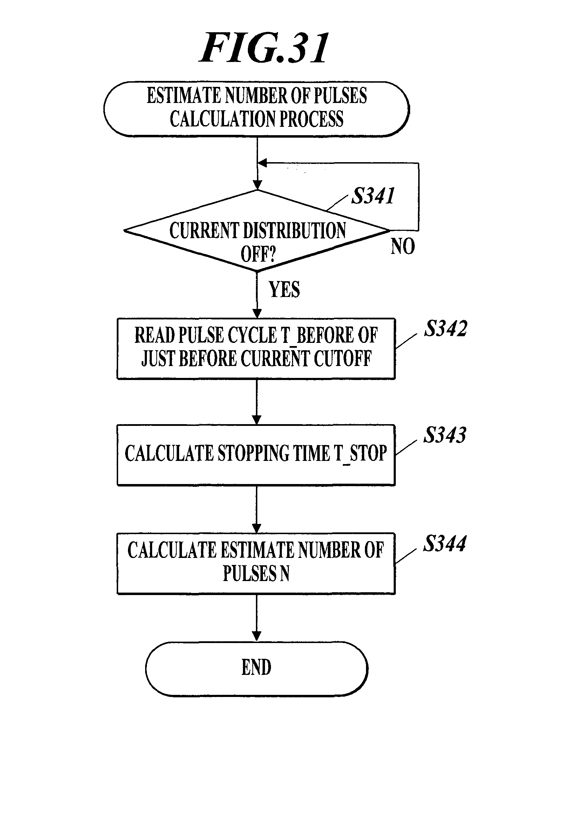

When the control unit 304 outputs the stopping order to the motor driver 306, the control unit 304 executes the process shown in FIG. 31. First, the control unit 304 monitors the voltage data that is input from the A/D converter 307 and compares the voltage data to a predetermined threshold (step S341). When the control unit 304 outputs the stopping order to the motor driver 306 as described above, the current in the motor 302 is cut off. Therefore, the control unit 304 determines that the voltage data has fallen below than the predetermined threshold and detects that the current is cutoff in the motor 302 (step S341: Yes). Here, in step S341, the control unit 304 may compare the current data that is input from the A/D converter 308 to a predetermined threshold (step S341) . In such case, the control unit 304 determines that the current data became smaller than the predetermined threshold if the current in the motor 302 is cutoff (step S341: Yes) and detects the current cutoff in the motor 302.

Next, the control unit 304 reads the pulse cycle (s) T_before of one pulse or a plurality of pulses just before the current cutoff is detected in the motor 302 (just before step S341: Yes and step S226: Yes) among the pulse cycles of the pulses stored in the storage unit 305 or the RAM 304 (see FIG. 26) (step S342). The value obtained by multiplying the inverse number of the pulse cycle T_before by a predetermined constant number corresponds to the rotation speed of the motor 302 just before the current cutoff is detected in the motor 302 and also corresponds to the speed of the moveable unit just before the current cutoff is detected in the motor 302. Therefore, the reading process of the pulse cycle T_before performed by the control unit 304 (step S342) correspond to the reading process of the rotation speed of the motor 302 and the speed of the moveable unit just before current is cutoff in the motor 302. Here, if the control unit 304 reads the pulse cycles T_before of a plurality of pulses, the control unit 304 calculates the average value of the pulse cycles T_before of the plurality of pulses.

Next, the control unit 304 calculates the stopping time T-stop which is the period from when the current cutoff is detected in the motor 302 to when the motor 302 stops from the average value of the pulse cycles T_before of the plurality of pulses or the pulse cycle T_before of one pulse (step S343). In particular, the control unit 304 applies the average value of the pulse cycles T_before of the plurality of pulses or the pulse cycle T_before of one pulse to the input value of the correction map 315B to obtain the corresponding output value as the stopping time T_stop (step S343).

Next, the control unit 304 calculates the estimate number of pulses n in the period from when the current cutoff is detected in the motor 302 to when the motor 302 stops from the average value of the pulse cycles T_before of the plurality of pulses or the pulse cycle T_before of one pulse and the stopping time T_stop (step S344). In particular, the control unit 304 applies the average value of the pulse cycles T_before of the plurality of pulses or the pulse cycle T_before of one pulse to the first input value of the correction map 315C and applies the stopping time T_stop that is calculated in step S343 to the second input value of the correction map 315C to obtain the corresponding output value as the estimate number of pulses n (step S344). The estimate number of pulses n is the number of pulses corresponding to the rotation amount of the motor 302 in the period from when the current cutoff is detected in the motor 302 to when the motor 302 stops. Therefore, the process of the control unit 304 calculating the estimate number of pulses n (step S344) corresponds to the process of the control unit 304 calculating the estimate rotation amount of the motor 302 and the estimate movement amount of the moveable unit. Here, the control unit 304 may apply the average value of the pulse cycles T_before of the plurality of pulses or the pulse cycle T_before of one pulse to the input value of the correction map 315D and not using the correction maps 315B and 315C to obtain the corresponding output value as the estimate number of pulses n.

After the estimate number of pulses n is calculated, the control unit 304 ends the process shown in FIG. 31.

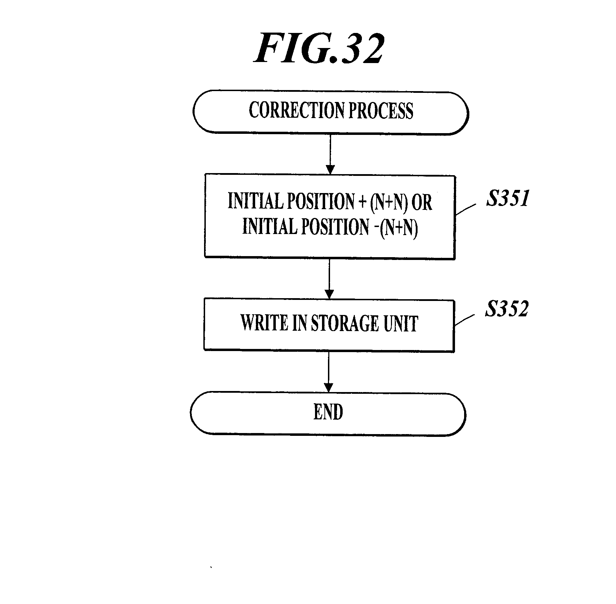

After the estimate number of pulses n is obtained in the process shown in FIG. 31, the control unit 304 corrects the rotational position (stopping position) of the motor 302 and the position (stopping position) of the moveable unit by correcting the difference or the sum obtained in the last step S225 in the repetition of the process of step S223 to step S226 shown in FIG. 24 based on the estimate number of pulses n obtained in the process shown in FIG. 31. In particular, the control unit 304 executes the process shown in FIG. 32. That is, the control unit 304 subtracts the estimate number of pulses n from the difference obtained in the last step S225 or adds the estimate number of pulses n to the sum obtained in the last step S225 (step S351). At this time, the control unit 304 decides the arithmetic in step S351 according to the direction decided in step S211. For example, if the rotation direction decided in step S211 is the normal rotation, the control unit 304 adds the estimate number of pulses n in step S351, and if the rotation direction decided in step S211 is the reverse rotation, the control unit 304 subtracts the estimate number of pulses n in step S351. Naturally, the relationship between the rotation direction and the arithmetic may be the other way around.

Next, the control unit 304 writes the value obtained by the above subtraction or addition in the storage unit 305 (step S352) . Inparticular, the control unit 304 rewrites the initial position data 315A stored in the storage unit 305 with the value obtained in step S351. Then, the control unit 304 ends the process shown in FIG. 32.

Here, the control unit 304 adds the estimate number of pulses n to the number of pulses (the count value N) obtained in the last step S224 to correct the rotation amount of the motor 302 and the movement amount of the moveable unit. In such case, the control unit 304 adds the sum of the count value N and the estimate number of pulses n to the initial position data 315A in the storage unit 305 or subtracts the sum of the count value N and the estimate number of pulses n from the initial position data 315A in the storage unit 305 in the process of step S351 shown in FIG. 32. At this time, the control unit 304 decides the arithmetic in the step S351 according to the direction decided in step S211. For example, if the rotation direction decided in step S211 is the normal rotation, the control unit 304 performs the addition in step S351, and if the rotation direction decided in step S211 is the reverse rotation, the control unit 304 performs the subtraction in step S351. Naturally, the relationship between the rotation direction and the arithmetic may be the other way around.

The above described is the operation of the motor control apparatus 301. The motor control apparatus 301 shown in FIG. 30 is used in a vehicle seat apparatus, for example. The vehicle seat apparatus includes the motor control apparatus 301 shown in FIG. 30 and the seat main body 90 shown in FIG. 8, and the moveable units in the seat main body 90 are driven by the motors 302. Since the seat main body 90 is described in the description of the first embodiment, the description of the seat main body 90 is omitted here. The motors 302 of the fourth embodiment drive the moveable units which are driven by the motors 2 in the first embodiment instead of the motors 2.

The embodiment of the present invention has the following advantages.
(1) JP 2000-250629 does not disclose how the control unit determines that a motor is not running in detail. In contrary, in the fourth embodiment of the present invention, because the control unit 304 detects the current cutoff in the motor 302 based on the voltage data detected by the A/D converter 307 or the current data detected by the A/D converter 8 (step S341: Yes), when the current is cutoff in the motor 302 is detected accurately. Further, even if the actual cutoff of current in the motor 302 is delayed from the time when the process for cutting off the current in the motor 302 is performed by the control unit 304, when the current is cutoff in the motor 302 can be detected accurately.
(2) In the technique described in JP 2000-250629, the pulse cycles of the motor (11) cannot be calculated because the current is cutoff in the motor (11) after the motor stops running. In contrary, because the control unit 304 sequentially stores the pulse cycles of the pulses before the current is cutoff in the motor 302 in the fourth embodiment (step S235), the control unit 304 can calculate the estimate number of pulses n in the period from when the current cutoff is detected in the motor 302 to when the motor 302 stops by utilizing the pulse cycle (s) just before the current cutoff is detected in the control unit 304 even after the current cutoff is detected in the motor 2 (see FIG. 31).
(3) Because the control unit 304 calculates the estimate number of pulses n in the period from when the current cutoff is detected in the motor to when the motor stops based on the pulse cycle(s) just before the detection of current cutoff in the motor (see FIG. 31), the rotation amount of the motor until the motor 302 stops and the stopping position of the motor 302 can be obtained accurately even the motor 302 rotates for a while after the current cutoff (see FIG. 32).
(4) The advantages (1) to (9) described in the description of the first embodiment can also be obtained.

The embodiment to which the present invention is applicable is not limited to the above described embodiment, and arbitrary modifications can be made to the above described embodiment within the scope of the present invention. Hereinafter, several embodiments will be described. The following embodiments may be combined to the extent possible.

### [Modification example 1 of the fourth embodiment]

In the above described embodiment, the correction map 315B is a single input correction map with one input value (a single input look-up table or a single input function). In contrary, in the modification example 1, the correction map 315B is a multiple input correction map with two input values (a multiple input look-up table or a multiple input function). In the first input value of the correction map 315B, the pulse cycle in the pulse signal which is output by the ripple extraction device 303 just before the current cutoff is detected in the motor 302 is applied. In the second input value of the correction map 315B, the current data which is input from the A/D converter 308 just before the current cutoff is detected in the motor 302 is applied. The output value of the correction map 315B is the stopping time which is from the time when the current cutoff is detected in the motor 302 to when the motor 302 stops. As the current data to be applied to the second input value of the correction map 315B becomes smaller, the stopping time as the output value obtained by such application becomes larger.

As the friction and such like applied to the motor 302 increases, the time from when the current cutout is detected in the motor 302 to when the motor 302 stops decreases and the rotation amount of the motor during that time also decreases. As the friction and such like applied to the motor 302 increases, the load on the motor 302 increases. As the load on the motor increases, the current in the motor 302 increases. In order to reflect the load applied on the motor 302 on the stopping time, the current data that is input from the A/D converter 308 just before the current cutoff is detected in the motor 302 is applied to the second input value of the correction map 315B.

In a case where the correction map 315D is used, the correction map 315D is a multiple input correction map with two input values (a multiple input look-up table or a multiple input function). As for the first input value of the correction map 315D, the pulse cycle in the pulse signal which is output by the ripple extraction device 303 just before the current cutoff is detected in the motor 302 is applied. As for the second input value of the correction map 315D, the current data which is input from the A/D converter 308 just before the current cutoff is detected in the motor 302 is applied. If current flows in the motor 302 during the time from when the current cutoff is detected in the motor 302 to when the motor 302 stops, the output value of the correction map 315D is the estimate number of pulses in the pulse signal which is output by the ripple extraction device 303 during that time. As the current data to be applied to the second input value of the correction map 315D decreases, the estimate number of pulses as the output value obtained by such application increases.

The process performed by the control unit 304 in the modification example 1 differs from the above description in the following aspects. The process performed by the control unit 304 in the modification example 1 is the same as the above description except for the following aspects.

While the motor 302 is running, the control unit 304 sequentially stores the current data that is input from the A/D converter 308 in the RAM 304b or the storage unit 305 every time a pulse in the pulse signal which is output by the ripple extraction device 303 rises. If the number of current data to be accumulated in the RAM 304b or the storage unit 305 is limited, the control unit 304 deletes the oldest current data from the RAM 304b or the storage unit 305 when recording the current data in the RAM 304b or the storage unit 305.

In the process of step S342 in FIG. 31, the control unit 304 reads the current data of one pulse or a plurality of pulses just before the current cutoff is detected in the motor 302 among the current data of the pulses stored in the storage unit 305 or the RAM 304b. Naturally, the control unit 304 also reads the pulse cycle T_before of one pulse or a plurality of pulses just before the current cutoff is detected in the motor 302 (step S342). Here, if the control unit 304 reads the current data of a plurality of pulses, the control unit 304 calculates the average value of the current data of the plurality of pulses.

In the process of step S343 in FIG. 31, the control unit 304 applies the average value of the pulse cycles t_before of the plurality of pulses or the pulse cycle T_before of one pulse to the first input value of the correction map 315B and applies the average value of the current data of the plurality of pulses or the current data of one pulse to the second input value of the correction map 315B to obtain the corresponding output value as the stopping time T_stop.

In a case where the correction map 315D is used, the control unit 304 applies the average value of the pulse cycles T_before of the plurality of pulses or the pulse cycle T_before of one pulse to the first input value of the correction map 315D and applies the average current data of the plurality of pulses or the current data of one pulse to the second input value of the correction map 315D to obtain the corresponding output value as the estimate number of pulses n, after the process of step S342 and before the process shown in FIG. 31 ends.

According to the modification example 1, even if the load, friction and such like applied to the motor 302 vary, the rotation amount and the like of the motor 302 in the period from when the current is cutoff in the motor 302 to when the motor 302 stops can be calculated accurately.

### [Modification example 2 of the fourth embodiment]

In the above described embodiment, the correction map 315B is a single input correction map with one input value (a single input look-up table or a single input function). In contrast, the correction map 315B is a multiple input correction map with three input values (a multiple input look-up table or a multiple input function) in the modification example 2. As for the first input value of the correction map 315B, the pulse cycle in the pulse signal which is output by the ripple extraction device 303 just before the current cutoff is detected in the motor 302 is applied. As for the second input value of the correction map 315B, the current data which is input from the A/D converter 308 just before the current cutoff is detected in the motor 302 is applied. As for the third input value of the correction map 315B, the voltage data which is input from the A/D converter 307 just before the current cutoff is detected in the motor 302 is applied.

The friction coefficient of the motor 302, the friction coefficient of the moveable unit and the like depend on the environmental temperature. As the environmental temperature increases, the friction coefficient of the motor 302, the friction coefficient of the moveable unit and the like decrease. Further, the environmental temperature depends on the current and the voltage of the motor 302. In order to reflect the environmental temperature on the stopping time, the current data which is input from the A/D converter 308 just before the current cutoff is detected in the motor 302 is applied to the second input value of the correction map 315B and the voltage data which is input from the A/D converter 307 just before the current cutoff is detected in the motor 302 is applied to the third input value of the correction map 315B.

In a case where the correction map 315D is to be used, the correction map 315D is a multiple input correction map with three input values (a multiple input look-up table or a multiple input function). As for the first input value of the correction map 315D, the pulse cycle in the pulse signal which is output by the ripple extraction device 303 just before the current cutoff is detected in the motor 302 is applied. As for the second input value of the correction map 315D, the current data which is input from the A/D converter 308 just before the current cutoff is detected in the motor 302 is applied. As for the third input value of the correction map 315D, the voltage data which is input from the A/D converter 307 just before the current cutoff is detected in the motor 302 is applied. The output value of the correction map 315D is the estimate number of pulses in the pulse signal which is output by the ripple extraction device 303 during the period from when the current cutoff is detected in the motor 302 to when the motor 203 stops if current flows in to the motor 302 during this period.

The process performed by the control unit 304 in the modification example 2 differs from the above description in the following aspects. The process performed by the control unit 304 in the modification example 2 is the same as the above description except for the following aspects.

While the motor 302 is running, the control unit 304 sequentially stores the current data that is input from the A/D converter 308 in the RAM 304b or the storage unit 305, current data being input every time a pulse rises in the pulse signal that is output by the ripple extraction device 303. Further, while the motor 302 is running, the control unit 304 sequentially stores the voltage data that is input from the A/D converter 308 in the RAM 304b or the storage unit 305, voltage data being input every time a pulse rises in the pulse signal that is output by the ripple extraction device 303. If the number of current data to be accumulated in the RAM 304 or the storage unit 305 is limited, the control unit 304 deletes the oldest current data from the RAM 304b or the storage unit 305 when recording the current data in the RAM 304b or the storage unit 305. The same applies in the case where the number of voltage data to be accumulated in the RAM 304b or the storage unit 305 is limited.

In the process of step S342 in FIG. 31, the control unit 304 reads the current data of one pulse or a plurality of pulses just before the current cutoff is detected in the motor 302 among the current data of the pulses stored in the storage unit 305 or the RAM 304b. The control unit 304 reads the voltage data of one pulse or a plurality of pulses just before the current cutoff is detected in the motor 302 among the voltage data of the pulses stored in the storage unit 305 or the RAM 304b. The control unit 304 also reads the pulse cycle T_before of one pulse or a plurality of pulses just before the current cutoff is detected in the motor 302 (step S342) . Here, if the control unit 304 reads the current data of a plurality of pulses, the control unit 304 calculates the average value of the current data of the plurality of number of pulses. The same applies in the case where the control unit 304 reads the voltage data of the plurality of pulses.

In the process of step S343 in FIG. 31, the control unit 304 applies the average value of the pulse cycles T_before of the plurality of pulses or the pulse cycle T_before of one pulse to the first input value of the correction map 315B. Further, the control unit 304 applies the average value of the current data of the plurality of pulses or the current data of one pulse to the second input value of the correction map 315B. Furthermore, the control unit 304 applies the average value of the voltage data of the plurality of pulses or the voltage data of one pulse to the third input value of the correction map 315B. According to the above applications, the control unit 304 obtains the output value corresponding to the applied numerical values as the stopping time T_stop.

In a case where the correction map 315D is to be used, the control unit 304 applies the average value of the pulse cycles T_before of the plurality of pulses or the pulse cycle T_before of one pulse to the first input value of the correction map 315D after the process of step S342 and before the process shown in FIG. 31 ends. Further, the control unit 304 applies the average value of the current data of the plurality of pulses or the current data of one pulse to the second input value of the correction map 315D. Furthermore, the control unit 304 applies the average value of the voltage data of the plurality of pulses or the voltage data of one pulse to the third input value of the correction map 315D. According to the above application, the control unit 304 obtains the output value corresponding to the applied numerical values as the estimate number of pulses n.

According to the modification example 2, even if the environmental temperature varies and the friction coefficient of the motor 302 and the like vary, the rotation amount of the motor 302 or the like during the period from when the current is cut off in the motor 302 to when the motor 302 stops can be calculated accurately.

### [Modification example 3 of the fourth embodiment]

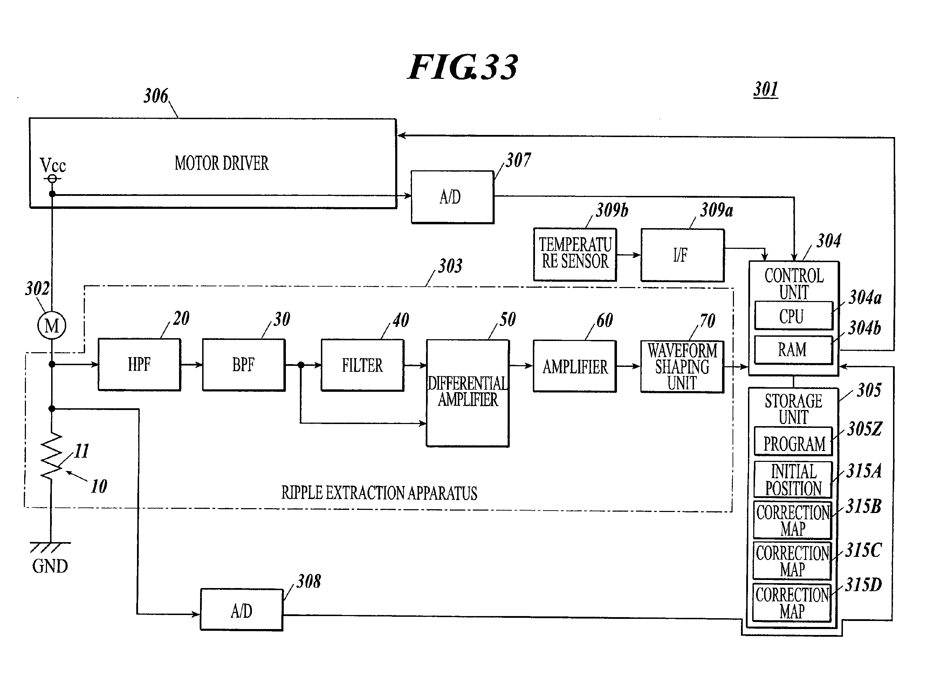

As shown in FIG. 33, the temperature sensor 309b is corrected with the control unit 304 via the interface 309a. The temperature sensor 309b detects the temperature and outputs the temperature data to the control unit 304 through the interface 309a. In the control unit 304, the temperature data output by the temperature sensor 309b is input. The temperature sensor 309b is attached to the motor 302, and the temperature sensor 309b detects the temperature of the motor 302. Alternatively, the temperature sensor 309b is provided at the periphery of the motor control apparatus 301, and the temperature sensor 309b detects the environmental temperature of the surrounding of the motor control apparatus 301. Alternatively, the temperature sensor 309b is disposed in a vehicle compartment where the seat main body 90 is attached, and the temperature sensor 309b detects the temperature inside the vehicle. Alternatively, the temperature sensor 309b is a temperature sensor which is embedded in a car air conditioner in a vehicle compartment where the seat main body 90 is attached, and the temperature sensor 309b detects the temperature inside the vehicle.

In the modification example 2, the correction map 315B is a multiple input correction map with two input values (a multiple input look-up table or a multiple input function). As for the first input value of the correction map 315B, the pulse cycle in the pulse signal that is output by the ripple extraction device 303 just before the current cutoff is detected in the motor 302 is applied. As for the second input value of the correction map 315B, the temperature data that is detected by the temperature sensor 309b before the current cutoff is detected in the motor 302 is applied. The output value of the correction map 315B is the stopping time which is from when the current cutoff is detected in the motor 302 to when the motor 302 stops. As the temperature data to be applied to the second input value of the correction map 315B increases, the stopping time as the output value obtained by such application increases.

The environmental temperature depends on the friction coefficient of the motor 302, the friction coefficient of the moveable unit and the like. As the environmental temperature increases, the friction coefficient of the motor 30s, the friction coefficient of the moveable unit and the like decreases. In order to reflect the environmental temperature on the stopping time, the temperature sensor that is input from the temperature sensor 309b just before the current cutoff is detected in the motor 302 is applied to the second input value of the correction map 315B.

In a case where the correction map 315D is to be used, the correction map 315D is a multiple input correction map with two input values (a multiple input look-up table or a multiple input function). As for the first input value of the correction map 315D, the pulse cycle in the pulse signal which is output by the ripple extraction device 303 just before the current cutoff is detected in the motor 302 is applied. As for the second input value of the correction map 315D, the temperature data which is detected by the temperature sensor 309b just before the current cutoff is detected in the motor 302 is applied. The output value of the correction map 315D is the estimate number of pulses in the pulse signal which is output by the ripple extraction device 303 during the period from when the current cutoff is detected in the motor 392 and to when the motor 302 stops if the current flows in to the motor 302 during this period. As the temperature data to be applied to the second input value of the correction map 315D increases, the estimate number of pulses as the output value obtained by such application increases.

The process performed by the control unit 304 in the modification example 3 is different from the above description in the following aspects. The process performed by the control unit 304 in the modification example 3 is the same as the above description except for the following aspects.

While the motor 302 is running, the control unit 304 sequentially stores the temperature data input from the temperature sensor 309b in the RAM 304b or the storage unit 305, temperature data being stored every time a pulses rises in the pulse signal which is output from the ripple extraction device 303. If the number of temperature data to be accumulated in the RAM 304b or the storage unit 305 is limited, the control unit 304 deletes the oldest temperature data from the RAM 304b or the storage unit 305 when recording the temperature data in the RAM 304b or the storage unit 305.

In the process of step S342 in FIG. 31, the control unit 304 reads the temperature data of one pulse or a plurality of pulses just before the current cutoff is detected in the motor 302 among the temperature data of pulses stored in the storage unit 305 or the RAM 304b. The control unit 304 also reads the pulse cycle (s) T_before of one pulse or the plurality of pulses just before the current cutoff is detected in the motor 302 (step S342). Here, if the control unit 304 reads the temperature data of a plurality of pulses, the control unit 304 calculates the average value of the temperature data of a plurality of pulses.

In the process of step S343 in FIG. 31, the control unit 304 applies the average value of the pulse cycles T_before of a plurality of pulses or the pulse cycle T_before of one pulse to the first input value of the correction map 315B and also applies the average value of the temperature data of a plurality of pulses or the temperature data of one pulse to the second input value of the correction map 315B to obtain the corresponding output value as the stopping time T_stop.

In a case where the correction map 315D is to be used, the control unit 304 applies the average value of the pulse cycles T_before of a plurality of pulses or the pulse cycle T_before of one pulse in the first input value of the correction map 315D and also applies the average value of the temperature data of a plurality of pulses or the temperature data of one pulse to the second input value of the correction map 315D after the process of step S342 and before the process shown in FIG. 31 ends to obtain the corresponding output value as the estimate number of pulses n.

According to the modification example 3, even if the environmental temperature varies and even if the friction coefficient of the motor 302 and the like vary, the rotation amount of the motor 302 and the like in the period from when the current is cutoff in the motor 302 to when the motor 302 stops can be calculated accurately.

### [Modification example 4 of the fourth embodiment]

In the above description, the control unit 304 performs the process of step S342 to step S344 shown in FIG. 31 after the current is cutoff in the motor 302. In contrary, the control unit 304 may perform the process of step S342 to step S344 shown in FIG. 31 every time a pulse cycle in the pulse signal is obtained before the current is cutoff in the motor 302. That is, when the control unit 304 measures a pulse cycle in step S235 shown in FIG. 26, the control unit 304 obtains the stopping time T_stop from this pulse cycle (step S343), and the control unit 304 obtains the estimate number of pulses n from the pulse cycle and the stopping time T_stop (step S344). Here, after a pulse cycle is measured in step S235 shown in FIG. 26, the control unit 304 may apply the pulse cycle to the input value of the correction map 315D to obtain the corresponding output value as the estimate number of pulses n.

The control unit 304 corrects the rotation amount of the motor 302 and the movement amount of the moveable unit by adding the estimate number of pulses n to the number of pulses (the count value N) obtained in step S224 after step S224 shown in FIG. 24 while repeating the process of step S223 to step S226 shown in FIG. 24. However, the control unit 304 does not update the count value N and obtains the sum of the count value N and the estimate number of pulses n independently from the count value N. The sum of the count value N and the estimate number of pulses n indicates the rotation amount of the motor 302 and the movement amount of the moveable unit during the period from when the motor 302 is activated to when the motor 302 stops if the current is cutoff in the motor 302 at that time.

Further, the control unit 304 subtracts the estimate number of pulses n from the difference obtained in step S225 or adds the estimate number of pulses n to the sum obtained in step S225 after step S225 shown in FIG. 24 when repeating the process of step S223 to step S226 shown in FIG. 24. The value obtained by such subtraction or addition indicates the stopping positions of the motor 302 and the moveable unit if the current is cutoff in the motor 302 at that time.

### [Modification example 5 of the fourth embodiment]

Similarly to the modification example 1 of the third embodiment, the control unit 304 may set the count value N to the initial position data 315A and does not reset the count value N to 0 in the above step S222. In such case, the process of step S225 is omitted. Further, in step S224, the control unit 304 updates the count value N by adding or subtracting 1 to or from the count value N every time a pulse in the pulse signal which is output by the ripple extraction device 303 is input (see the modification example 1 of the third embodiment). The count value N updated in step S224 indicates the rotational position of the motor 302 and also indicates the distance from the original position, setting the original position as the reference.

### [Modification example 6 of the fourth embodiment]

The ripple extraction device 303 is one example and is not limited to the circuit described above in the embodiment. For example, may be similar to the modification example 2 of the third embodiment.

### [Modification example 7 of the fourth embodiment]

Similarly to the modification example 1 of the first embodiment, the low cut-off frequency fc1 of the filter 40 may be set higher than the frequency of the ripple component (for example, the frequency at normal temperature).

### [Modification example 8 of the fourth embodiment]

Similarly to the modification example 2, the modification example 3 or the modification example 4 of the first embodiment, the filter 40 may be a low-pass filter, a high-pass filter or a band-stop filter.

### [Modification example 9 of the fourth embodiment]

Similarly to the modification example 5 of the first embodiment, one or both of the high-pass filter 20 and the band-pass filter 30 may be omitted.

### [Modification example 10 of the fourth embodiment]

Similarly to the modification example 6 in the first embodiment, the motor control apparatus 301 may be embedded in the power door-mirror apparatus or the power window apparatus.

### [Modification example 11 of the fourth embodiment]

Similarly to the modification example 7 of the first embodiment, the filter 40 may be a filter utilizing an operational amplifier (for example, a negative feedback type low-pass filter, a positive feedback type low-pass filter, a multiple negative feedback type band-pass filter, a multiple positive feedback type band-pass filter).

### [Notes on the fourth embodiment]

As can be understood from the above descriptions regarding the third embodiment, disclosure of various technical ideas, in addition to the inventions described in the following notes, are included in the descriptions of the third embodiment.

### Note 1

A motor control apparatus including:
a motor which generates cyclical ripples in a current signal when activated,
a ripple extraction device which extracts a ripple component from the current signal of the motor and outputs a pulse signal formed by the ripple component being converted into pulses,
a voltage detection unit which detects a voltage in the motor,
a control unit in which the pulse signal is input and which controls the motor, and
the control unit executes:
   a first process of measuring pulse cycles in the pulse signal of individual pulses in the pulse signal and sequentially storing the measured pulse cycles,
   a second process of cutting off the current in the motor, and
   a third process of calculating an estimate number of pulses in a period from when current cutoff in the motor is detected to when the motor stops based on the pulse cycle(s) of one pulse or a plurality of pulses just before the current cutoff in the motor is detected among the pulse cycles stored in the first process, when the current cutoff in the motor is detected based on the voltage which is detected by the voltage detection unit after the second process.

### Note 2

A motor control apparatus including:
a motor which generates cyclical ripples in a current signal when activated,
a ripple extraction device which extracts a ripple component from the current signal of the motor and outputs a pulse signal formed by the ripple component being converted into pulses,
a current detection unit which detects a current in the motor,
a control unit in which the pulse signal is input and which controls the motor, and
the control unit executes
a first process of measuring pulse cycles in the pulse signal of individual pulses in the pulse signal and sequentially storing the measured pulse cycles,
a second process of cutting off the current in the motor, and
a third process of calculating an estimate number of pulses in a period from when current cutoff in the motor is detected to when the motor stops based on the pulse cycle(s) of one pulse or a plurality of pulses just before the current cutoff in the motor is detected among the pulse cycles stored in the first process, when the current cutoff in the motor is detected based on the current which is detected by the current detection unit after the second process.

### Note 3

The motor control apparatus described in note 1 or 2 further including
a storage unit in which a first correction map which expresses a relationship between a first input value and a second input value and an output value and a second correction map which expresses a relationship between a first input value and a second input value and an output value, and
a temperature sensor which detects a temperature, and
the control unit further executes:
a fourth process of sequentially storing the temperatures detected by the temperature sensor for individual pulses in the pulse signal,
in the third process, the control unit applies the average value of the pulse cycles of the plurality of pulses or the pulse cycle of one pulse just before the current cutoff in the motor is detected amount the pulse cycles stored in the first process to the first input value of the first correction map and applies the average value of the temperatures of the plurality of pulses or the temperature of one pulse just before the current cutoff in the motor is detected among the temperatures stored in the fourth process to the second input value of the first correction map to obtain the corresponding output value as a stopping time which is from when the current cutoff in the motor is detected to when the motor stops, and the control unit applies the average value of the pulse cycles of the plurality of pulses or the pulse cycle of one pulse just before the current cutoff in the motor is detected among the pulse cycles stored in the first process to the first input value of the second correction map and applies the above obtained stopping time to the second input value of the second correction map to obtain the corresponding output value as the estimate number of pulses.

### Note 4

The motor control apparatus described in note 1 or 2 further including
a storage unit which stores a correction map which expresses a relationship between a first input value and a second input value and an output value, and
a temperature sensor which detects a temperature, and
the control unit executes:
a fourth process of sequentially storing temperatures detected by the temperature sensor for individual pulses in the pulse signal, and
in the third process, the control unit applies the average value of the pulse cycles of a plurality of pulses or the pulse cycle of one pulse just before the current cutoff in the motor is detected amount the pulse cycles stored in the first process to the first input value of the correction map and applies the average value of temperatures of a plurality of pulses or a temperature of one pulse just before the current cutoff in the motor is detected amount the temperatures stored in the fourth process to the second input value of the correction map to obtain the corresponding output value as the estimate number of pulses.

### Note 5

The motor control apparatus described in note 2 further including a storage unit in which a first correction map which expresses a relationship between a first input value and a second input value and an output value and a second correction map which expresses a relationship between a first input value and a second input value and an output value are stored, and
the control unit executes a fourth process of sequentially storing currents detected by the current detection unit of individual pulses in the pulse signal, and
in the third process, the control unit applies the average value of the pulse cycles of a plurality of pulses or the pulse cycle of one pulse just before the current cutoff in the motor is detected amount the pulse cycles stored in the first process to the first input value of the first correction map and applies the average value of current of a plurality of pulses or a current of one pulse just before the current cutoff in the motor is detected among the currents stored in the fourth process to the second input value of the first correction map to obtain the corresponding output value as a stopping time which is from when the current cutoff in the motor is detected to when the motor stops, and the control unit applies the average value of pulse cycles of a plurality of pulses or a pulse cycle of one pulse just before the current cutoff in the motor is detected among the pulse cycles stored in the first process to the first input value of the second correction map and applies the above obtained stopping time to the first input value of the second correction map to obtain the corresponding output value as the estimate number of pulses.

### Note 6

The motor control apparatus described in note 2 further including a storage unit in which a correction map which expresses a relationship between a first input value and a second input value and an output value, and
the control unit executes a fourth process of sequentially storing currents detected by the current detection unit for individual pulses in the pulse signal, and
in the third process, the control unit applies the average value of pulse cycles of a plurality of pulses or a pulse cycle of one pulse just before the current cutoff in the motor is detected among the pulse cycles stored in the first process to the first input value of the correction map and applies the average value of currents of a plurality of pulses or a current of one pulse just before the current cutoff in the motor is detected among the currents stored in the fourth process to the second input value of the correction map to obtain the corresponding output value as the estimate number of pulses.

### Note 7

The motor control apparatus described in note 1 or 2 further including a storage unit in which a first correction map which expresses a relationship between an input value and an output value and a second correction map which expresses a relationship between a first input value and a second input value and an output value are stored, and
in the third process, the control unit applies the average value of pulse cycles of a plurality of pulses or a pulse cycle of one pulse just before the current cutoff in the motor is detected among the pulse cycles stored in the first process to the input value of the first correction map to obtain the corresponding output value as a stopping time which is from when the current cutoff in the motor is detected to when the motor stops, and the control input applies the average value of pulse cycles of a plurality of pulses or a pulse cycle of one pulse just before the current cutoff in the motor is detected among the pulse cycles stored in the first process to the first input value of the second correction map and applies the above obtained stopping time to the first input value of the second correction map to obtain the corresponding output value as the estimate number of pulses.

### Note 8

The motor control apparatus described in note 1 or 2 further including a storage unit in which a correction map which expresses the relationship between an input value and an output value, and
in the third process, the control unit applies the average value of pulse cycles of a plurality of pulses or a pulse cycle of one pulse just before the current cutoff in the motor is detected among the pulse cycles stored in the first process to the input value of the correction map to obtains the corresponding output value as the estimate number of pulses.

### Note 9

The motor control apparatus described in any of notes 1 to 8 wherein the control unit executes
a fifth process of counting the number of pulses in the pulse signal, and
a sixth process of adding the number of pulses counted in the fifth process and the estimate number of pulses counted in the fourth process.

### Note 10

The motor control apparatus described in note 1 or 2 further including a storage unit in which an initial position data which expresses a rotation amount of the motor from a predetermined original position to an initial position before the motor starts running in the number of pulses, and
the control unit executes
a fifth process of counting the number of pulses in the pulse signal, and
a sixth process of subtracting the sum of the number of pulses counted in the fifth process and the estimate number of pulses calculated in the fourth process from the initial position data or adding the sum of the number of pulses counted in the fifth process and the estimate number of pulses calculated in the fourth process to the initial position data to update the initial position data which is stored in the storage unit to the addition result or the subtraction result.

### (a) Advantages obtained in the inventions described in notes 1 and 2

Because the control unit detects the current cutoff in the motor based on the voltage detected by the voltage detection unit or the current detected by the current detection unit, when the current is cutoff in the motor can be detected accurately.

Even if there is a time lag between when the control unit performed the process to cutoff the current in the motor and when the current is actually cutoff in the motor, when the current is cutoff in the motor can be detected accurately.

Because the pulse cycles of individual pulses are sequentially stored, even after the current cutoff in the motor is detected based on the voltage detected by the voltage detection unit or the current detected by the current detection unit, the control unit can calculate the estimate number of pulses in the period from when the current cutoff is detected to when the motor stops based on the pulse cycle just before the current cutoff is detected.

Because the control unit calculates the estimate number of pulses in the period from when the current cutoff in the motor is detected to when the motor stops based on the pulse cycle (s) of one pulse or a plurality of pulses just before the current cutoff in the motor is detected, the rotation amount of the motor until the motor stops and the stopping position of the motor can be obtained accurately even when the motor rotates for a while after the current being cutoff.

### (b) Advantages obtained in the inventions described in notes 3 and 4

Because the friction coefficient and the like of the motor and the moveable unit which is driven by are affected by the temperature, the rotation amount of the motor from when the current is cutoff in the motor to when the motor stops depends on the temperature. According to the inventions described in notes 3 and 4, because the control unit applies the temperature just before the current cutoff in the motor is detected to the second input value of the first correction map or the correction map to calculate the estimate number of pulses, temperature is a factor of the calculate estimate number of pulses. Therefore, the calculated estimate number of pulses is more accurate and the rotation amount of the motor until the motor stops and the stopping position of the motor can be obtained accurately.

### (c) Advantages obtained in the inventions described in notes 5 and 6

As the friction applied to the motor increases, the time until the motor stops since the current is cutoff in the motor decreases and the rotation amount of the motor during that time also decreases. As the friction and the like applied to the motor increases, load on the motor increases. As the load on the motor increases, the current in the motor increases. According to the invention described in notes 5 and 6, because the control unit applies the current in the motor just before the current cutoff in the motor is detected to the second input value of the first correction map or the correction map to calculate the estimate number of pulses, the load on the motor is a factor of the calculated estimate number of pulses. Therefore, the calculated estimate number of pulses is more accurate and the rotation amount of the motor until the motor stops and the stopping position of the motor can be obtained accurately.

### (d) Advantages obtained in the inventions described in notes 7 and 8

The control unit applies the pulse cycle just before the current cutoff in the motor is detected to the input value of the first correction map and to the input value of the second correction map, or to the input value of the correction map to calculate the estimate number of pulses. Therefore, the rotation amount of the motor until the motor stops and the stopping position of the motor can be obtained correctly even when the motor rotates for a while since the current is cutoff.

### (e) Advantage obtained in the invention described in note 9

The number of pulses and the rotation amount of the motor in a period from when the motor is activated to when the motor stops can be obtained accurately.

### (f) Advantage obtained in the invention described in note 10

The rotational position of the motor at the time when the motor stops can be obtained accurately.

### [Fifth embodiment]

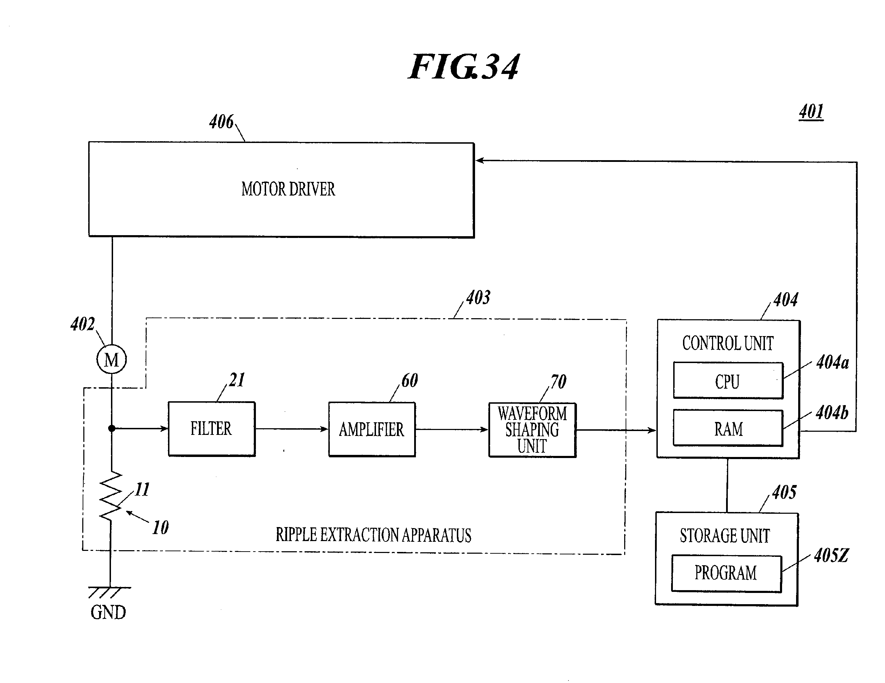

FIG. 34 is a block diagram of the motor control apparatus 401.

The motor control apparatus 401 includes a motor 402, a ripple extraction device 403, a control unit 404, a storage unit 405, a motor driver 40 and such like.

The motor 402 is a direct current motor. When current flows in to the motor 402, the motor 402 rotates and generates cyclical ripples in the current. The current signal of the motor 402 is similar to the current signal of the motor 2 in the first embodiment (see FIGS. 2 and 3).

The ripple extraction device 403 extracts the ripple component from the current signal of the motor 402, converts the ripple component into pulses and outputs the pulse signal which is formed by the ripple component being converted into pulses to the control unit 404. The ripple extraction device 403 will be described in detail.

As shown in FIG. 34, the ripple extraction device 403 includes a current-voltage converter 10, a filter 31, an amplifier 60 and a waveform shaping unit 70.

A current signal of the motor 402 is input in the current-voltage converter 10, and the current signal of the motor 402 which is input is converted into a voltage signal. The current-voltage converter 10 is provided similarly as the current-voltage converter 10 of the ripple extraction device 3 in the first embodiment.

In the filter 21, the voltage signal converted by the current-voltage converter 10 (the output signal of the current-voltage converter 10) is input. The filter 21 lets the ripple component in the voltage signal converted by the current-voltage converter 10 pass therethrough. The filter 21 attenuates the high frequency component having a frequency higher than the frequency of the ripple component (for example, high frequency noise) in the voltage signal converted by the current-voltage converter 10 and removes the high frequency component from the voltage signal converted by the current-voltage converter 10. The filter 21 attenuates the low frequency component having a frequency lower than the frequency of the ripple component in the voltage signal converted by the current-voltage converter 10 and removes the low frequency component from the voltage signal converted by the current-voltage converter 10. The filter 21 removes the direct-current component from the voltage signal converted by the current-voltage converter 10. The filter 21 outputs the output signal wherein the high frequency component, the low frequency component and the direct-current component are removed to the amplifier 60. The output signal of the filter 21 mainly includes the ripple component.

The filter 21 is a band-pass filter, and the center frequency of the band-pass filter is set to the frequency of the ripple component. For example, the filter 21 is a multiple feedback type band-pass filter using an operational amplifier or a band-pass filter using a plurality of resistors and a plurality of capacitors. In view of cost, it is preferred that the filter 21 is a band-pass filter in which the low cut-off frequency (the cut-off frequency at the high-pass filter section in the filter 21) and the high cut-off frequency (the cut-off frequency at the low-pass filter section in the filter 21) are fixed.

The output signal which is output by the filter 21 (mainly the ripple component) is input to the amplifier 60, and the amplifier 60 amplifies the output signal of the filter 21. This amplifier 60 is the same amplifier 60 of the ripple extraction device 3 in the first embodiment. Here, it is preferred that the amplifier 60 is a fixed gain amplifier.

The output signal of the amplifier 60 is input to the waveform shaping unit 70, and the waveform shaping unit 70 shapes the output signal into a rectangular waveform. This waveform shaping unit 70 is the same as the waveform shaping unit 70 of the ripple extraction device 3 in the first embodiment.

Here, the ripple extraction device 403 may have the same configuration as the ripple extraction device 3 in the first embodiment (see FIG. 1) (see FIGS. 4 to 6, 7A, 7B, 7C, 9 and 10). That is, the ripple extraction device 4 03 may include the current-voltage converter 10, a high-pass filter 20, a band-pass filter 30, a filter 40, a differential amplifier 50, an amplifier 60 and a waveform shaping unit 70.

The motor driver 406 drives the motor 402 according to an order from the control unit 404.

The motor driver 406 activates the motor 402 upon receiving the activation order from the control unit 404.

The motor driver 406 is a normal rotation/reverse rotation variable motor driver which can change the rotation direction of the motor 402. When the motor driver 406 receives an order relating to the rotation direction of the motor 402 from the control unit 404, the motor driver 406 changes the rotation direction of the motor 402 according to the order.

The motor driver 406 is a speed variable type motor driver which controls the rotation speed of the motor 402. The motor driver 406 drives the motor 402 according to the set speed order received from the control unit 404 at the set speed. In particular, the motor driver 406 is a voltage control type motor driver which controls the rotation speed of the motor 402 by controlling the applied voltage to the motor 402. Here, the motor driver 406 may be a PWM control type motor driver which controls the rotation speed of the motor 402 by the motor driver 406 modulating the duty ratio of the pulse signal to be output to the motor 402.

The motor driver 406 stops the motor 402 upon receiving the stopping order from the control unit 404.

The control unit 404 is a computer including a CPU 404a, a RAM 404b and such like. The CPU 404a performs various processes such as numeric calculation, information processing, device controlling and the like. The RAM 404b provides the CPU 404a with a working region as a temporary storage region.

The storage unit 405 is connected with the control unit 404. The storage unit 405 is a readable and writable storage medium such as a non-volatile memory and a hard disk. The storage unit 405 may be constituted of one storage medium or may be a combination of a plurality of storage mediums.

In the storage unit 405, the program 405Z which can be read by the control unit 404 is stored. The control unit 404 reads the program 405Z and performs processes in compliance with the program 405Z, and also, realizes various types of functions according to the program 405Z. Here, the storage unit 405 may include a ROM, and the program 405Z may be stored in the ROM.

The flow of the process performed by the control unit 404 based on the program 405 will be described and the operation of the motor control apparatus 401 associated with the process performed by the control unit 404 will be described.

If a predetermined condition is fulfilled, the control unit 404 activates the motor 402. In particular, the control unit 404 outputs the activation order to the motor driver 406 and sets the rotation speed of the motor 402 which is driven by the motor driver 406 to the initial rotation speed. The motor driver 406 applies voltage to the motor 402 upon receiving the activation order and sets the applied voltage to the motor 402 to a value corresponding to the initial operation speed. A predetermined condition being fulfilled means, for example, a user turning on the activation switch, turning on of the activation sensor, a predetermined condition being fulfilled with the process executed by the control unit 404 (for example, a sequence process) and such like. Here, if the motor driver 406 is a PWM control type motor driver, the duty ratio of the pulse signal which the motor driver 406 outputs to the motor 402 is set to the value corresponding to the initial rotation speed.

While the motor 402 is running, the ripple extraction device 403 extracts the ripple component from the current signal of the motor 402 and converts the ripple component into pulses. Then, the ripple extraction device 403 outputs the pulse signal which is formed by the ripple component being converted into pulses to the control unit 404. In particular, the current-voltage converter 10 converts the current signal of the motor 402 into a voltage signal, the filter 21 lets the ripple component in the voltage signal converted by the current-voltage converter 10 pass therethrough, the amplifier 60 amplifies the ripple component which is made to pass though by the filter 21, the waveform shaping unit 70 converts the ripple component which is amplified by the amplifier 60 into a pulse signal and the pulse signal is output to the control unit 404.

While the motor 402 is running, the control unit 404 counts the number of pulses in the pulse signal output by the ripple extraction device 403. In particular, the control unit 404 updates the count value by adding 1 to the count value every time a pulse in the pulse signal which is output by the ripple extraction device 403 is input. The count value is the number of pulses.

Further, the control unit 404 calculates the rotation amount of the motor 402 based on the number of pulses (the count value) every time a pulse in the pulse signal which is output by the ripple extraction device 403 is input. For example, the control unit 404 multiplies the counted number of pulses (the count value) by a predetermined constant number to calculate the product thereof as the rotation amount of the motor 402.

Furthermore, the rotational position of the motor 402 is calculated based on the number of pulses (the count value) every time a pulse in the pulse signal which is output by the ripple extraction device 403 is input. For example, the control unit 404 adds or subtracts the product obtained by multiplying the counted number of pulses (the count value) by a predetermined constant number to or from a predetermined value to calculate the sum or the difference as the rotational position of the motor 402. Here, a predetermined value indicates the initial rotational position of the motor 402 before the motor 402 starts running. In particular, a predetermined value is the rotation amount of the motor 402 when the motor 402 rotates to the initial rotational position from a predetermined original position.

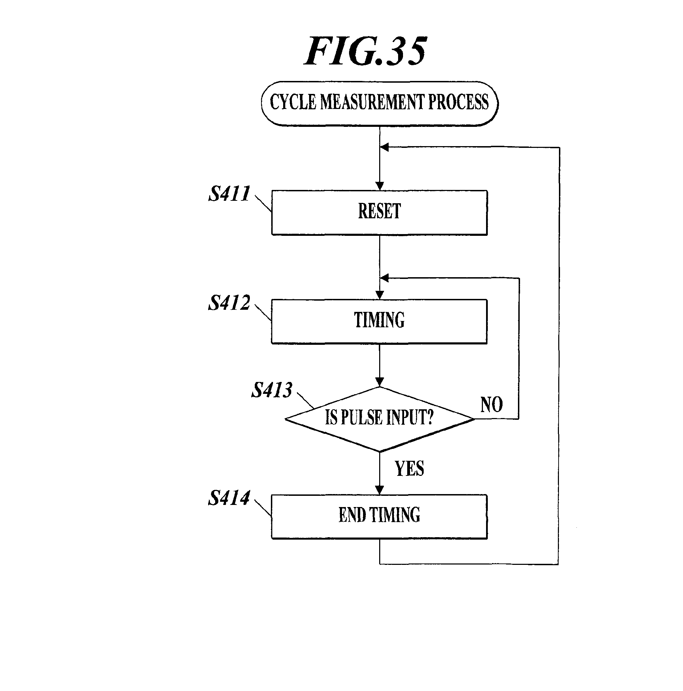

When the motor 402 activates, the control unit 404 controls the motor 402 at a constant speed based on the pulse signal which is input from the ripple extraction device 403. Therefore, the motor 402 rotates at a target speed, which is constant. In particular, while the motor 402 is running, the control unit 404 controls the motor 402 at a constant speed by performing the process shown in FIGS. 35 to 36.

While the motor 402 is running, the control unit 404 measures the pulse cycles in the pulse signal of the pulses in the pulse signal (see FIG. 35). In particular, the control unit 404 sequentially measures the pulse cycles of the pulses, each pulse cycle being from the rising of a pulse to the rising of the next pulse, by executing the process shown in FIG. 35.

First, the control unit 404 resets the timed time to 0 (step S411). Next, the control unit 404 starts timing and continues to time until a pulse in the pulse signal output from the ripple extraction device 403 rises (step S412, step S413: No). Then, if the control unit 404 detects the rising of a pulse in the pulse signal output from the ripple extraction device 403 (step S413: Yes), the control unit 404 ends the timing (step S414). The time the timer indicates at the end of the timing is the pulse cycle. Next, the control unit 404 resets the timer time to 0 again (step S411). By repeating the above process of step S411 to step S414, the control unit 404 calculates the pulse cycles in the pulse signal for individual pulses in the pulse signal. Here, by the control unit 404 sequentially storing the calculated pulse cycles in the RAM 404 or the storage unit 405, the data column of the calculated pulse cycles may be established.

The inverse number of a pulse cycle measured by the control unit 404 indicates the rotation speed of the motor 402. Therefore, the process of the control unit 404 measuring the pulse cycles of individual pulses (step S411 to step S414) corresponds to the process of calculating the rotation speed of the motor 402 according to each of the pulses.

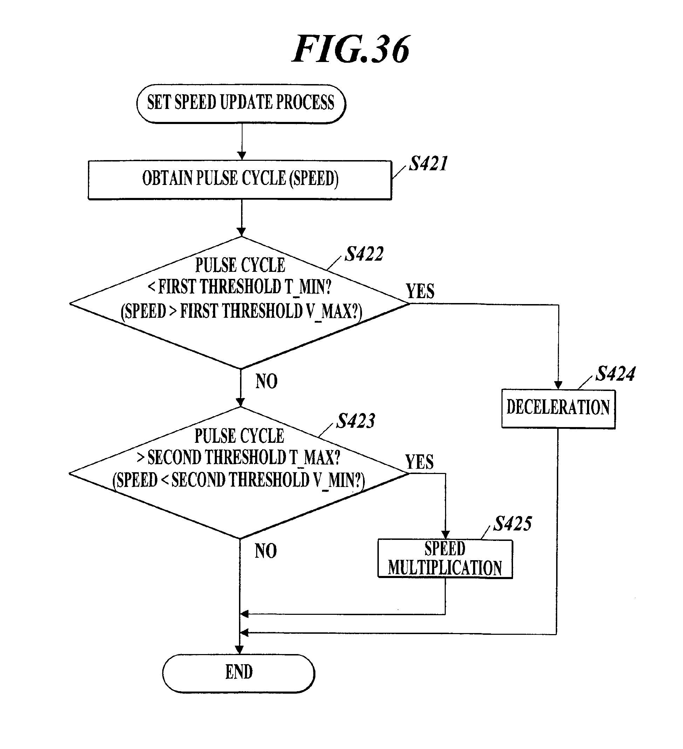

Every time the measurement of a pulse cycle ends (for every step S414), the control unit 404 updates the set speed of the motor 402 which is driven by the motor driver 406. In particular, the control unit 404 executes the set speed update process shown in FIG. 36 every time the measuring of a pulse cycle ends (for every step S414).

As shown in FIG. 36, first, the control unit 404 obtains the timed time at when the timing ended in step S414 in FIG. 35 (step S421). Next, the control unit 404 determines whether the pulse cycle is included in a predetermined range (step S422, step S423). In particular, the control unit 404 compares the pulse cycle to the first threshold T_min (step S422) and compares the pulse cycle to the second threshold T_max (step S423).

The first threshold T_min is a value smaller than the second threshold T_max (the first threshold T_min < the second threshold T_max). Here, in order to control the rotation speed of the motor 402 at a target speed which is constant, the first threshold T_min is set to a value smaller than the inverse number of the target speed and the second threshold T_max is set to a value greater than the inverse number of the target speed.

The process of comparing a pulse cycle measured by the control unit 404 to the first threshold T_min corresponds to the process of comparing the rotation speed calculated by the control unit 404 to the first threshold V_max, and the process of comparing the pulse cycle measured by the control unit 404 to the second threshold T_max corresponds to the process of comparing the rotation speed calculated by the control unit 404 to the second threshold V_min. The first threshold V_max is the inverse number of the first threshold T_min, the second threshold V_min is the inverse number of the second threshold T_max, and the first threshold V_max is a value greater than the second threshold V_min (the first threshold V_max > the second threshold V_min).

As a result of the comparison, if the control unit 404 determines that the measured pulse cycle is smaller than the first threshold T_min (the calculated rotation speed exceeds the first threshold V_max) (step S422: Yes), the control unit 404 reduces the set speed of the motor 402 (step S424). In particular, the control unit 404 updates the set speed by subtracting the decrement from the currently set speed of the motor 402. Here, the decrement may be a constant value or may be a value according to the set speed before the update. The control unit 404 sets the updated set speed in the motor driver 406, and the motor driver 406 drives the motor 402 at the set speed. That is, in a case where the motor driver 406 is a voltage control type motor driver, the motor driver 406 changes the applied voltage to the motor 402 to a value according to the updated set speed. In a case where the motor driver 406 is a PWM control type motor driver, the motor driver 406 changes the duty ratio of the pulse signal output to the motor 402 to a value according to the updated set speed.

On the other hand, as a result of the comparison, if the control unit 404 determines that the measured pulse cycle exceeds the second threshold T_max (the calculated rotation speed is lower than the second threshold V_min) (step S422: No, step S423: Yes), the control unit 404 increases the set speed of the motor 402 (step S425). In particular, the control unit 404 adds the incremental to the currently set speed of the motor 402 to update the set speed. Here, the incremental may be a constant value or may be a value according to the set value before the update. Then, the control unit 404 sets the updated set speed in the motor driver 406, and the motor driver 406 drives the motor 402 at the set speed. That is, in a case where the motor driver 406 is a voltage control type motor driver, the motor driver 406 changes the applied voltage to the motor 402 to a value according to the updates set speed. In a case where the motor driver 406 is a PWM control type motor driver, the motor driver 406 changes the duty ratio of the pulse signal, which is output to the motor 402, to a value according to the updated set speed.

As a result of the comparison, if the control unit 404 determines that the measured pulse cycle is equal to or greater than the first threshold T_min and equal to or smaller than the second threshold V_max (the calculated rotation speed is equal to or greater than the second threshold V_min and equal to or smaller than the first threshold V_max) (step S422: No, step S423: No), the control unit 404 does not update the set speed of the motor 402 and ends the process shown in FIG. 36.

By the control unit 404 performing the process shown in FIGS. 35 and 36 for each pulse in the pulse signal which is output by the ripple extraction device 403, the rotation speed of the motor 402 be constant at the target speed.

The above described is the operation of the motor control apparatus 401. The motor control apparatus 401 shown in FIG. 34 is used in a vehicle seat apparatus, for example. The vehicle seat apparatus includes the motor control apparatus 201 shown in FIG. 34 and the seat main body 90 shown in FIG. 8, and the moveable units in the seat main body 90 are driven by the motors 202. Since the seat main body 90 is described in the description of the first embodiment, the description of the seat main body 90 is omitted here. The motors 402 of the fifth embodiment drive the moveable units which are driven by the motors 2 in the first embodiment instead of the motors 2.

The embodiment of the present invention has the following advantages.
(1) In the conventional techniques (for example, JP 20003-9585, JP2008-283762), when the cut-off frequency of the switched-capacitor filter varies, the attenuation rate characteristic of the switched-capacitor filter also varies. Therefore, in order to extract the ripple component appropriately, the gains in the circuits which come after the switched-capacitor filter such as the amplifier and the A/D converter also need to be changed, and this leads to cost increase. Further, since the switched-capacitor filter is expensive, using the switched-capacitor filter leads to greater cost increase. In contrary, in the fourth embodiment of the present invention, because the control unit 404 controls the rotation speed of the motor 402 so as to be constant, the frequency of each component (the low frequency component, the ripple component, the high frequency noise component and the like) in the current signal of the motor 402 does not vary easily. Therefore, even if the frequency characteristic of the filter 21 is fixed and not variable, the ripple component in the current signal of the motor 402 does not attenuate by the filter 21 and the ripple component is passed through surely by the filter 21 and the components other than the ripple component are removed by the filter 21. Because the frequency characteristic of the filter 21 is fixed, the circuit configuration of the filter 21 can be simplified and the cost of the filter 21 can be reduced.
(2) Because the control unit 404 controls the rotation speed of the motor 402 so as to be constant, the amplitude of each component (the low frequency component, the ripple component, the high frequency noise component and the like) in the current signal of the motor 402 does not vary easily. Therefore, even if the gains in the amplifier 60 and the waveform shaping unit 70 are fixed and not variable, the ripple component is to be surely converted into a pulse signal. Thus, the circuit configurations of the amplifier 60 and the waveform shaping unit 70 can be simplified and the cost for the amplifier 60 and the waveform shaping unit 70 can be reduced.
(3) As long as the motor driver 406 is a voltage control type motor driver, the ripple component is generated endlessly because voltage is to be applied to the motor 2 while the motor 402 is running. Therefore, by counting the number of pulses in the pulse signal, the rotation amount of the motor 402 can be calculated accurately and the controlling of the motor 402 at a constant speed can be performed accurately.

The embodiment to which the present invention is applicable is not limited to the above described embodiment, and arbitrary modifications can be made to the above described embodiment within the scope of the present invention. Hereinafter, several embodiments will be described. The following embodiments may be combined to the extent possible.

### [Modification example 1 of the fifth embodiment]

The ripple extraction device 403 is an example and is not limited to the circuit described in the above embodiment.

### [Modification example 2 of the fifth embodiment]

Similarly to the modification example 6 of the first embodiment, the motor control apparatus 401 may be embedded in the power door-mirror apparatus or the power window apparatus.

### [Notes on the fifth embodiment]

As can be understood from the above descriptions regarding the fifth embodiment, disclosure of various technical ideas, in addition to the inventions described in the following notes, are included in the descriptions of the fifth embodiment.

### Note 1

A motor control apparatus including
a motor which generates cyclical ripples in a current signal when activated,
a ripple extraction device which extracts a ripple component from the current signal of the motor and outputs a pulse signal which is formed by the ripple component being converted into pulses, and
a control unit in which the pulse signal is input and which controls the motor, and
the control unit executes a constant speed control process to control the motor at a constant speed based on the pulse signal input from the ripple extraction device.

### Note 2

The motor control apparatus described in note 1 wherein the constant speed control process which is executed by the control unit includes
a first process of measuring a pulse cycle in the pulse signal,
a second process of comparing the pulse cycle measured in the first process to a first threshold and to a second threshold which is greater than the first threshold, and
a third process of reducing a set speed of the motor when the pulse cycle which is measured in the first process is smaller than the first threshold as the result of the comparison in the second process and increasing the set speed of the motor when the pulse cycle which is measured in the first process is greater than the second threshold as the result of the comparison in the second process.

### Note 3

The motor control apparatus described in note 1 wherein the constant speed control process which is executed by the control unit includes
a first process of calculating a rotation speed of the motor by measuring a pulse cycle in the pulse signal,
a second process of comparing the rotation speed calculated in the first process to a first threshold and to a second threshold which is smaller than the first threshold, and
a third process of reducing a set speed of the motor when the rotation speed calculated in the first process is greater than the first threshold as the result of the comparison in the second process and increasing the set speed of the motor when the rotation speed calculated in the first process is smaller than the second threshold as the result of the comparison in the second process.

### Note 4

The motor control apparatus described in any of notes 1 to 3 wherein the ripple extraction device includes
a band-pass filter which makes a ripple component in the current signal of the motor pass therethrough, and
a waveform shaping unit which converts the ripple component which is passed through by the band-pass filter into pulses and outputs ta pulse signal to the control unit.

### Note 5

The motor control apparatus described in any of notes 1 to 4 further including a motor driver which applies a voltage according to the set speed set by the control unit to the motor.

### (a) Advantage obtained in the invention described in notes 1

Because the control unit control the rotation speed of the motor at constant, the frequency and the amplitude of each component in the current signal of the motor do not vary easily. Therefore, even if the ripple extraction device has a circuit of simple configuration of low cost, the ripple component is extracted accurately by the ripple extraction device.

### (b) Advantage obtained in the invention described in notes 2

The rotation speed of the motor falls in the range between the inverse number of the first threshold and the inverse number of the second threshold, and the rotation speed of the motor is controlled at constant.

### (c) Advantage obtained in the invention described in notes 3

The rotation speed of the motor falls in the range between the first threshold and the second threshold, and the rotation speed of the motor is controlled at constant.

### (d) Advantage obtained in the invention described in notes 4

Because the control unit controls the rotation speed of the motor at constant, the frequency of each component in the current signal of the motor does not vary easily. Therefore, even if the frequency characteristic in the filter is not variable and is fixed, the ripple component in the current signal of the motor is not attenuated by the filter and the ripple component is surely passed through by the filter, and the components other than the ripple component are removed. If the frequency characteristic in the filter is fixed, the circuit configuration of the filter can be simplified and the cost for the filter can be reduced.

Moreover, because the amplitude of each component in the current signal of the motor does not vary easily, even if the gain at the circuit that comes after the filter is not variable and is fixed, the ripple component can be surely converted into a pulse signal by the waveform shaping unit. Therefore, the circuit that comes after the filter, for example, the circuit configuration of the waveform shaping unit, can be simplified and the cost for the circuit that comes after the filter can be reduced.

### (e) Advantage obtained in the invention described in notes 5

Because voltage is being applied to the motor while the motor is running, the ripple component is generated endlessly.

### [Sixth embodiment]

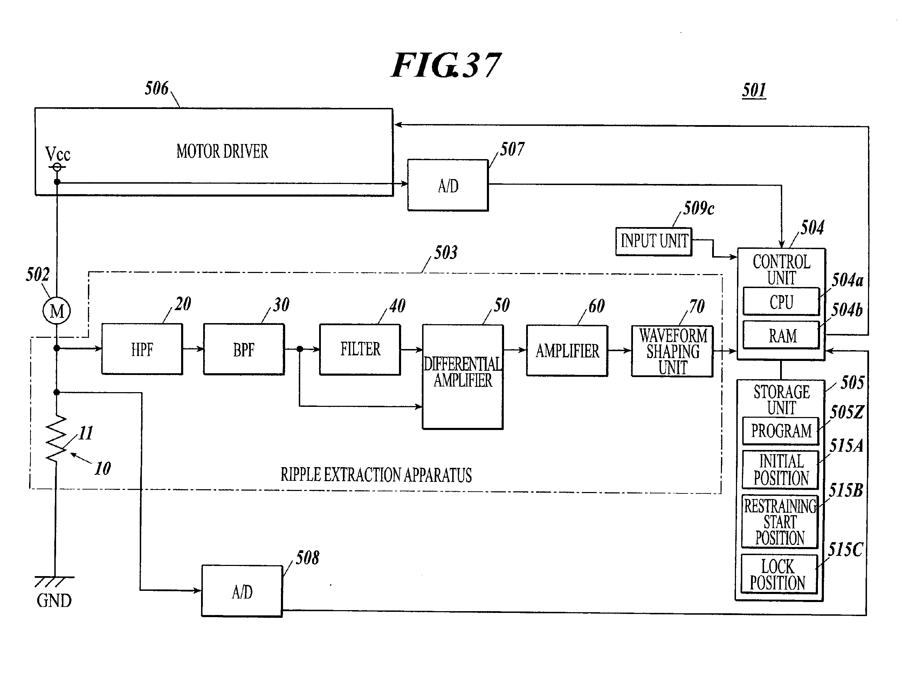

FIG. 37 is a block diagram of the motor control apparatus 501.

The motor control apparatus 501 includes a motor 502, a ripple extraction device 503, a control unit 504, a storage unit 505, a motor driver 506, an A/D converter 507, an A/D converter 508, an input unit 509c and such like.

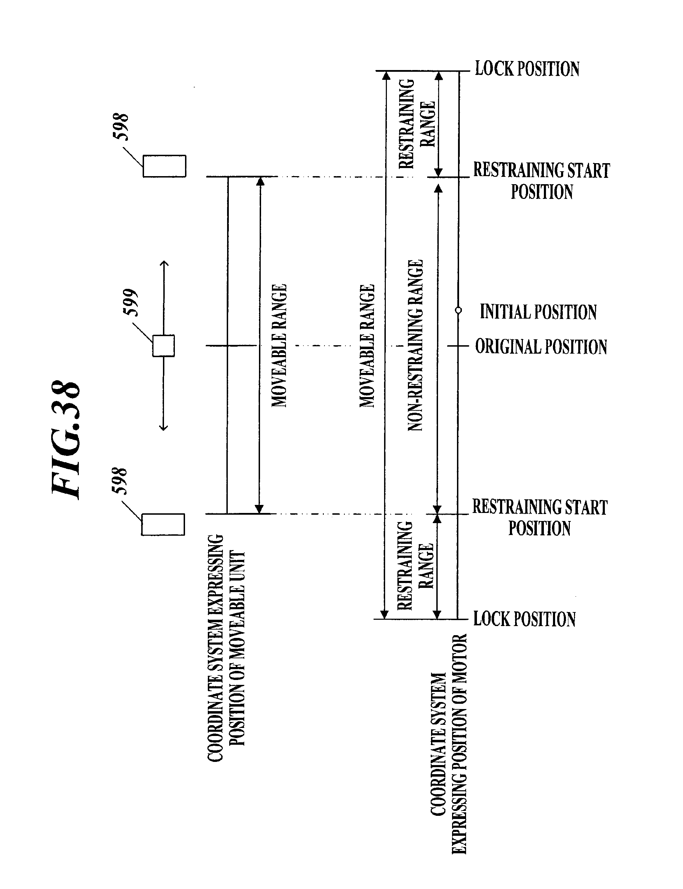

A transmission mechanism is provided between the motor 502 and the moveable unit 599 (see FIG. 38), the motor 502 is joined with the transmission mechanism and the transmission mechanism is joined with the moveable unit 599. When the motor 502 rotates, power of the motor 502 is transmitted to the moveable unit 599 by the transmission mechanism and the motor 502 moves the moveable unit 599. FIG. 38 is a diagram showing a coordinate system expressing the position of the motor 502 and a coordinate system expressing the position of the moveable unit 599. The stoppers 598, 598 are respectively provided at both ends of the moveable range of the moveable unit 599, and the moveable range of the moveable unit 599 is set between the stoppers 598, 598. When the moveable unit 599 rotates in the normal rotation direction and abuts one stopper 598, the moveable unit 599 cannot move outside the moveable range, but can rotate in the normal direction for the distance of play, elastic deformation, rattling and the like of the transmission mechanism and the like of the motor 502. On the other hand, when the motor 502 rotates in the reverse direction and abuts the other stopper 598, the moveable unit 599 cannot move outside the moveable range, but can rotate in the reverse direction for the distance of play, elastic deformation, rattling and the like of the transmission mechanism and the like of the motor 502. That is, the moveable range of the motor 502 is wider than the moveable range of the moveable unit 599.

When the moveable unit 599 moves until it abuts the stopper 598 from within the moveable range and when the play and the like in the transmission mechanism starts to be fastened due to further rotation of the motor 502, this position is referred to as the restraining start position. That is, if the position of the motor 502 is at the restraining start position, the moveable unit 599 positions at the end of the moveable range and abuts the stopper 598, and the moveable unit 599 is restrained. However, the motor 502 can further rotate in the direction the moveable unit 599 moves toward the stopper 598.

The position of the motor 502 where it cannot rotate further and restraint by the play and the like in the transmission mechanism being fastened in the state where the moveable unit 599 abuts the stopper 598 is referred to as the lock position. The two end positions in the moveable range of the motor 502 are the lock positions. That is, if the position of the motor 502 is at the lock position, the moveable unit 599 positions at the end of the moveable range and abuts the stopper 598 and there is no play and the like in the transmission mechanism; therefore, the motor 502 cannot rotate in the direction the moveable unit 599 moves toward the stopper 598.

The range between the restraining start position and the lock position is referred to as the restraining range, and the range between one restraining start position and the other restraining start position is referred to as the non-restraining range. Further, a predetermined original position is set between the two restraining start positions in advance, and the position of the motor 502 is set with the original position as the reference. Here, the original position may be set at the lock position.

The motor 502 is a direct current motor. When current flows into the motor 502, the motor 502 rotates and generates cyclical ripples in the current. The current signal of the motor 502 is similar to the current signal of the motor 2 in the first embodiment (see FIGS. 2 and 3).

In the embodiment, FIG. 2 is a chart showing the change in the level of current that flows in to the motor 502 when the motor 502 is driven from a certain position in the moveable range to the lock position. Further, in the embodiment, the time T1 shown in FIG. 2 is the activation timing of the motor 502, and the time T2 is the timing when the motor 502 starts running stably. The time T3 is the timing when the moveable unit 559 which is driven by the motor 502 abuts the stopper 598 and when the transmission mechanism which transmits the power of the motor 502 to the moveable unit 599 starts to be fastened. The time T3 is also the timing when the motor 502 positions at the restraining start position. The time T4 is the timing when the position of the motor 502 is at the lock position and the motor 502 stops. During the period P3 which is from the time T3 to the time T4, the moveable unit 599 is abutting the stopper 598. Therefore, the motor 502 rotates at a very slow speed.

The ripple extraction device 503 extracts the ripple component from the current signal of the motor 502, converts the ripple component into pulses and outputs the pulse signal formed by converting the ripple component into pulses to the control unit 504.

As shown in FIG. 37, the ripple extraction device 503 has the configuration similar to that of the ripple extraction device 3 in the first embodiment (see FIG. 1). That is, the ripple extraction device 503 includes a current-voltage converter 10, a high-pass filter 20, a band-pass filter 30, a filter 40, a differential amplifier 50, an amplifier 60 and a waveform shaping unit 70. The current-voltage converter 10, the high-pass filter 20, the band-pass filter 30, the filter 40, the differential amplifier 50, the amplifier 60 and the waveform shaping unit 70 of the ripple extraction device 503 are respectively provided in a similar manner as the current-voltage converter 10, the high-pass filter 20, the band-pass filter 30, the filter 40, the differential amplifier 50, the amplifier 60 and the waveform shaping unit 70 of the ripple extraction device 3 in the first embodiment (see FIGS. 4 to 6, 7A, 7B, 7C and 9 to 10).

The motor drive 506 supplies power to the motor 502 in compliance with the order from the control unit 504 and drives the motor 506. The motor driver 506 is provided in a similar manner as the motor driver 6 in the first embodiment.

The A/D converter 507 is a voltage detection unit which detects the power supply voltage of the motor 502 and outputs the power supply voltage to the control unit 504. The A/D converter 508 is a current detection unit which detects the current value of the motor 502 and output the current value to the control unit 504. The motor drivers 507 and 508 are respectively provided in a similar manner as the A/D converters 107A and 108A in the second embodiment.

The control unit 504 is a computer including a CPU 504a, a RAM 504b and such like. The CPU 504a performs various processes such as numeric calculation, information processing, device controlling and the like. The RAM 504b provides the CPU 504a with a working region as a temporary storage region. In the control unit 504, the pulse signal which is output by the waveform shaping unit 70 is input.

The input unit 509c is connected with the control unit 504. The input unit 509c includes a plurality of switches and the like. When a user or the like operates the input unit 509c, the input unit 509c outputs a signal according to the operation to the control unit 504, and the signal is input to the control unit 504 and the control unit 504 outputs an order according to the signal to the motor driver 506.

The storage unit 505 is connected with the control unit 504. The storage unit 505 is a readable and writable storage medium such as a non-volatile memory and a hard disk. The storage unit 505 may be constituted of one storage medium or may be a combination of a plurality of storage mediums. If the storage unit 505 is a combination of a plurality of storage mediums, one of the storage mediums may be a ROM.

In the storage unit 505, the initial position data 515A is stored. The initial position data 515A indicates the initial position of the motor 502 before the motor 502 starts running. In particular, the initial position data 515A is indicated by a coordinate in a coordinate system shown in FIG. 38, and the coordinate which indicates the position of the motor 502 is expressed in the number of pulses. If the motor 502 rotates to a predetermined original position from the initial position as shown in FIG. 38, the initial position data 515A is expressed by the number of pulses in the pulse signal which is output by the ripple extraction device 503 during that time. The initial position data 515A is a default value which is set in advance or is a value written at the previous running of the motor 502. If the initial position of the motor 502 is the original position, the number of pulses that expresses the initial position data 515A is 0. The initial position data 515A is updated every time the motor 502 stops. There are cases where the value of the initial position data 515A be a value within the non-restraining range or be the value of lock position. However, the value of the initial position data 515A will not be a value within the restraining range (although, excluding the lock position and the restraining start position).

In the storage unit 505, the restraining start position data 515B is stored. The restraining start position data 515A indicates the coordinate of the restraining start position in the coordinate system shown in FIG. 38. Therefore, if the motor 502 rotates to a predetermined original position from the restraining start position as shown in FIG. 38, the restraining start position data 515B is expresses by the number of pulses in the pulse signal which is output by the ripple extraction device 503 during that time.

In the storage unit 505, the lock position data 515C is stored. The lock position data 515C indicates the coordinate of the lock position in the coordinate system shown in FIG. 38. Therefore, if the motor 502 rotates to the predetermined original position from the lock position as shown in FIG. 28, the lock position data 515C is expressed by the number of pulses in the pulse signal which is output by the ripple extraction device 503 during that time.

The values of the restraining start position data 515B and the lock position data 515C are values which have been studied by experimentations, measurements and the like in advance.

In the storage unit 505, the program 505Z which is readable by the control unit 504 is stored. The control unit 504 reads the program 505Z and performs processes in compliance with the program 505Z, and also, realizes various types of functions according to the program 505Z. The restraining start position data 515B and the lock position data 515C may be stored in the storage unit 505 separately from the program 505Z, or may be included in the program 505Z. Here, the storage unit 505 may include a ROM, and the program 30505Z may be stored in the ROM.

The flow of the process performed by the storage unit 504 based on the program 505Z will be described and the operation of the motor control apparatus 501 associated with the process performed by the control unit 504 will also be described.

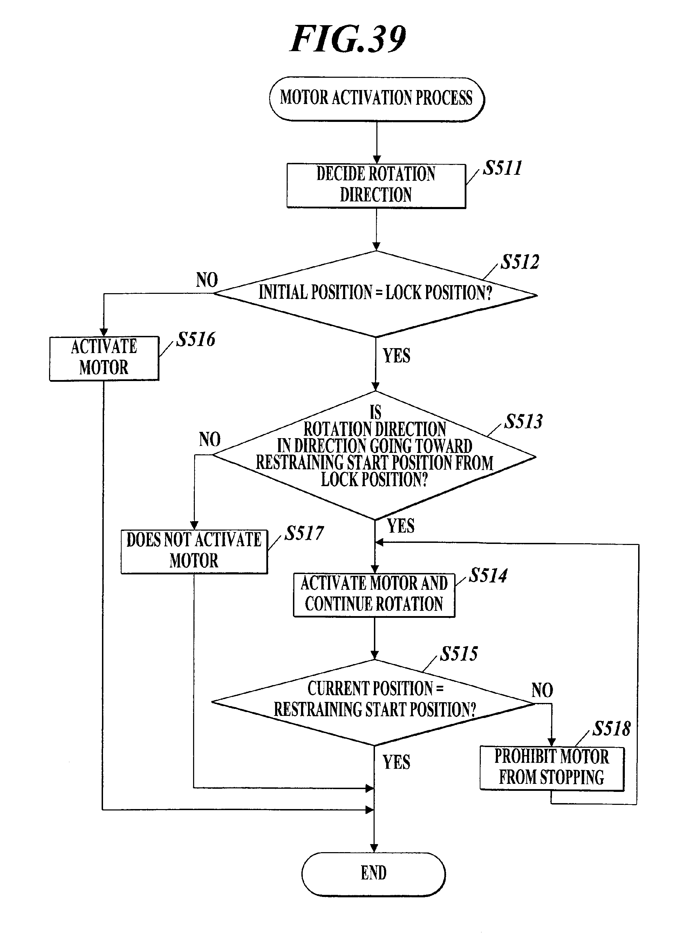

If a predetermined activation condition is fulfilled, the control unit 504 executes the activation process of the motor 502 (see FIG. 39). A predetermined activation condition being fulfilled includes, for example, a user turning on the activation switch in the input unit 509c, the activation sensor being turned on, and a predetermined condition being fulfilled with the process which is being executed by the control unit 504 (for example, a sequence process).

First, the control unit 504 decides the rotation direction (normal rotation or reverse rotation) of the motor 502 and writes the rotation direction in the RAM 504 or the storage unit 505 (step S511). The rotation direction of the motor 502 is decided according to the process being executed by the control unit 504 or is decided according to an operation performed on the input unit 509c by a user. For example, if a user turns on the normal rotation activation switch in the input unit 509c, the control unit 504 decides the rotation direction of the motor 502 be the normal rotation, and if a user turns on the reverse rotation activation switch in the input unit 509c, the control unit 504 decides the rotation direction of the motor 502 be the reverse rotation.

Next, the control unit 504 reads the initial position data 515A stored in the storage unit 505. Then, the control unit 504 determines whether the value of the read initial position data 515A is equal to the value of the lock position data 515C (step S512).

If the initial position of the motor 502 is not at the lock position, the value of the initial position data 515A differs from the value of the lock position data 515C. In such case, the control unit 504 determines that the value of the initial position data 515A is not equal to the value of the lock position data 515C (step S512: NO). Then, the control unit 504 activates the motor 502 in the direction decided in step S511 (step S516). That is, the control unit 504 outputs the rotation direction order according to the direction decided in step S511 to the motor driver 506 and also outputs the activation order to the motor driver 506. The motor driver 506 which received the rotation direction order and the activation order distributes current to the motor 502 to drive the motor 502 in the rotation direction. In such way, the motor 502 rotates and the moveable unit is driven by the motor 502. When the control unit 504 activates the motor 502, the activation process is ended. After the activation of the motor 502, the control unit 504 counts the number of pulses in the pulse signal based on the pulse signal which is input from the ripple extraction device 503 and calculates the rotation amount of the motor 502 and the position (the current position) of the motor 502 (see FIG. 24).

If the initial position of the motor 502 is at either of the lock positions at the two ends of the moveable range, the value of the initial position data 515A corresponds to the value of the lock position data 515C. In such case, the control unit 504 determines that the value of the initial position data 515A is equal to the value of the lock position data 515C (step S512: YES). Then, the process of the control unit 504 moves on to step S513. In step S513, the control unit 504 determines whether the direction decided in step S511 is the direction going toward the restraining start position from the lock position (step S513).

If the control unit 504 determines that the direction decided in step S511 is not the direction going toward the restraining start position from the lock position (step S513: NO), the control unit 504 does not activate the motor 502 (step S518) and ends the activation process. If the direction decided in step S511 is not the direction going toward the restraining start position from the lock position, the rotation direction of the motor 502 is in the direction going toward the lock position, which is the initial position of the motor 502, from the restraining start position and the play and the like in the transmission mechanism are fastened. Therefore, there is a possibility that the motor 502 does not rotate even when current is distributed to the motor 502 and excess current and the like are generated in the motor 502. However, because the control unit 504 does not activate the motor 502 (step S517), such generation of excess current and the like can be suppressed.

If the control unit 504 determines that the direction decided in step S511 is the direction going toward the restraining start position from the lock position (step S513: Yes), the control unit 504 activates the motor 502 in the direction decided in step S511 (step S514). That is, the control unit 504 outputs the rotation direction order according to the direction decided in step S511 and also outputs the activation order to the motor driver 506. The motor driver 506 which received the rotation direction order and the activation order distributes current to the motor 502 and drives the motor 502 in the rotation direction. In such way, the motor 502 rotates and the moveable unit is driven by the motor 502.

After the motor 502 is activated, the control unit 504 counts the number of pulses in the pulse signal based on the pulse signal which is input from the ripple extraction device 503, calculates the rotation amount of the motor 502 and the position (the current position) of the motor 502 (see FIG. 24) and monitors the calculated position of the motor 502 (step S515). Then, the control unit 504 makes the motor 502 run continuously (step S514) without stopping the motor 502 (step S515: No, step S518) until the value of the calculation position of the motor 502 be equal to the value of the restraining start position data 515B (step S515: YES). Even if a user turns off the activation switch in the input unit 509c or turns on the stop switch in the input unit 509c during the period until the value of the position of the motor 502 calculated by the control unit 504 be equal to the value of the restraining start position data 515B, the control unit 504 nullifies such operation and makes the motor 502 run continuously (step S514) without stopping the motor 502 (step S518).

When the value of the position of the motor 502 calculated by the control unit 504 be the value which corresponds to the restraining start position data 515B (step S515: YES), the control unit 504 ends the activation process. Here, after the control unit 504 activates the motor 502 (step S514, step S516), the motor 502 continues to rotate unless the control unit 504 stops the motor 502 even if the control unit 504 ends the activation process.

While the motor 502 is running, the ripple extraction device 503 extracts (detects) the ripple component from the current signal of the motor 502 and converts the ripple component into pulses. Then, the ripple extraction device 503 outputs the pulse signal formed by the ripple component being converted into pulses to the control unit 504.

When the motor 502 is activated, the control unit 504 counts the number of pulses in the pulse signal and calculates the rotation amount of the motor 502 and the position of the motor 502 based on the pulse signal which is input from the ripple extraction device 503 (see FIG. 24). The counting process of the number of pulses performed by the control unit 504 (FIG. 24) is similar to the counting process of the number of pulses performed by the control unit 204 in the third embodiment. Here, in step S225, the control unit 504 adds the updates count value N to the initial position data 515A which is read from the storage unit 505 or subtracts the updated count value N from the initial position data 515A. In step S221, the control unit 504 may monitor the current data input from the A/D converter 508 and the control unit 504 may compare the current data to a predetermined threshold. In such case, when current is distributed to the motor 502, the control unit 504 determines that the current data exceeded the predetermined threshold and detects the current distribution in and the activation of the motor 502 (step S221: Yes). In step S226, the control unit 504 may compare the current data input from the A/D converter 508 to a predetermined threshold. In such case, if current is not cutoff in the motor 502, the control unit 504 determines that the current data exceeded the predetermined threshold (step S26: No) and the control unit 504 performs the process of step S223 to step S225 again.

The count value N which is updated in step S224 while the control unit 504 is executing the process shown in FIG. 24 is the number of pulses counted by the control unit 504. The number of pulses (the count value N) counted by the control unit 504 indicates the rotation amount of the motor 502 from the initial position to the current position in the coordinate system of the motor 502 (see FIG. 38). The difference or the sum obtained in step S225 indicates the current position of the motor 502 at the time when a pulse is input. If the difference or the sum which is calculated by the control unit 504 in step S225 is the value corresponding to the restraining start position data 515B (step S515: YES), the control unit 504 ends the activation process. If the difference or the sum calculated in step S225 by the control unit 504 is not the value corresponding to the restraining start position data 515B (step S515: NO), the control unit 504 continues the activation process and prohibits the motor 502 from stopping (step S518).

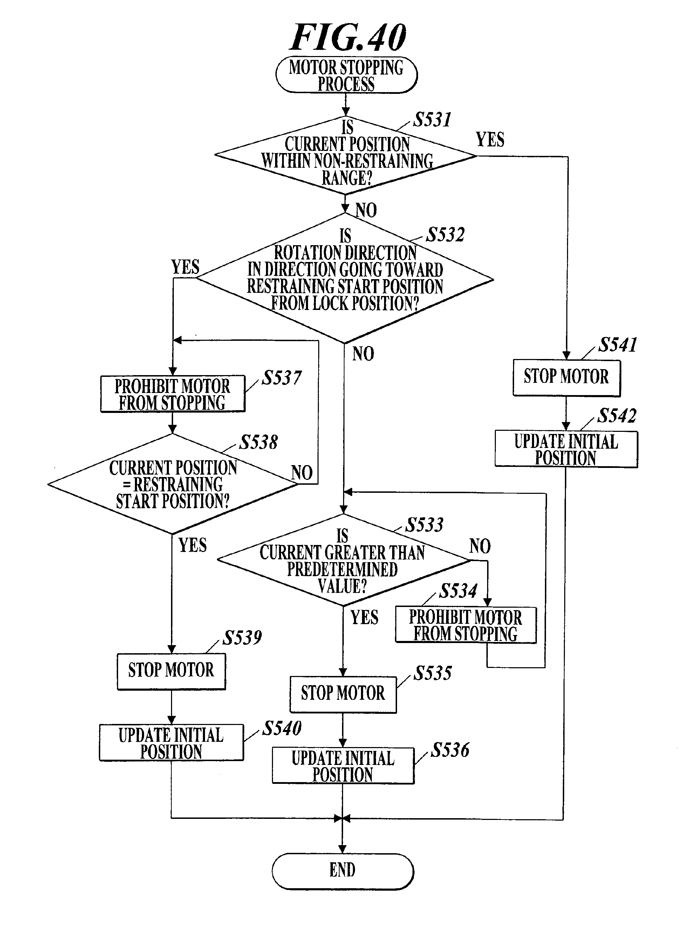

If a predetermined stopping condition is fulfilled while the control unit 504 is executing the process shown in FIG. 24, the control unit 504 executes the stopping process of the motor 502 (see FIG. 40). A predetermined stopping condition includes, for example, a user turning on the stopping switch in the input unit 509c, a user turning off the stopping switch in the input unit 509c, a predetermined condition being fulfilled with the process executed by the control unit 504 (for example, a sequence process), the difference or the sum obtained in step S225 being a predetermined value and the like.

The stopping process will be described with reference to FIG. 40.

First, the control unit 504 determines whether the difference or the sum calculated in step S225 just after the start of the stopping process (the position of the motor 502) fall within the non-restraining range (step S531). In particular, the control unit 504 compares the difference or the sum calculates in step S225 to the value of the restraining start position data 515B (step S531).

As a result of the comparison, if the control unit 504 determined that the difference or the sum calculated in step S225 just after starting of the stopping process (the position of the motor 502) is within the non-restraining range (step S531: YES), the control unit 504 outputs the stopping order to the motor driver 506 (step S541). Thereby, the motor driver 506 which received the stopping order cuts off the current in the motor 502 and the motor 502 stops. The stopping position of the motor 502 is between one restraining start position and the other restraining start position. Because the current is cut off in the motor 502 by the motor driver 506, the control unit 504 determines that the voltage data which is input from the A/D converter 507 is lower than a predetermined threshold (step S226: Yes) and the control unit 504 ends the process shown in FIG. 24. Here, if the control unit 504 is to compare the current data input from the A/D converter 508 to a predetermined threshold (step S226), the control unit 504 determines that the current data is smaller than the predetermined threshold (step S226: Yes) when the current is cut off in the motor 502, and the control unit 504 ends the process shown in FIG. 24.

Next, the control unit 504 writes the difference or the sum calculated in step S225 just after start of the stopping process in the storage unit 505 (step S542). In particular, the control unit 504 rewrites the value of the initial position data 515A stored in the storage unit 505 with the difference or the sum obtained in step S225 just after start of the stopping process (step S542). Thereafter, the control unit 504 ends the stopping process.

As a result of the comparison of step S531, if the control unit 504 determines that the difference or the sum calculated in step S225 (the position of the motor 502) is not within the non-restraining range (step S531: NO), the process of the control unit 504 moves on to step S532. In step 32, the control unit 504 determines whether the direction decided in step S511 is the direction going toward the restraining start position from the lock position (step S532).

If the control unit 504 determines that the direction decided in step S511 is the direction going toward the restraining start position from the lock position (step S532: YES), the control unit 504 does not stop the motor 502 (step S537) and makes the motor 502 continue to run. Here, if the motor is running in a case where the value of the initial position data 515A before the activation of the motor 502 equals the value of the lock position data 515C (see step S512 (YES), step S513 (YES) and step S514 shown in FIG. 39), the process of the control unit 504 moves on to step S537 from step S532.

Because the motor 502 continues to run (see step S537), the control unit 504 repeats the process of step S223 to step S226 shown in FIG. 24. Therefore, the control unit 504 calculates the position of the motor 502 every time a pulse in the pulse signal that is output by the ripple extraction device 503 is input (step S225). Then, the control unit 504 does not stop the motor 502 (step S538: NO, step S537) and makes the motor 502 run continuously until the value of the position of the motor 502 calculated in step S225 be equal to the value of the restraining start position data 515B.

If the value of the position of the motor 502 calculated by the control unit 504 be equal to the value of the restraining start position data 515B (step S538: YES) while the motor 502 continues to run, the control unit 504 outputs the stopping order to the motor driver 506 (step S539). Thereby, the motor driver 506 which received the stopping order cuts off the current in the motor 502 and the motor 502 stops. The stopping position of the motor 502 is at the restraining start position. Because the current is cut off in the motor 502 by the motor driver 506, the control unit 504 determines that the voltage data input from the A/D converter 507 is smaller than a predetermined threshold (step S226: Yes), and the control unit 504 ends the process shown in FIG. 24.

Next, the control unit 504 writes the difference or the sum obtained in the last step S225 while repeating the process of step S223 to step S226 shown in FIG. 24 in the storage unit 505 (step S540). In particular, the control unit 504 rewrites the value of the initial position data 515A stored in the storage unit 505 with the difference or the sum obtained in the last step S225 (step S540). The value of the initial position data 515A which is rewritten is equal to the value of the restraining start position data 515B or close to the value of the restraining start position data 515B. Thereafter, the control unit 504 ends the stopping process. Here, in step S540, the control unit 504 may rewrite the value of the initial position data 515A which is stored in the storage unit 505 with the value of the restraining start position data 515B.

In the determination of step S532, if the control unit 504 determines that the direction decided in step S511 is not the direction going toward the restraining start position from the lock position (step S532: NO), the process of the control unit 504 moves on to step S533. If the position of the motor 502 moves in to the restraining range from the non-restraining range exceeding the restraining start position, the process of the control unit 504 moves on to step S533.

In step S533, the control unit 504 monitors the current data which is input from the A/D converter 508 and compares the current data to a predetermined value (step S533). A predetermined value is a value obtained in advance by measuring the current that flows in to the motor 502 by applying a constant voltage to the motor 502 while the motor 502 being restrained in an experiment or the like. That is, a predetermined value is a current value which is a reference for determining whether the motor 502 is in a retrained state.

When the motor 502 is rotating toward the lock position from the restraining start position in the restraining range, the motor 502 will not be restrained; thus, the current that flows in the motor 502 will not be equal to or greater than a predetermined value. Therefore, the control unit 504 determines that the current data input from the A/D converter 508 is smaller than the predetermined value (step S533: NO). In such case, the control unit 504 does not stop the motor 502 (step S534) and run the motor 502 continuously, and also, continues to monitor the current data which is input from the A/D converter 508 (step S533).

When the motor 502 continues to rotate and the play and the like in the transmission mechanism and the like are fastened, the motor 502 is to be restrained at the lock position. Then, the current that flows in the motor 502 be equal to or greater than the predetermined threshold. Therefore, the control unit 504 determines that the current data input from the A/D converter 508 is equal to or greater than the predetermined value (step S533: NO). The control unit 504 outputs the stopping order to the motor driver 506 (step S535) . Then, the motor driver 506 which received the stopping order cuts off the current distribution to the motor 502 and the motor 502 stops. The stopping position of the motor 502 is at the lock position.

After the motor 502 stops, the control unit 504 rewrites the value of the initial position data 515A stored in the storage unit 505 with the value of the lock position data 515C (step S536). Thereafter, the control unit 504 ends the stopping process.

The above described is the operation of the motor control apparatus 501. The motor control apparatus 501 shown in FIG. 37 is used in a vehicle seat apparatus, for example. The vehicle seat apparatus includes the motor control apparatus 501 shown in FIG. 37 and the seat main body 90 shown in FIG. 8, and the moveable units in the set main body 90 are driven by the motors 302. Since the seat main body 90 is described in the description of the first embodiment, the description of the seat main body 90 is omitted here. The motors 502 of the sixth embodiment drive the moveable units which are driven by the motors 2 in the first embodiment instead of the motors 2. The moveable range is set in any of the moveable units in the seat main body 90 and stoppers are provided at both ends of each moveable range.

The embodiment of the present invention has the following advantages.
(1) There are play and raddling in the transmission mechanism provided between the motor and the moveable unit, and the motor further rotates even if the moveable unit moves to an end in the moveable range and is locked. Therefore, in a conventional technique (for example, JP 2010-33513), if the motor rotates reversely after the moveable unit moves to an end in the moveable range and the motor stops, only the motor rotates just after the rotation of the motor. However, because the moveable unit does not move, the current position information which is calculated at that time is to be mot matching the actual position of the moveable unit. In contrary, in the sixth embodiment of the present invention, while the position of the motor 502 is within the restraining range when the motor 502 is running (see step S531 (NO)), the motor 502 does not stop even if a predetermined stopping condition is fulfilled and the motor 502 continues to rotate (see step S534). Thereafter, when the motor 502 moves to the lock position and the current in the motor 502 increases (see step S533 (YES)), the motor 502 stops. Therefore, the motor 502 does not stop in the restraining range and stops at the lock position. Further, because the control unit 504 updates the value of the initial position data 515A to the value of the lock position data 515C (see step S536), even if accumulative error occurs in the position of the motor 502 which is calculated by the control unit 504, such error can be dissolved.
(2) If the position of the motor 502 is within the restraining range and if the rotation direction of the motor 502 is in the direction going toward the lock position from the restraining start position, pulses will not be generated accurately in the pulse signal that is output from the ripple extraction device 503 because the motor 502 rotates at very slow speed. Even in such case, the motor 502 does not stop in the restraining range and stops at the lock position (see step S535), the position of the motor 502 calculated by the control unit 504 is reset and the value of the initial position data 515A is updated to the value of the lock position data 515C. Therefore, even if pulses are not generated accurately in the pulse signal which is output from the ripple extraction device 503, the control unit 504 can calculate the position of the motor 502 accurately.
(3) After the motor 502 stops at the lock position, when the motor 502 is activated again (see step S514), the motor 502 is prohibited from stopping until the value of the position of the motor 502 calculated by the control unit 504 be equal to the value of the restraining start position data 515B (see step S514, step S515, step S518, step S538, step S537). Therefore, the motor 502 does not stop within the restraining range.
(4) The coordinate system in which the initial position, the restraining start position and the lock position are expressing the position of the motor 502 is defined (see FIG. 38), and the initial position data, the restraining start position data and the lock position data express the position of the motor 502 in the number of pulses. Therefore, the control unit 504 does not control the motor 502 by setting the coordinate system expressing the position of the moveable unit 599 as the reference, but the control unit 504 controls the motor 502 by setting the coordinate system expressing the position of the motor 502 as the reference (see DIG. 38). Thus, if the moveable unit 599 abuts the stopper 598 and the moveable unit 599 is restrained, the position control of the motor 502 is performed by considering that the motor 502 may further rotate.
(5) The advantages (1) to (9) described in the description of the first embodiment can also be obtained.

The embodiment to which the present invention is applicable is not limited to the above described embodiment, and arbitrary modifications from the above embodiment can be made within the scope of the present invention. Hereinafter, several modification examples will be described. The following modification examples may be combined to the extent possible.

### [Modification example 1 of the sixth embodiment]

Similarly to the modification example 1 of the third embodiment, the control unit 504 may set the count value N to the initial position data 515A instead of resetting the count value N to 0 in the above step S222. In such case, the process of step S225 is omitted. Further, in step S224, the control unit 504 updates the count value N by adding or subtracting 1 to or from the count value N every time a pulse in the pulse signal that is output by the ripple extraction device 503 is input (see the modification example 1 of the third embodiment) . The count value N which is updated in step S224 indicates the current position of the motor 502 and also expresses the distance to the current position from the original position in the number of pulses by setting the original position as the reference.

### [Modification example 2 of the sixth embodiment]

The ripple extraction device 503 is an example and is not limited to the circuit of the above embodiment. For example, the ripple extraction device 503 may be similar to that of the modification example 2 of the third embodiment.

### [Modification example 3 of the sixth embodiment]

Similarly to the modification example 1 of the first embodiment, the low cut-off frequency fc1 of the filter 40 may be set higher than the frequency of the ripple component (for example, the frequency at normal temperature).

### [Modification example 4 of the sixth embodiment]

Similarly to the modification example 2, the modification example 3 or the modification example 4 of the first embodiment, the filter 40 may be a low-pass filter, a high-pass filter or a band-stop filter.

### [Modification example 5 of the sixth embodiment]

Similarly to the modification example 5 of the first embodiment, one or both of the high-pass filter 20 and the band-pass filter 30 may be omitted. Similarly to the modification example 5 of the first embodiment,

### [Modification example 6 of the sixth embodiment]

Similarly to the modification example 6 of the first embodiment, the motor control apparatus 501 may be embedded in the power door-mirror apparatus or the power window apparatus.

### [Modification example 7 of the sixth embodiment]

Similarly to the modification example 7 of the first embodiment, the filter 40 may be a filter utilizing an operational amplifier (for example, a negative feedback type low-pass filter, a positive feedback type low-pass filter, a multiple negative feedback type band-pass filter, a multiple positive feedback type band-pass filter).

### [Notes on the sixth embodiment]

As can be understood from the above descriptions regarding the sixth embodiment, disclosure of various technical ideas, in addition to the inventions described in the following notes, are included in the descriptions of the sixth embodiment.

### Note 1

A motor control apparatus including:
a motor which drives a moveable unit which can move between two ends of a moveable range and which generates cyclical rippled in a current signal when activated,
a ripple extraction device which extracts a ripple component from the current signal of the motor and outputs a pulse signal which is formed by the ripple component being converted into ripples,
a current detection unit which detects a current in the motor,
a control unit in which data of the current detected by the current detection unit and the pulse signal are input and which controls the motor, and
a storage unit in which initial position data which expresses the initial position of the motor before the motor starts running in the number of pulses from the initial position to a predetermined original position, restraining start position data which expresses a restraining start position of the motor that is a position from which the motor can further rotate by the moveable unit moving to the end from inside the moveable range in the number of pulses from the restraining start position to the original position, and lock position data which expresses a lock position of the motor where the motor is restrained not being able to rotate further by the moveable unit positioning at the end of the moveable range in the number of pulses from the lock position to the original position, and
the control unit executes
an activation process of activation the motor,
a counting process of counting the number of pulses generated in the pulse signal after the activation process every time a pulse of the pulse signal is input after the activation process, and adding the counted number of pulses to an initial position data value or subtracting the counted number of pulses from the initial position data value,
a determining process of determining whether the position of the motor is between the restraining start positions by comparing the difference or the sum calculated in the counting process after the activation process to the restraining start position data values,
a stopping process of making the motor rotate continuously until the current data which is input from the current detection unit be equal to or greater than a predetermined value and making the motor stops if the current data which is input from the current detection unit be equal to or greater than the predetermined value if it is determined that the position of the motor is not between the restraining start positions in the determining process, and
an update process of rewriting the initial position data stored in the storage unit with the lock position data after the stopping process.

### Note 2

The motor control apparatus described in note 1 wherein the control unit executes
a second determining process of determining whether the initial position data value is equal to the lock position data value, and
a prohibiting process of prohibiting the motor from stopping until the difference or the sum calculated in the counting process after the activation process is executed be equal to the restraining start position data value if it is determined that the initial position data value is equal to the lock position data value.

### Note 3

The motor control apparatus described in note 1 or 2 wherein the control unit further executed a second stopping process of stopping the motor if it is determined that the position of the motor is between the restraining start positions in the determining process.

### Note 4

The motor control apparatus described in note 2 wherein the control unit executes the activation process if it is determined that the initial position data value is not equal to the lock position data value in the second determining process.

### Note 5

The motor control apparatus described in any of notes 1 to 4 wherein the control unit executes the determining process if a predetermined stopping condition is fulfilled after the activation process.

### Note 6

A vehicle seat apparatus including
the motor control apparatus described in any of notes 1 to 5, and
a seat main body including the movement unit which is driven by the motor.

### (a) Advantage obtained in the invention described in note 1

The initial position, the restraining start position and the lock position are defined by the coordinate system expressing the position of the motor and the initial position data, the restraining start position data and the lock position data express the position of the motor in the number of pulses. Therefore, the control unit can perform the process by using the coordinate system which expresses the position of the motor. Thus, the difference or the sum calculate by the control unit in the counting process can accurately express the actual position of the motor and also, whether the position of the motor is between the restraining start positions can be determined accurately in the determining process.

If it is determined that the position of the motor is not between the restraining start position, the moveable unit moves to an end of the moveable range and is locked and the control unit makes the motor rotate continuously thereafter. When the play, rattling and the like in the transmission mechanism between the motor and the moveable unit are fastened, load on the motor be larger and current in the motor increases. At this time, because the control unit stops the motor when the current data input from the current detection unit is equal to or greater than a predetermined value, the motor stops as the state where it is locked at the lock position. Thereafter, because the initial position data is rewritten with the number of pulses which is the lock position data value expressing the lock position, the initial position data accurately expresses the actual lock position of the motor. Therefore, even if the moveable unit moves to an end of the moveable range and is locked and the motor further rotates, the position of the motor is calculated accurately.

Even if the pulses of ripples are not generated accurately when the moveable unit moves to an end of the moveable range and is locked and the motor further rotates, the initial position data is rewritten to the lock position data value which expresses the lock position data after the stopping process. Therefore, the position of the motor is calculated accurately even when the motor is running thereafter. That is, even if accumulative error occurs in the position of the motor which is calculated by the control unit, the error can be dissolved.

### (b) Advantage obtained in the invention described in note 2

If the control unit determines that the initial position data value is equal to the lock position data value in the second determining process, the initial position of the motor before it starts running is the lock position. In such case, the motor is prohibited from stopping until the difference or the sum calculated by the control unit in the counting process be equal to the restraining start position data value. Therefore, the motor does not stop between the lock position and the restraining start position. Thus, the position of the motor calculated by the control unit accurately expresses the actual position of the motor. Therefore, the position of the motor can be controlled accurately.

### (s) Advantage obtained in the invention described in note 3

If the control unit determined that the position of the motor calculated by the control unit is between the restraining start position, the control unit stops the motor. Therefore, the stopping position of the motor is between the restraining start positions. Thus, the position of the motor calculated by the control unit when the control unit makes the motor run thereafter accurately expresses the actual position of the motor. Accordingly, the position of the motor can be controlled accurately.

### (b) Advantage obtained in the invention described in note 5

Even when a predetermined stopping condition is fulfilled, the control unit executed the determining process. As a result of the determining, if the control unit executed the stopping process, the motor stops after the motor continues to rotate. That is, even if a predetermined stopping condition is fulfilled when the position of the motor falls between the restraining start position and the lock position, the motor does not stop right away and stops at the lock position.

### [Seventh embodiment]

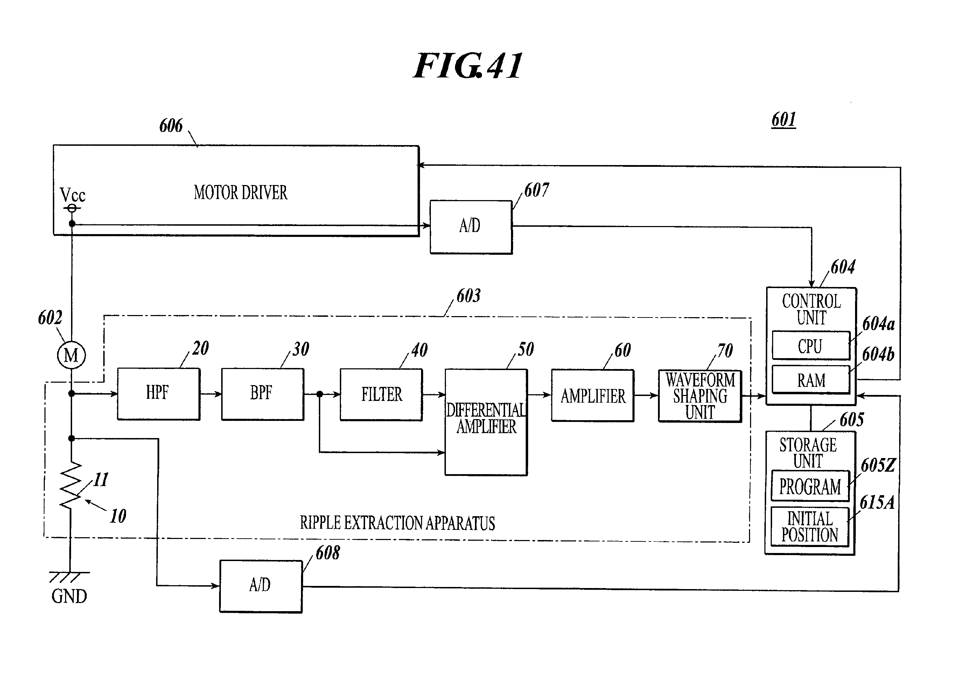

FIG. 41 is a block diagram of the motor control apparatus 601.

The motor control apparatus 601 includes a motor 602, a ripple extraction device 603, a control unit 604, a storage unit 605, a motor driver 606, an A/D converter 607, an A/D converter 608 and such like.

The motor 602 is a direct current motor. When current flows in to the motor 602, the motor 602 rotates and generates cyclical ripples in the current. The current signal of the motor 602 is similar to the current signal of the motor 2 in the first embodiment (see FIGS. 2 and 3).

The ripple extraction device 603 extracts the ripple component from the current signal of the motor 602, converts the ripple component into pulses and outputs the pulse signal which is formed by the ripple component being converted into pulses to the control unit 604. The ripple extraction device 603 and the ripple extraction method using the ripple extraction device 603 will be described in detail.

As shown in FIG. 41, the ripple extraction device 603 has the configuration similar to that of the ripple extraction device 3 in the first embodiment (see FIG. 1). That is, the ripple extraction device 603 includes a current-voltage converter 10, a high-pass filter 20, a band-pass filter 30, a filter 40, a differential amplifier 50, an amplifier 60 and a waveform shaping unit 70. The current-voltage converter 10, the high-pass filter 20, the band-pass filter 30, the filter 40, the differential amplifier 50, the amplifier 60 and the waveform shaping unit 70 of the ripple extraction device 603 are respectively provided in a similar manner as the current-voltage converter 10, the high-pass filter 20, the band-pass filter 30, the filter 40, the differential amplifier 50, the amplifier 60 and the waveform shaping unit 70 of the ripple extraction device 3 in the first embodiment (see FIGS. 4 to 6, 7A, 7B, 7C and 9 to 10).

The motor driver 606 drives the motor 602 in compliance with the order from the control unit 604. That is, upon receiving the activation order and the rotation direction order from the control unit 604, the motor driver 6 activates the motor 602 in the rotation direction. The motor driver 606 drives the motor 602 at the set speed according to the set speed order received from the control unit 604. Upon receiving the stopping order from the control unit 604, the motor driver 606 stops the motor 602.

The A/D converter 607 is a voltage detection unit which detects the power supply voltage of the motor 602 and outputs the power supply voltage to the control unit 604. The A/D converter 608 is a current detection unit which detects the current value of the motor 602 and output the current value to the control unit 604. The motor drivers 607 and 608 are respectively provided in a similar manner as the A/D converters 107A and 108A in the second embodiment.

The control unit 604 is a computer including a CPU 604a, a RAM 604b and such like. The CPU 604a performs various processes such as numeric calculation, information processing, device controlling and the like. The RAM 604b provides the CPU 604a with a working region as a temporary storage region. In the control unit 604, the pulse signal which is output by the waveform shaping unit 70 is input.

The storage unit 605 is connected with the control unit 604. The storage unit 605 is a readable and writable storage medium such as a non-volatile memory and a hard disk. The storage unit 605 may be constituted of one storage medium or may be a combination of a plurality of storage mediums.

In the storage unit 605, the initial position data 615A is stored. The initial position data 615A indicates the initial rotational position of the motor 602 before the motor 602 starts running and the initial position of the moveable unit which is driven by the motor 602. In particular, the initial position data 615A is the number of pulses in the pulse signal when the motor 602 rotates to the initial rotational position from a predetermined original position. The value obtained by multiplying the number of pulses by a predetermined constant number is the rotation amount of the motor 602 when the motor 602 rotates to the initial rotational position from the predetermined original position and indicates the initial rotational position of the motor 602 before the motor 602 starts running. The initial position data 615A is a default value which is set in advance or is a value which is written at the previous running of the motor 602. If the initial rotational position of the motor 602 is the original position, the initial position data 615A is 0.

In the storage unit 605, the program 605Z which is readable by the control unit 604 is stored. The control unit 604 reads the program 605Z and performs processes in compliance with the program 605Z, and also, realizes various types of functions according to the program 605Z. If the storage unit 605 is a combination of a plurality of storage mediums, the program 604Z may be stored in the ROM of the storage unit 605.

The flow of the process performed by the control unit 604 based on the program 605Z will be described and the operation of the motor control apparatus 601 associated with the process performed by the control unit 604 will be described.

If a predetermined condition is fulfilled, the control unit 604 executes the activation process of the motor 602 (see FIG. 23). A predetermined condition being fulfill includes, for example, a user turning on the activation switch, the activation sensor being turned on, a predetermined condition being fulfilled with a process being executed by the control unit 604 (for example, a sequence process) and the like. The activation process of the motor 302 performed by the control unit 604 is similar to the activation process of the motor 202 performed by the control unit 204 in the third embodiment. Therefore, the description of the activation process performed by the control unit 304 will be omitted.

While the motor 602 is running, the ripple extraction device 603 extracts (detects) the ripple component from the current signal of the motor 602 and converts the ripple component into ripples. Then, the ripple extraction device 603 outputs the pulse signal which is formed by converting the ripple component into pulses to the control unit 604.

When the motor 602 is activated, the control unit 604 counts the number of pulses in the pulse signal and calculates the rotation amount of the motor 602 and the rotational position of the motor 602 based on the pulse signal which is input from the ripple extraction device 603. In particular, by the control unit 604 executing the process shown in FIG. 24, the number of the pulses in the pulse signal is counted, the rotation amount of the motor 602 is calculated and the rotational position of the motor 602 is calculated. The counting process of the number of pulses performed by the control unit 604 (FIG. 24) is similar to the counting process of the number of pulses performed by the control unit 204 in the third embodiment. Here, in step S225, the control unit 604 adds the updated count value N to the initial position data 615A which is read from the storage unit 605 or subtracts the updated count value N from the initial position data 615A. In step S221, the control unit 604 may monitor the current data input from the A/D converter 608 and the control unit 604 may compare the current data to a predetermined threshold. In such case, when current is distributed to the motor 602, the control unit 604 determines that the current data exceeded the predetermined threshold and detects the current distribution in and the activation of the motor 602 (step S221: Yes). In step S226, the control unit 604 may compare the current data which is input from the A/D converter 608 to a predetermined threshold. In such case, if the current is not cutoff in the motor 602, the control unit 604 determines that the current data exceeded the predetermined threshold (step S226: No) and the control unit 604 performs the process of step S223 to step S225 again.

After the process shown in FIG. 24, the control unit 604 writes the difference or the sum obtained in the last step S225 while repeating the process of step S223 to step S226 shown in FIG. 24 in the storage unit 605. In particular, the control unit 604 rewrites the initial position data 615A which is stored in the storage unit 605 with the difference or the sum obtained in the last step S225.

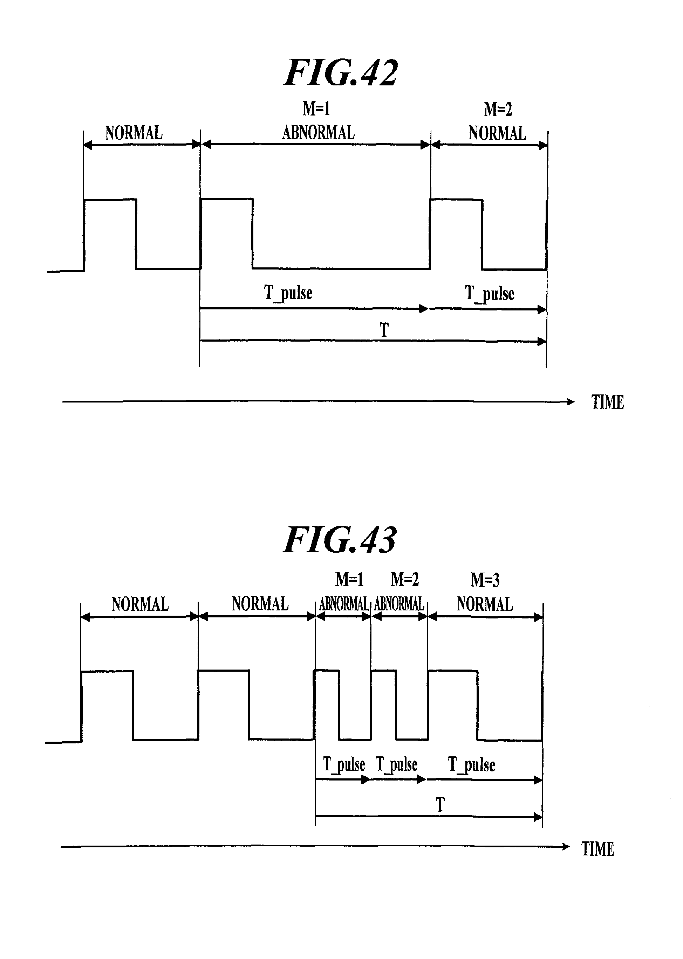

In some cases, an abnormality may occur in the pulse signal which is generated by the ripple extraction device 603. For example, there may be a case where the abnormal pulse cycle be longer than the normal pulse cycle as a result of a pulse missing as shown in FIG. 42. When such mission of a pulse occurs, the number of pulses (the count value N) in the pulse signal obtained in the process shown in FIG. 24 is smaller comparing to the normal case. On the other hand, as a result of a pulse being divided in a plurality of sections, the abnormal pulse cycle become shorter than the normal pulse cycle as shown in FIG. 43. When such dividing of a pulse occurs, the number of pulses (the count value N) in the pulse signal obtained in the process shown in FIG. 24 is greater comparing to the normal case. In view of this, the control unit 604 performs the following process (see FIGS. 26, 44 to 45) to correct the number of pulses (the count value N) obtained in the process shown in FIG. 24.

While the motor 602 is running, the control unit 604 times the pulse cycles of the pulses in the pulse signal. In particular, the control unit 604 executes the process shown in FIG. 26 to sequentially time the pulse cycles of individual pulse, each pulse cycle being from when a pulse rises to when the next pulse rises, and sequentially stores the timed pulse cycles in the RAM or the storage unit 605. The measuring process of pulse cycles performed by the control unit 604 (FIG. 26) is similar to the measuring process of the number of pulses performed by the control unit 204 in the third embodiment. Therefore, the description of the pulse cycle measuring process performed by the control unit 604 will be omitted.

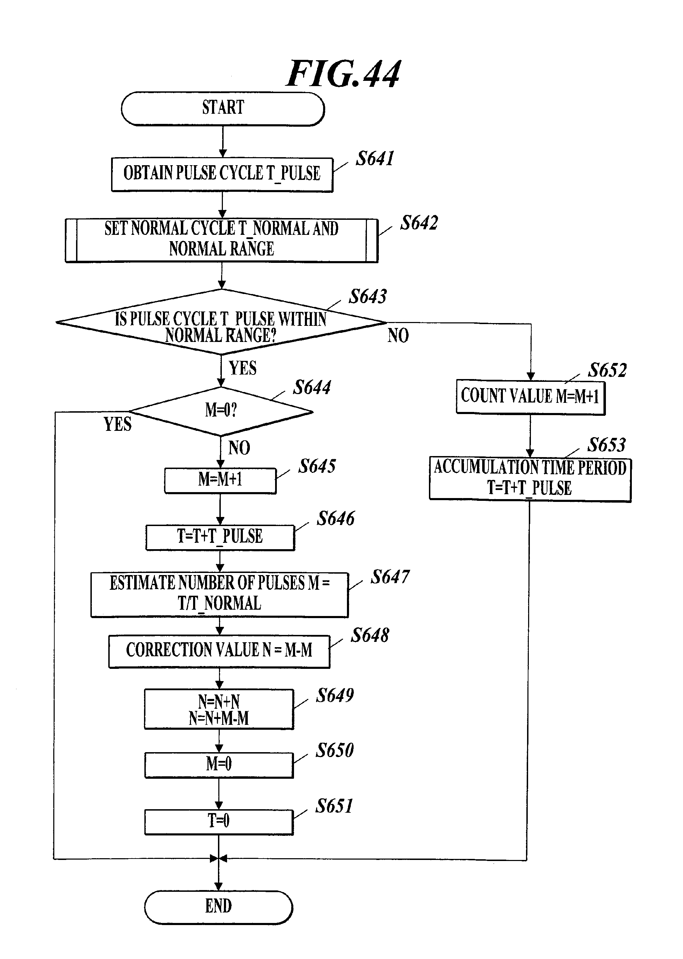

The control unit 604 executes the process shown in FIG. 44 every time the timing of a pulse cycle in the pulse signal output from the ripple extracting apparatus ends (see FIG. S234). Therefore, if the pulses in the pulse signal output by the ripple extraction device 603 are generated continuously, the control unit 604 repeats the process shown in FIG. 44. If the process shown in FIG. 44 is repeatedly executed, the control unit 604 counts the count value M and integrates the accumulation time period T. As shown in FIGS. 42 and 43, the count value M indicates the number of times abnormal cycles of pulses occurred continuously. However, if a normal cycle of pulse occurs after an abnormal cycle of pulse, the first normal pulse cycle occurred after the abnormal pulse cycle is also counted as an abnormal pulse cycle in the count value M. The accumulation time period T indicates the time period when pulses of abnormal cycles occur continuously. If a pulse with normal cycle occurs after a pulse with abnormal cycle, the cycle of the first pulse with normal cycle occurred after the pulse with abnormal cycle is also added to the accumulation time period T.

Before the control unit 604 executed the process shown in FIG. 44 for the first time after the motor 602 is activated, the control unit 604 resets the count value M to 0 and resets the accumulation time period T to 0. Further, if a pulse with normal cycle occurs after a pulse with abnormal cycle while the motor 602 is running, the control unit 604 resets the count value M and the accumulation time period T to 0 (see step S650, step S651).

The process shown in FIG. 44 will be described in detail.

First, before the control unit 604 resets (see step S231) the timed time (the pulse cycle T_pulse) which ended in step S234, the control unit 604 obtains the timed time as the pulse cycle T_pulse (step S641). Here, in a case where the control unit 604 executes the process shown in FIG. 44 again, when the control unit 604 obtains the pulse cycle T_pulse (step S641), the control unit 604 deletes the pulse cycle T_pulse obtained in the previous execution and updates to the currently obtained pulse cycle T_pulse.

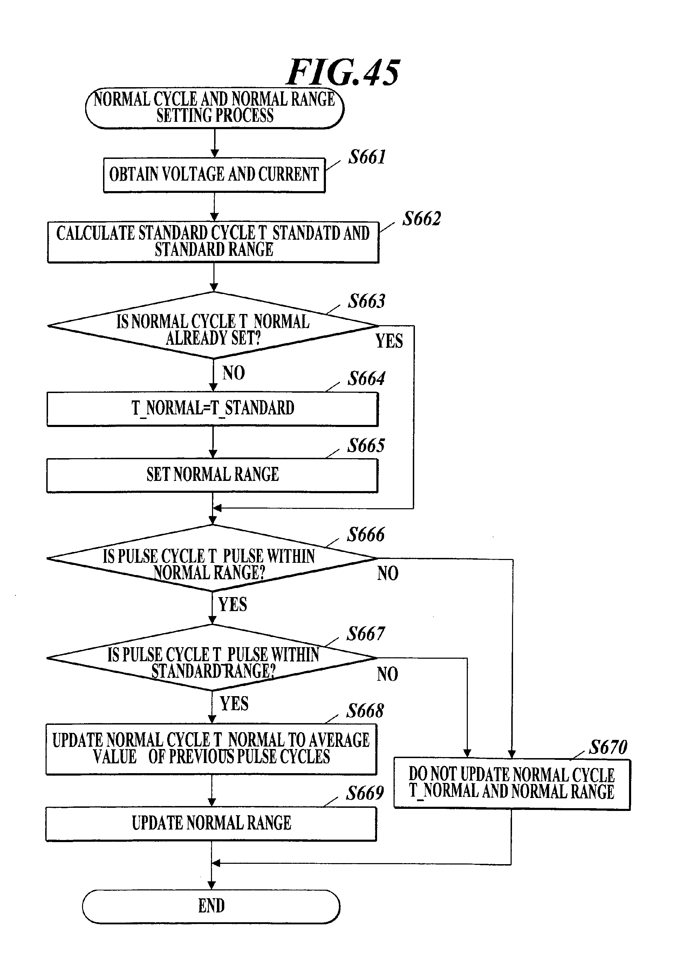

Next, the control unit 604 sets the normal cycle T_normal and the normal range (step S642). The normal cycle T_normal indicates a pulse cycle with no pulse missing and no pulse division. The normal range is a range including the normal cycle T_normal. In particular, the normal range is a range where the normal cycle T_normal is the center thereof and is a range from the lower limit value T_min1 obtained by subtracting a predetermined value from the normal cycle T_normal to the upper limit value T_max1 obtained by adding a predetermined value to the normal cycle T_normal. The lower limit value T_min1 < the upper limit value T_max1. Here, the normal cycle T_normal may be the average value of the lower limit value T_min1 and the upper limit value T_max1 or the normal cycle T_normal may be off from the average value of the lower limit value T_min1 and the upper limit value T_max1. The process to set the normal cycle T_normal and the normal range performed by the control unit 604 (see FIG. 45) will be described later.

Next, the control unit 604 compares the pulse cycle T_pulse obtained in step S641 to the lower limit value T_min1 and the upper limit value T_max1 of the normal range to determine whether the pulse cycle T_pulse fall within the normal range (step S643) . If the control unit 604 determined that the pulse cycle T_pulse is within the normal range (step S643: YES), the control unit 604 determines whether the count value M is 0 to determine whether the number of pulses with abnormal cycles are being counted (step S644) . If the control unit 604 determines that the count value M is 0 and that the number of pulses with abnormal cycles is not being counted (step S644: YES), the control unit 604 ends the process shown in FIG. 44.

Because the process shown in FIG. 44 is executed every time the control unit 604 ends the timing of a pulse cycle in the pulse signal that is output by the ripple extraction device 603 (see step S234), the control unit 604 repeats the process of step S641, step S642, step S643(YES) and step S644 (YES) until a pulse with abnormal cycle is generated in the pulse signal output from the ripple extraction device 603 if pulses with normal cycles are continuously generated in the pulse signal output from the ripple extraction device 604 while the motor 602 is running. If pulses with normal cycles are continuously generated in the pulse signal output from the ripple extraction device 603, the number of pulses (the count value N) obtained in the process shown in FIG. 26 will not be corrected.

On the other hand, if a pulse with abnormal cycle occurs in the pulse signal output from the ripple extraction device 603, the control unit 604 determines that the pulse cycle T_pulse is outside of the normal range (step S643: NO). As a result of such determination, the control unit 604 starts counting the number of pulses with abnormal cycles and the control unit 604 updates the count value M to the value obtained by adding 1 to the count value M (step S652). Further, the control unit 604 updates the accumulation time period T (step S653). In particular, the control unit 604 updates the accumulation time period T to the value obtained by adding the pulse cycle T_pulse obtained in step S641 to the accumulation time period T (step S653). Thereafter, the control unit 604 ends the process shown in FIG. 44.

Because the process shown in FIG. 44 is executed every time the control unit 604 ends the timing of a pulse cycle in the pulse signal that is output by the ripple extraction device 603 (see step S234), the control unit 604 repeats the process of step S641, step S642, step S643 (NO), step S652 and step S653 until a pulse with normal cycle is generated in the pulse signal output from the ripple extraction device 603 if pulses with abnormal cycles are generated continuously in the pulse signal output from the ripple extraction device 603 while the motor 602 is running. Therefore, as shown in FIGS.42 and 43, if a pulse with abnormal cycle is generated in the pulse signal output from the ripple extraction device 603, the control unit 604 continues to count the number of pulses with abnormal cycles (the count value N) included in the pulse signal until a pulse with normal pulse is generated in the pulse signal output from the ripple extraction device 603 thereafter (step S652) and continues to integrate the cycles of the pulses with abnormal cycles included in the pulse signal (step S653).

If a pulse with normal cycle is generated in the pulse signal output from the ripple extraction device 603 after a pulse with abnormal cycle is generated in the pulse signal output from the ripple extraction device 603 (after step S643 (NO), step S652 and step S653), the control unit 604 determines that the pulse cycle T_pulse falls within the normal range (step S643: YES). Because the count value M is greater than 0, the control unit 604 determines that the count value M is not 0 and determines that the number of pulses with abnormal cycles is being counted by the control unit 604 (step S644: NO) . If the process of the control unit 604 moves on to step S645 as a result of the determination of step S643 and step S644, the control unit 604 updates the count value M to the value obtained by adding 1 to the count value M. The process of step S645 is a process to count the pulse with normal cycle which is generated after a pulse with abnormal cycle in the count value M as a pulse with abnormal cycle. Further, the control unit 604 updates the accumulation time period T (step S646). In particular, the control unit 604 updates the accumulation time period T to the value obtained by adding the pulse cycle T_pulse obtained in step S641 to the accumulation time period T (step S646). The process of step S646 is a process of adding the cycle of a pulse with normal cycle that is generated after a pulse with abnormal cycle to the accumulation time period T as a pulse with abnormal cycle.

Next, the control unit 604 divides the integrated accumulation time period T by the normal cycle T_normal and obtains the value calculated by the division as the estimate number of pulses m (step S647). The estimate number of pulses m is an estimate value expressing the number of pulses with normal cycles if pulses with normal cycles are generated in the time period (the accumulation time period) which is from the time the first pulse with abnormal cycle is generated to when the first pulse with normal cycle is generated thereafter.

Next, the control unit 604 obtains the value calculated by subtracting the count value M from the estimate number of pulses m as the correction value n (step S648). The correction value n is the difference between the number of pulses with normal cycles (the estimate number of pulses m) supposedly occurred in the time period (the accumulation time period T) which is from when the first pulse with abnormal cycle is generated to when the first pulse with normal cycle is generated thereafter and the number of pulses actually generated during the time period (the count value M). If there is a pulse missing, the correction value n is to be a positive value and if a pulse is divided, the correction value n is to be a negative value.

Next, the control unit 604 corrects the number of pulses (the count value N) which is being counted in the process of FIG. 24 (step S649). In particular, the control unit 604 updates the count value N to the value obtained by adding the correction value n to the count value N (step S649). Here, the control unit 604 may update the count value N to the value obtained by adding the estimate number of pulses m to the count value N and subtracting the count value M from the obtained sum. The updated count value N is the number of pulses with the number of pulses which were not counted due to being missing (the absolute value of the correction value n) added thereto or is the number of pulses with the number of pulses counted excessively due to a pulse being divided (the absolute value of the correction value n) being subtracted therefrom. Therefore, even if pulse dividing and pulse missing occur, the accurate number of pulses (the count value N) is calculated and the number of pulses (the count value N) accurately indicates the rotation amount of the motor 602 and the movement amount of the moveable unit.

After correcting the count value N, the control unit 604 resets the count value M and the accumulation time period T to 0 (step S650, step S651) . Then, the control unit 604 ends the process shown in FIG. 44.

The setting process of the normal cycle T_normal and the normal range in step S642 will be described in detail with reference to FIG. 45.

First, in the control unit 604, the current data detected by the A/D converter 607 and the voltage data detected by the A/D converter 608 are input (step S661).

Next, the control unit 604 calculates the pulse cycle corresponding to the rotation speed of the motor 602 as the standard cycle T_standard based on the current data and the voltage data which are input (step S662). Further, the control unit 604 calculates the standard range (step S662). In particular, the control unit 604 calculates the lower limit value T_min2 of the standard range by subtracting a predetermined value from the standard cycle T_standard and also calculates the upper limit value T_max2 of the standard range obtained by adding a predetermined value to the standard cycle T_standard. The standard range is a range including the standard cycle T_standard, and preferably, is a range where the standard cycle T_standard is the center thereof. The standard cycle T_standard may be the average value of the lower limit value T_min2 and the upper limit value T_max2 or may be off from the average value. Here, when calculating the standard cycle T_standard, previous averages, rotational position of the motor 602, load, environmental temperature or the rotation direction of the motor 602 may be considered.

Next, if the control unit 604 is to execute the process shown in FIGS. 44 and 45 for the first after the motor 602 is activated, because the normal cycle T_normal is not set (step S663: NO), the control unit 604 sets the value of the standard cycle T_standard as the normal cycle T_normal (step S664). Further, the control unit 604 sets the value of the lower limit value T_min2 of the standard range as the lower limit value T_min1 of the normal range and also sets the value of the upper limit value T_max2 of the standard range as the upper limit value T_mat1 of the normal range (step S665). Here, the control unit 604 may set the default value as the normal cycle T_normal (step S664) instead of setting the value of the standard cycle T_standard as the normal cycle T_normal, and may set the default upper limit value and lower limit value as the lower limit value T_min1 and the upper limit value T_max1 of the normal range (step S665).

On the other hand, if the control unit 604 executes the process shown in FIGS. 44 and 45 again after the motor 602 is activated, because the normal cycle T_normal is already set (step S663: YES), the control unit 4 omits the process of step S664 and step S775.

Next, the control unit 604 compares the pulse cycle T_pulse obtained in step S641 to the lower limit value T_min1 and the upper limit value T_max1 of the normal range to determine whether the pulse cycle T_pulse falls in the normal range (step S666) . Further, the control unit 604 compares the pulse cycle T_pulse obtained in step S641 to the lower limit value T_min2 and the upper limit value T_mas2 of the standard range to determine whether the pulse cycle T_pulse falls in the standard range (step S667).

If the pulse cycle T_pulse is outside of the normal range (step S666: NO) or if the pulse cycle T_pulse is outside of the standard range (step S667: NO), the control unit 604 maintain the normal cycle T_normal and the normal range without updating them (step S670) and ends the process shown in FIG. 45.

On the other hand, if the pulse cycle T_pulse is within the normal range and the pulse cycle T_pulse is within the standard range (step S666: YES, step S667: YES), the control unit 604 calculates the average value of the previous pulse cycles of the pulses stored in the RAM or the storage unit 605 (including the pulse cycle T_pulse of the current pulse). Then, the control unit 604 updates the normal cycle T_normal to the average value (step S668). Further, the control unit 604 updates the normal range to the range with the calculated average value being the center thereof (step S669). In particularly, the control unit 604 updates the lower limit value T_min1 of the normal range to the value obtained by subtracting a predetermined value from the average value (step S66). Further, the control unit 604 updates the upper limit value T_max1 of the normal range to the value obtained by adding a predetermined value to the average value (step S669). Then, the control unit 604 ends the process shown in FIG. 45.

If the control unit 604 executes the process shown in FIGS. 44 and 45 for the first time after the motor 602 is activated, the value of the pulse cycle T_pulse which is timed is to be set as the normal cycle T_normal (see step S668), or the value of the pulse cycle (the standard cycle T_standard) corresponding to the rotation speed of the motor 602 based on the current and voltage data of the motor 602 or the default is set as the normal cycle T_normal (see step S664, step S670) . If the control unit 604 executes the process shown in FIGS. 44 and 45 again, the average value of the pulse cycles measured by then is set as the normal cycle T_normal (see step S668), or the last setting or the updated normal cycle T_normal is not updated and is maintained as it is (step S670) . Therefore, the normal cycle T_normal is not a constant value and is set based on the pulse cycles which are actually measured. Therefore, even if the frequency and the amplitude of each component in the current signal of the motor 602 varies due to causes such as disturbances like noises and the like, conditions, errors, individual differences, change over the years of the motor 602 and the like, these causes are reflected on the setting of the normal cycle T_normal. Therefore, disturbances such as noise, conditions, errors, individual differences, changes over the years of the motor 602 and the like can be dealt with.

The above described is the operation of the motor control apparatus 601. The motor control apparatus 601 shown in FIG. 41 is used in a vehicle seat apparatus, for example. The vehicle seat apparatus includes the motor control apparatus 601 shown in FIG. 41 and the seat main body 90 shown in FIG. 8, and the moveable units in the set main body 90 are driven by the motors 602. Since the seat main body 90 is described in the description of the first embodiment, the description of the seat main body 90 is omitted here. The motors 602 of the seventh embodiment drive the moveable units which are driven by the motors 2 in the first embodiment instead of the motors 2.

The embodiment of the present invention has the following advantages.
(1) Even if a pulse is divided and the number of pulses counted by the control unit 604 (the count value N) is greater than the number of pulses corresponding to the actual rotation amount of the motor 602, correction is performed so that the surplus (the absolute value of the correction value n) is subtracted from the number of pulses counted by the control unit 604 (the count value N) (see step S649). On the other hand, even if a pulse is missing and the number of pulses counted by the control unit 604 (the count value N) is smaller than the number of pulses corresponding to the actual rotation amount of the motor 602, correction is performed so that the loss (the absolute value of the correction value n) is add to the number of pulses counted by the control unit 604 (the count value N) (see step S649). Therefore, detection of rotation amount, position and the like of the motor 602 can be performed accurately.
(2) Because the normal cycle T_normal is not a constant value and is set based on the actually measured pulse cycles (see step S668), the conditions, errors, individual differences, changes over the years and the like of the motor 602 and the like can be dealt with.
(3) The advantages (1) to (9) described in the description of the first embodiment can also be obtained.

The embodiment to which the present invention is applicable is not limited to the above described embodiment, an arbitrary modifications can be made to the above described embodiment within the scope of the present invention. Hereinafter, several embodiments will be described. The following embodiments may be combined to the extent possible.

### [Modification example 1 of the seventh embodiment]

In the process shown in FIG. 45, the process of the control unit 604 may move on to step S664 from step S662 and also the process of the control unit 604 may be ended after step S665. In such way, for each pulse in the pulse signal, the control unit 604 calculates the pulse cycle corresponding to the rotation speed of the motor 602 as the standard cycle T_standard and calculates the standard range based on the current data and the voltage data which are input (step S662), and updates the normal cycle T_normal to the value of the standard cycle T_standard (step S664), updates the lower limit value T_min1 of the normal range to the value of the lower limit value T_min2 of the standard range and update the upper limit value T_max1 of the normal range to the value of the upper limit value T_max2 of the standard range (step S665).

In such case, the errors in counting the number of pulses that occurred due to missing of a pulse and a pulse being divided can be dissolved even if the load, friction and the like in the motor 602 vary and the rotation speed of the motor 602 varies while the motor 602 is running.

### [Modification example 2 of the seventh embodiment]

In step S642 of the process shown in FIG. 44, the control unit 604 may set a certain value which is obtained in advance as the normal cycle T_normal and may set a range including the certain value as the normal range.

### [Modification example 3 of the seventh embodiment]

In the above step S222, the control unit 604 may set the count value N to the initial position data 615A instead of resetting the count value N to 0. In such case, the process of step S225 is omitted. Further, in step S224, the control unit 604 updates the count value N by adding or subtraction 1 to or from the count value N every time a pulse of the pulse signal which is output by the ripple extraction device 603 is input. Further, in step S649, the control unit 604 updates the count value N to the value obtained by adding the correction value n to the count value N or updates the count value N to the value obtained by subtracting the correction value n from the count value N (step S649). The control unit 604 decides the arithmetic in step S224 and step S649 according to the direction decided in step S611. For example, if the rotation direction decided in step S611 is in the normal rotation, the control unit 604 performs the addition in step S24 and step S649, and if the rotation direction decided in step S611 is the reverse rotation, the control unit 604 performs the subtraction in step S224 and step S649. Naturally, the relationship between the rotation direction and the arithmetic may be the other way around.

The count value N updated in step S224 indicates the rotational position of the motor 602 and also indicates the distance from the original position, the original position being the reference.

### [Modification example 4 of the seventh embodiment]

The ripple extraction device 603 is an example and is not limited to the circuit of the above embodiment. For example, the ripple extraction device 603 may be similar to that in the modification example 2 of the third embodiment.

### [Modification example 5 of the seventh embodiment]

Similarly to the modification example 1 of the first embodiment, the low cut-off frequency fc1 of the filter 40 may be set higher than the frequency of the ripple component (for example, the frequency at normal temperature).

### [Modification example 6 of the seventh embodiment]

Similarly to the modification example 2, the modification example 3 or the modification example 4 of the first embodiment, the filter 40 may be a low-pass filter, a high-pass filter or a band-stop filter.

### [Modification example 7 of the seventh embodiment]

Similarly to the modification example 5 of the first embodiment, one or both of the high-pass filter 20 and the band-pass filter 30 may be omitted. If the high-pass filter 20 is to be omitted, the output of the current-voltage converter 10 is connected with the input of the band-pass filter 30. If the band-pass filter 30 is to be omitted, the output of the high-pass filter 20 is connected with the input of the filter 40 and the input of the differential amplifier 50. If both of the high-pass filter 20 and the band-pass filter 30 are to be omitted, the output of the current-voltage converter 10 is connected with the input of the filter 40 and the input of the differential amplifier 50.

### [Modification example 8 of the seventh embodiment]

Similarly to the modification example 6 of the first embodiment, the motor control apparatus 601 may be embedded in the power door-mirror apparatus or the power window apparatus.

### [Modification example 9 of the seventh embodiment]

Similarly to the modification example 7 of the first embodiment, the filter 40 may be a filter using an operational amplifier (for example, a negative feedback type low-pass filter, a positive feedback type low-pass filter, a multiple negative feedback type band-pass filter, a multiple positive feedback type band-pass filter).

### [Notes on the sixth embodiment]

As can be understood from the above descriptions regarding the seventh embodiment, disclosure of various technical ideas, in addition to the inventions described in the following notes, are included in the descriptions of the seventh embodiment.

### Note 1

A motor control apparatus including
a motor which generates cyclical ripples in a current signal when activated,
a ripple extraction device which extracts a ripple component from the current signal of the motor and outputs a pulse signal which is formed by converting the ripple component into pulses, and
a control unit to which the pulse signal in input and which controls the motor, and
the control unit executes
a first process of counting the number of pulses in the pulse signal,
a second process of timing pulse cycles of individual pulses in the pulse signal,
a third process of calculating a value obtained by integrating the pulse cycles timed in the second process in a period from when the pulse cycles timed in the second process be outside of a normal range which includes a normal cycle to when the pulse cycles timed in the second process be within the normal range as an accumulation time period,
a fourth process of counting the number of pulses in the pulse signal in the period from when the pulse cycles timed in the second process be outside of a normal range which includes a normal cycle to when the pulse cycles timed in the second process be within the normal range as an accumulation time period,
a fifth process of calculating a value obtained by dividing the accumulation time period calculated in the third process by the normal cycle as an estimate number of pulses, and
a sixth process of updating the number of pulses counted in the first process to a value obtained by adding the estimate number of pulses calculated in the fifth process to the number of pulses counted in the first process and subtracting the number of pulses counted in the fourth process from the obtained sum.

### Note 2

The motor control apparatus described in note 1 further including
a voltage detection unit which detects a voltage in the motor, and
a current detection unit which detects a current in the motor, and
in the second process, the control unit sequentially stores the counted pulse cycles,
the control unit executes a seventh process of setting the normal cycle and the normal range for each pulse in the pulse signal,
the seventh process includes
calculating a standard cycle corresponding to a rotation speed of the motor based on the voltage detected by the voltage detection unit and the current detected by the current detection unit and calculating a standard range including the standard cycle,
when the pulse cycle timed in the second process is within the standard range and the normal range, updating the normal cycles to the average value of the pulse cycles of individual pulses stored in the fourth process, updating a lower limit value of the normal range to a value obtained by subtracting a predetermined value from the average value and updating an upper limit value of the normal range to a value obtained by adding a predetermined value to the average value, and
maintaining the normal cycle and the normal range without updating them when the pulse cycle timed in the second process is outside of the standard range or when the pulse cycle timed in the second process is outside of the normal range.

### Note 3

The motor control apparatus described in note 1 further including
a voltage detection unit which detects a voltage in the motor, and
a current detection unit which detects a current in the motor, and
the control unit executed a seventh process of setting the normal cycles and the normal range for each pulse in in the pulse signal,
the seventh process includes calculating a standard cycle corresponding to a rotation speed of the motor based on the voltage detected by the voltage detection unit and the current detected by the current detection unit, updating the normal cycle to the standard cycle, updating a lower limit value of the normal range to a value obtained by subtracting a predetermined value from the standard cycle and updating an upper limit value of the normal range to a value obtained by adding a predetermined value to the standard cycle.

### Note 4

A vehicle seat apparatus including
the motor control apparatus described in any of notes 1 to 3 and
a seat main body including a moveable unit which is driven by the motor.

### (a) Advantage obtained in the invention described in note 1

Even if an error occurs in the number of pulses counted in the first process due to a pulse being divided or a pulse missing, the number of pulses counted in the first process is corrected in the sixth process. Therefore, the rotation amount, the position and the like of the motor can be detected accurately.

### (b) Advantage obtained in the invention described in note 2

The normal cycle is updated to the average value of the pulse cycles of individual pulses stored in the fourth process. That is, the normal cycle is updated to the average values of the pulse cycles which are actually measured. Therefore, even if the frequency and the amplitude of each component in the current signal of the motor varies due to causes such as disturbances like noises and the like, conditions, errors, individual differences, change over the years, such causes are reflected on the setting of the normal cycle. Therefore, detection of the rotation amount, position and the like of the motor can be performed more accurately.

### (c) Advantage obtained in the invention described in note 3

Even if load, friction and the like of the motor vary while the motor is running and the rotation speed of the motor varies, the rotation speed after such variation is reflected on the setting of the normal cycle. Therefore, detection of the rotation amount, position and the like of the motor can be performed more accurately.

### INDUSTRIAL APPLICABILITY

The present invention can detect the rotation amount, rotation speed, rotational phase, rotational position and the like of a motor and can detect the movement amount, moved distance, moving speed, position and the like of the moveable unit which is driven by the motor.

### DESCRIPTION OF REFERENCE NUMERALS

- 2, 102A, 202, 302, 402, 502, 602: motor
- 3, 103A, 203, 303, 403, 503, 603: ripple extraction device
- 4: control unit
- 5, 105, 205, 305, 405, 505, 605: storage unit
- 10: current-voltage converter
- 20: high-pass filter
- 21: filter
- 30: band-pass filter
- 40: filter
- 50: differential amplifier
- 60: amplifier
- 70: waveform shaping unit
- 90: seat main body
- 105A to 105H, 315B, 315C, 315D: correction map
- 107A, 207, 307, 507, 607: A/D converter
- 108A, 308, 508, 608: A/D converter
- 115A to 115H, 215A, 315A, 515A: initial position data
- 515B: restraining start position data
- 515C: lock position data
- 598: stopper
- 599: moveable unit

## Claims

1. A ripple extraction device which extracts a ripple component included in a current signal of a motor, comprising:
a current-voltage converter which converts the current signal of the motor into a voltage signal;
a filter which filters the voltage signal converted by the current-voltage converter; and
a differential amplifier which obtains a difference between the voltage signal converted by the current-voltage converter and an output signal of the filter.

2. The ripple extraction device as claimed in claim 1, wherein the filter attenuates the ripple component in the voltage signal converted by the current-voltage converter.

3. The ripple extraction device as claimed in claim 1 or 2, further comprising a waveform shaping unit which converts an output signal of the differential amplifier into a pulse signal by converting the ripple component in the output signal of the differential amplifier into ripples.

4. A motor control apparatus, comprising:
the ripple extraction device of claim 3;
the motor which generates cyclic ripples in the current signal when activated;
a control unit in which the pulse signal is input and which controls the motor; and
a storage unit in which a correction map expressing a relationship between an input value and an output value and initial position data of the motor are stored,
wherein
the control unit executes:
a first process of obtaining a rotation amount of the motor by counting the number of pulses in the pulse signal and obtaining a rotation position of the motor by adding the rotation amount to the initial position data or subtracting the rotation amount from the initial position data;
a second process of obtaining status data of the motor;
a third process of applying the status data obtained in the second process to the input value of the correction map and obtaining a corresponding output value as a correction value; and
a fourth process of adding the correction value obtained in the third process to the rotation position obtained in the first process or subtracting the correction value obtained in the third process from the rotation position obtained in the first process.

5. A motor control apparatus, comprising:
the ripple extraction device of claim 3;
the motor which generates cyclic ripples in the current signal when activated;
a control unit in which the pulse signal is input and which controls the motor; and
a storage unit in which a correction map expressing a relationship between an input value and an output value is stored,
wherein
the control unit executes:
a first process of obtaining a rotation amount of the motor by counting the number of pulses in the pulse signal;
a second process of obtaining status data of the motor;
a third process of applying the status data obtained in the second process to the input value of the correction map and obtaining a corresponding output value as a correction value; and
a fourth process of adding the correction value obtained in the third process to the rotation amount obtained in the first process or subtracting the correction value obtained in the third process from the rotation amount obtained in the first process.

6. A motor control apparatus, comprising:
the ripple extraction device of claim 3;
the motor which generates cyclic ripples in the current signal when activated;
a voltage detection unit which detects a voltage in the motor; and
a control unit in which the pulse signal is input and which controls the motor,
wherein
the control unit executes:
a first process of counting the number of pulses in the pulse signal;
a second process of measuring pulse cycles in the pulse signal for individual pulses in the pulse signal and sequentially storing the measured pulse cycles;
a third process of, when variation is detected in the voltage detected by the voltage detection unit, calculating an average value of a pulse cycle (s) of one pulse or a plurality of pulses just before the variation is detected in the voltage detected by the voltage detection unit among the pulse cycles stored in the second process and a pulse cycle (s) of one pulse of a plurality of pulses after a predetermined period elapsed since the variation is detected in the voltage detected by the voltage detection unit among the pulse cycles stored in the second process; and
a fourth process of calculating a quotient by dividing the predetermined period by the average cycle calculated in the third process.

7. The motor control apparatus as claimed in claim 6
wherein
the control unit further executes:
a fifth process of, when the variation is detected in the voltage detected by the voltage detection unit, counting the number of pulses in the pulse signal in the predetermined period; and
a sixth process of subtracting the number of pulses counted in the fifth process from the number of pulses counted in the first process and adding the quotient obtained in the fourth process to the obtained difference.

8. The motor control apparatus as claimed in claim 7, wherein the control unit further executes a seventh process of updating the number of pulses counted in the first process to a value obtained by the addition and the subtraction in the sixth process.

9. A motor control apparatus, comprising:
the ripple extraction device of claim 3;
the motor which generates cyclic ripples in the current signal when activated;
a current detection unit which detects a current in the motor; and
a control unit in which the pulse signal is input and which controls the motor,
wherein
the control unit executes:
a first process of measuring pulse cycles in the pulse signal for individual pulses in the pulse signal and sequentially storing the measured pulse cycles;
a second process of cutting off the current in the motor; and
a third process of, when current cutoff in the motor is detected based on the current detected by the current detection unit in the second process, calculating an estimate number of pulses in a period from when the current cutoff in the motor is detected to when the motor stops based on a pulse cycle (s) of one pulse or a plurality of pulses just before the current cutoff in the motor is detected among the pulse cycles stored in the first process.

10. The motor control apparatus as claimed in claim 9, further comprising:
a storage unit in which a first correction map expressing a relationship between a first input value, a second input value and an output value and a second correction map expressing a relationship between a first input value, a second input value and an output value are stored; and
a temperature sensor which detects a temperature,
wherein
the control unit executes a fourth process of sequentially storing temperatures detected by the temperature sensors for individual pulses in the pulse signal;
in the third process, the control unit applies an average value of pulse cycles of a plurality of pulses or a pulse cycle of one pulse just before the current cutoff in the motor is detected among the pulse cycles stored in the first process to the first input value of the first correction map and applies an average value of temperatures of a plurality of pulses or a temperature of one pulse just before the current cutoff in the motor is detected among the temperatures stored in the fourth process to the second input value of the first correction map to obtain a corresponding output value as a stopping time which a period from when the current cutoff in the motor is detected to when the motor stops, and the control unit applies the average value of pulse cycles of a plurality of pulses or a pulse cycle of one pulse just before the current cutoff in the motor is detected among the pulse cycles stored in the first process to the first input value of the second correction map and applies the obtained stopping time to the second input value of the second correction map to obtain a corresponding output value as the estimate number of pulses.

11. The motor control apparatus as claimed in claim 9, further comprising:
a storage unit in which a first correction map expressing a relationship between a first input value, a second input value and an output value and a second correction map expressing a relationship between a first input value, a second input value and an output value are stored,
wherein
the control unit executes a fourth process of sequentially storing currents detected in the current detection unit for individual pulses in the pulse signal, and
in the third process, the control unit applies an average value of pulse cycles of a plurality of pulses or a pulse cycle of one pulse just before the current cutoff in the motor is detected among the pulse cycles stored in the first process to the first input value of the first correction map and applies an average value of currents of a plurality of pulses or a current of one pulse just before the current cutoff in the motor is detected among the currents stored in the fourth process to the second input value of the first correction map to obtain a corresponding output value as a stopping time which a period from when the current cutoff in the motor is detected to when the motor stops, and the control unit applies the average value of pulse cycles of a plurality of pulses or the pulse cycle of one pulse just before the current cutoff in the motor is detected among the pulse cycles stored in the first process to the first input value of the second correction map and applies the obtained stopping time to the first input value of the second correction map to obtain a corresponding output value as the estimate number of pulses.

12. A motor control apparatus, comprising:
the ripple extraction device of claim 3;
the motor which generates cyclic ripples in the current signal when activated; and
a control unit in which the pulse signal is input and which controls the motor,
wherein the control unit executes a constant speed control process of controlling the motor at a constant speed based on the pulse signal which is input from the waveform shaping unit.

13. The motor control apparatus as claimed in claim 12,
wherein the constant speed control process executed by the control unit includes:
a first process of measuring a pulse cycle in the pulse signal,
a second process of comparing the pulse cycle measured in the first process to a first threshold and a second threshold which exceeds the first threshold, and
a third process of reducing a set speed of the motor when the pulse cycle measured in the first process is smaller than the first threshold and increasing the set speed of the motor when the pulse cycle measured in the first process exceeds the second threshold as the result of the comparison in the second process.

14. A motor control apparatus, comprising:
the ripple extraction device of claim 3;
the motor which drives a moveable unit which moves between two ends of a moveable range and which generates cyclic ripples in a current signal when activated;
a current detection unit which detects a current in the motor;
a control unit in which data of the current detected by the current detection unit and the pulse signal are input and which controls the motor; and
a storage unit in which initial position data indicating an initial position of the motor before the motor stars running in the number of pulses between the initial position to a predetermined original position, a restraining start position data indicating restraining start positions of the motor which are positions where the moveable unit moves to an end form inside the moveable range and the motor further rotates in the number of pulses between the restraining start position and the original position, and lock position data indicating lock positions of the motor which are positions where the moveable unit positions at an end of the moveable range and the motor cannot rotate any further being restrained in the number of pulses between the lock position and the original position,
wherein
the control unit executes:
an activation process to activate the motor;
a counting process of counting the number of pulses generated in the pulse signal after the activation process every time a pulse of the pulse signal is input after the activation process and adding the counted number of pulses to a value of the initial position data or subtracting the counted number of pulses from the value of the initial position data;
a determining process of determining whether a position of the motor is between the restraining start positions by comparing the difference or the sum calculated in the counting process after the activation process to values of the restraining start position data;
a stopping process of, when the position of the motor is determined as not being in between the restraining start positions in the determining process, making the motor rotate continuously until the current data which is input from the current detection unit is equal to or greater than a predetermined value and making the motor stop when the current data which is input from the current detection unit be equal to or greater than the predetermined value; and
an updating process of rewriting the initial position data stored in the storage unit with a value of the lock position data after the stopping process.

15. The motor control apparatus as claimed in claim 14, wherein the control unit further executes:
a second determining process of determining whether the value of the initial position data is equal to the value of the lock position data; and
a prohibiting process of, when the value of the initial position data is determined as being equal to the value of the lock position data in the second determining process, prohibiting the motor from stopping until the difference or the sum calculated in the counting process after the activation process is executed be equal to the value of the restraining start position data.

16. A motor control apparatus, comprising:
the ripple extraction device of claim 3;
the motor which generates cyclic ripples in the current signal when activated; and
a control unit in which the pulse signal is input and which controls the motor,
wherein the control unit executes:
a first process of counting the number of pulses in the pulse signal;
a second process of measuring pulse cycles of individual pulses in the pulse signal;
a third process of calculating a value obtained by integrating the pulse cycles measured in the second process during a period from when the pulse cycles measured in the second process be outside a normal range which includes a normal cycle to when the pulse cycles measured in the second process be within the normal range as an accumulating time period;
a fourth process of counting the number of pulses in the pulse signal in the period from when the pulse cycles measured in the second process be outside the normal range which includes the normal cycle to when the pulse cycles measured in the second process be within the normal range;
a fifth process of calculating a value obtained by dividing the accumulation time period calculated in the third process by the normal cycle as an estimate number of pulses; and
a sixth process of updating the number of pulses counted in the first process to a value obtained by adding the estimate number of pulses calculated in the fifth process to the number of pulses counted in the first process and subtracting the number of pulses counted in the fourth process from the obtained sum.

17. The motor control apparatus as claimed in claim 16, further comprising:
a voltage detection unit which detects a voltage in the motor; and
a current detection unit which detects a current in the motor, wherein
in the second process, the control unit sequentially stores the pulse cycles counted by the control unit,
the control unit executes a seventh process of setting the normal cycle and the normal range for each pulse in the pulse signal, and
the seventh process includes:
a calculating process of calculating a standard cycle corresponding to a rotation speed of the motor based on the voltage detected by the voltage detection unit and the current detected by the current detection unit and calculating a standard range including the standard cycle;
an updating process of, when a pulse cycle measured in the second process is determined as being within the standard range and within the normal range, updating the normal cycle to an average value of the pulse cycles of individual pulses stored in the fourth process, updating a lower limit value of the normal range to a value obtained by subtracting a predetermined value from the average value and updating an upper limit value of the normal range to a value obtained by adding a predetermined value to the average value; and
a maintaining process of, when a pulse cycle measured in the second process is outside of the standard range or a pulse cycle measured in the second process is outside of the normal range, maintaining the normal cycle and the normal range without updating the normal cycle and the normal range.

18. The motor control apparatus as claimed in claim 16, further comprising:
a voltage detection unit which detects a voltage in the motor; and
a current detection unit which detects a current in the motor, wherein
the control unit executes a seventh process of setting the normal cycle and the normal range for each pulse in the pulse signal, and
the seventh process includes an updating process of calculating a standard cycle corresponding to a rotation speed of the motor based on the voltage detected by the voltage detection unit and the current detected by the current detection unit and updating the normal cycle to the standard cycle, updating a lower limit value of the normal range to a value obtained by subtracting a predetermined value from the standard cycle and updating an upper limit value of the normal range to a value obtained by adding a predetermined value to the standard cycle.

19. A vehicle seat, comprising:
the ripple extraction device of any one of claims 1 to 3 or the motor control apparatus of any one of claims 4 to 18; and
a seat main body including a moveable unit,
wherein
the moveable unit is driven by the motor.

20. A ripple extraction method for extracting ripples included in a current signal of a motor, comprising:
converting the current signal of the motor into a voltage signal;
filtering the voltage signal which is converted; and
obtaining a difference between the voltage signal which is converted and the voltage signal which is filtered.
